# EUROPEAN PATENT APPLICATION

(11) **EP 2 515 292 A1**
(43) Date of publication of application: **24.10.2012**
(21) Application number: 11809453.1
(22) Date of filing: 20.07.2011
(51) Int. Cl.: G09G 5/00, G02F 1/133, G09G 3/20, G09G 3/36

(54) **IMAGE DISPLAY APPARATUS**

(30) Priority: 21.07.2010 JP 2010163579; 27.01.2011 JP 2011014944; 22.02.2011 JP 2011035659
(71) Applicant: Panasonic Corporation, Osaka 571-8501 (JP)
(72) Inventor: NASU, Ichiro, Osaka-shi, Osaka 540- 6207 (JP); BAN, Yasuhiro, Osaka-shi, Osaka 540- 6207 (JP); NOMURA, Hiroyoshi, Osaka-shi, Osaka 540- 6207 (JP)
(74) Representative: Grünecker, Kinkeldey, Stockmair & Schwanhäusser
(86) International application number: PCT/JP2011/004099
(87) International publication number: WO 2012/011278

(57) **Abstract**

The present invention provides an image display device capable of, by using a general-purpose image display driver configured to operate based on display data pieces each containing tones corresponding to plural bits, quickly performing bit extension processing to perform tone display corresponding to the display data pieces without providing any special circuit configured to perform the bit extension. A controller (9) is configured to combine the display data pieces output through display data output terminals (P0 to P2) with fixed values output through operation code output terminals (C01 to C05, C07 to C12, and C14 to C17) which are not commonly connected to the display data output terminals, store in a display memory (12) the combined data pieces as tone codes each containing predetermined two or more bits, and set a tone conversion table such that the stored tone codes correspond to tone output values.

## Description

### Technical Field

The present invention relates to an image display device, and particularly to an image display device used in a remote controller or operating portion of an apparatus.

### Background Art

In recent years, the diffusion of apparatuses, such as mobile phones and car navigation systems, each including a color high-definition image display panel is remarkable, and image display drivers configured to drive such color high-definition image display panels and capable of displaying color tones or a large number of tones are being supplied at low cost. For example, such image display driver is configured to receive five-bit 32-tone display data pieces for respective display dots of the image display panel and perform tone display based on the five-bit display data pieces each corresponding to one display dot. In accordance with the diffusion of the above apparatuses, general-purpose image display drivers are available at a low price.

Here, as a component configured to perform mode switching processing, buzzer generating processing, voice processing, communication processing, and the like, a comparatively inexpensive microcomputer (for example, an eight bit microcomputer) is used in the remote controller or operating portion of the apparatus. An image display device configured to display, for example, results of such processing generally uses a low-tone image display panel (for example, a 256 dots × 128 dots class), such as a two-tone image display panel or a two-bit four-tone image display panel. The image display device is controlled by the microcomputer configured to perform the above processing. However, as general-purpose image display drivers for five bits are reduced in price, general-purpose image display drivers configured to drive such low- tone image display panels became obsolete and are unavailable. To be specific, general-purpose image display drivers are unavailable, which are configured to drive the image display panels by converting a one-bit display data piece directly to a tone output value corresponding to the low tone, the one bit display data piece being output from the microcomputer configured to drive the remote controller or the operating portion and corresponding to each of the display dots of the image display panel. Of course, image display drivers configured to drive low-tone image display panels can be newly designed, or microcomputers can be increased in function (for example, a microcomputer capable of processing the five-bit display data pieces can be mounted in advance). However, this increases manufacturing cost and product cost.

Here, by using the image display driver capable of dealing with the above-described multiple-tone display, a one-bit two-tone display data piece may be converted into a plural-bit multiple-tone (for example, five-bit 32-tone) display data piece (bit extension may be performed). Also, the bit extension may be performed by software. However, to drive the image display panel of 256 dots × 128 dots, 32,768 (= 256 × 128) data pieces need to be transmitted about every 100 ms. Therefore, the microprocessor generally used in the remote controller or the like requires too much processing time, so that this is not realistic. On this account, as described in, for example, PTL 1, a method of performing the bit extension by hardware is known.

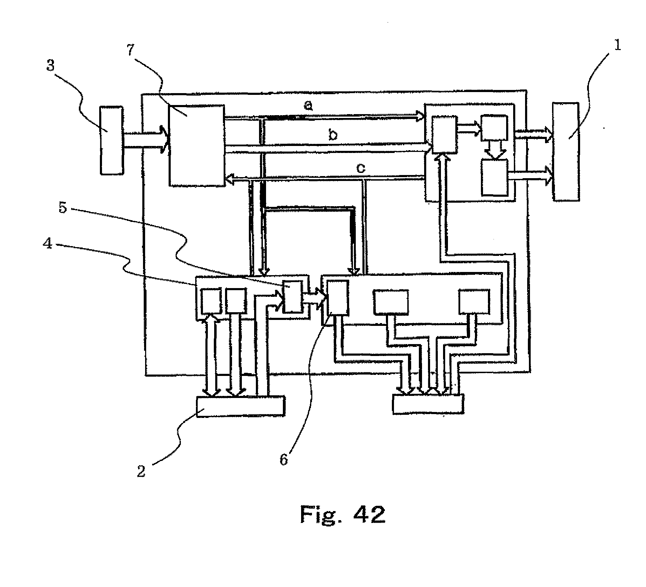

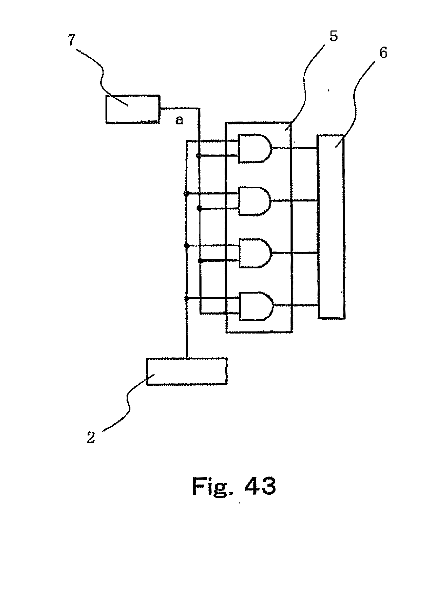

Fig. 42 is a schematic circuit diagram showing the configuration of a conventional image display device. Fig. 43 is a schematic circuit diagram showing the configurations of major portions of the conventional image display device. As shown in Figs. 42 and 43, in the configuration described in PTL 1, an image displayed on an image display panel 1 corresponds to color and multiple tone display. However, the capacity of a ROM 2 is small since the display data pieces stored in the ROM 2 do not contain tone data pieces or color data pieces. The ROM 2 stores two-bit black-and-white image data pieces. When driving the image display driver, the black-and-white image data piece (one bit) stored in the ROM is extended to a four-bit data piece in a data color extension portion 5 of a ROM controller 4 by a signal output from a CPU, and the obtained data piece is transmitted to a next stage that is a data generator 6.

As shown in Fig. 43, the data color extension portion 5 is constituted by four AND gates. A control signal output from the CPU 3 is input to the four AND gates of the data color extension portion 5 through a CPU interface 7, and the black-and-white image data pieces stored in the ROM 2 are input to the four AND gates of the data color extension portion 5. With this, a combination of outputs of the AND gates is output as a four-bit data piece. The extended data piece is finally converted into one of 16 colors, corresponding to the extended four-bit code, by a color pallet incorporated in a controller of the image display driver. Based on this converted color information, a color image or a multiple-tone image is displayed on the image display panel.

However, according to the above configuration, a dedicated circuit configured to perform the bit extension needs to be provided between the microcomputer (CPU) and the image display driver. Especially, in the configuration in which the data pieces corresponding to a plurality of display dots (for example, three dots) are simultaneously input to the image display driver to increase processing speed, three dedicated circuit are required, and this increases the complexity of the device.

As the apparatus increases in function and is being networked, the improvement of display capability is also required, and the colorization of the display image is also required in many cases.

A color image display device configured to display, for example, results of the processing generally uses a color image display panel (for example, a 256 dots × 128 dots class) and is controlled by the microcomputer configured to perform the above processing.

However, in a case where such color image display panel is driven by an inexpensive five-bit 32-tone image display driver, the data piece for each of red (R), green (G), and blue (B) dots becomes a five-bit data piece. To increase processing efficiency, three bytes are assigned to each of the red (R), green (G), and blue (B) dots. In the case of the color image display panel of 256 dots × 128 dots, a RAM of 96 kilobytes is required for screen image creation.

According to the above configuration, 32,768 colors can be expressed, but a large-capacity RAM is required. In addition, required is a microcomputer which is high in function as a microcomputer used in the color liquid crystal display device of the remote controller or operating portion of the apparatus, or the microcomputer needs to be constituted by a plurality of microcomputers. This increases manufacturing cost and product cost.

Here, as a method of reducing the capacity of the RAM used for the screen image creation, proposed is a method of constituting each of red (R), green (G), and blue (B) by two bits to reduce the capacity of the RAM used for the screen image creation (for example, PTL 2).

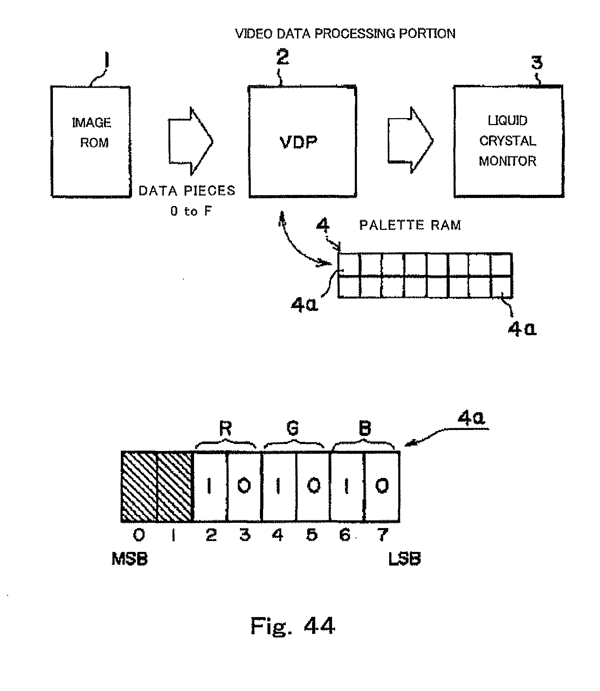

Fig. 44 is a schematic diagram showing the configuration of a conventional color image display device. As shown in Fig. 44, PTL 2 describes a technology in which: each of the red (R), the green (G), and the blue (B) is configured by two bits in a video data processing portion 2 based on data pieces in an image ROM 1; the data pieces are stored as one-byte data pieces in a palette RAM 4; and a color image is displayed on a liquid crystal monitor 3 based on the one-byte data pieces.

However, according to the above configuration, information of two bits in one byte is wasted. In addition, in Example of PTL 2, although two bits are assigned to one color, the number of tones is three (corresponding to 27 colors), that is, "00" denotes lights-out, each of "01" and "10" denotes lights-half-on, "11" denotes lights-fully-on.

By performing lights-on and lights-out in accordance with high order bits and low order bits in Example of PTL 2, the lights-half-on is realized by "01" or "10". Therefore, if a duty ratio of the high order bits to the low order bits is changed, practically 64 colors can be realized by fully using two-bit four tones. However, the problem is that since the number of colors which can be subjected to tone correction simultaneously is only three, the number of displayable colors is small, and color deviations caused due to, for example, properties of the color liquid crystal device cannot be corrected adequately.

### Citation List

### Patent Literature

PTL 1: Japanese Laid-Open Patent Application Publication No. 2000-137466
PTL 2: Japanese Laid-Open Patent Application Publication No. H10-198318

### Summary of Invention

### Technical Problem

The present invention was made to solve the above problems, and an object of the present invention is to provide an image display device capable of, by using a general-purpose image display driver configured to operate based on display data pieces each containing tones corresponding to plural bits, quickly performing bit extension processing to perform tone display corresponding to the display data pieces without providing any special circuit configured to perform the bit extension.

### Solution to Problem

To solve the above problems, an image display device of the present invention includes: an image display panel in which display dots are arranged in a matrix; an image display driver configured to cause the image display panel to perform display; and a microcomputer configured to control the image display driver, wherein: the image display driver includes a plurality of data input terminals, a display memory configured to store, as tone display data pieces, tone codes respectively corresponding to the display dots of the image display panel and each containing predetermined two or more bits, a tone conversion table storage portion configured to store a tone conversion table configured to convert the tone codes into tone output values corresponding to tone display of the image display panel, and a controller configured to set the tone conversion table in accordance with operation codes input through the plurality of data input terminals, read out the tone codes stored in the display memory, convert the tone codes into the tone output values by using the tone conversion table, and causes the image display panel to perform the display by tones corresponding to the tone output values; the microcomputer includes a plurality of operation code output terminals respectively connected to the plurality of data input terminals of the image display driver and capable of being switched to an output state or a high impedance state, at least one display data output terminal provided separately from the operation code output terminals, respectively connected to at least one of the plurality of data input terminal, and capable of being switched to the output state or the high impedance state, and a display data storage portion including a display image data area configured to create and store display data pieces corresponding to the display dots of the image display panel; when outputting the operation codes to the image display driver, the display data output terminal is set to the high impedance state, and then the operation codes are output through the plurality of operation code output terminals, and when outputting the display data pieces to the image display driver, the operation code output terminal whose corresponding data input terminal is commonly connected to the at least one display data output terminal among the plurality of operation code output terminals is set to the high impedance state, the display data pieces are then sequentially output in units of predetermined bits through the at least one display data output terminal, and predetermined fixed values are output through the operation code output terminals which are not commonly connected to the at least one display data output terminal among the plurality of operation code output terminals; the controller is configured to combine the display data pieces output through the at least one display data output terminal with the fixed values output through the operation code output terminals which are not commonly connected to the at least one display data output terminal, to store in the display memory the combined data piece as the tone code containing the predetermined two or more bits; and the controller is configured to set the tone conversion table such that the stored tone codes correspond to the tone output values.

According to the above configuration, to the plurality of data input terminals of the image display driver, the display data pieces are transmitted through the display data output terminals of the microcomputer, and the predetermined fixed values are transmitted through the plurality of operation code output terminals to which the display data output terminals of the microcomputer are not commonly connected. Then, the image display driver which has received the display data pieces and the fixed values allocates the display data pieces, output through the display data output terminals, to the tone code and allocates the fixed values to the other bits of the tone code. With this, the tone code which can be processed by the image display driver, contains a predetermined number of bits, and is the tone display data piece can be easily created in a short period of time. Therefore, without providing any special circuit configured to perform the bit extension, the bit extension processing can be quickly performed to perform the tone display corresponding to the display data piece by using the general-purpose image display driver configured to operate based on the tone display data pieces each containing tones corresponding to plural bits.

### Advantageous Effects of Invention

The image display device of the present invention is configured as explained above and has an effect of, by using the general-purpose image display driver configured to operate based on the tone display data pieces each containing tones corresponding to plural bits, being able to quickly perform the bit extension processing to perform the tone display corresponding to the display data pieces without providing any special circuit configured to perform the bit extension.

### Brief Description of Drawings

[Fig. 1] Fig. 1 is a schematic circuit diagram showing the configuration of an image display device in Embodiment 1 of the present invention for performing display based on binary tone output values.
[Fig. 2A] Fig. 2A is a diagram showing an example of a display data row stored in a binary display data storage portion of a microcomputer of the image display device shown in Fig. 1.
[Fig. 2B] Fig. 2B is a diagram showing an example of the display data row stored in a display memory of a liquid crystal display driver of the image display device shown in Fig. 1.
[Fig. 3] Fig. 3 is a diagram showing an example of assignments of data input terminals of the liquid crystal display driver of the image display device shown in Fig. 1.
[Fig. 4] Fig. 4 is a diagram showing one setting example of a tone conversion table of the liquid crystal display driver of the image display device shown in Fig. 1.
[Fig. 5] Fig. 5 is a flow chart showing display data piece output processing in the image display device shown in Fig. 1.
[Fig. 6] Fig. 6 is a schematic circuit diagram showing the configuration of the image display device in Embodiment 2 of the present invention for performing display based on the binary tone output values.
[Fig. 7] Fig. 7 is a diagram showing an example of the assignments of the data terminals of the liquid crystal display driver of the image display device shown in Fig. 5.
[Fig. 8] Fig. 8 is a diagram showing one setting example of the tone conversion table of the liquid crystal display driver of the image display device shown in Fig. 5.
[Fig. 9] Fig. 9 is a flow chart showing the display data piece output processing in the image display device shown in Fig. 5.
[Fig. 10] Fig. 10 is a schematic circuit diagram showing the configuration of the image display device in Embodiment 1 of the present invention for performing display based on multiple-tone output values that are three-tone output values or more.
[Fig. 11A] Fig. 11A is a diagram showing an example of the display data row stored in the tone display data storage portion of the microcomputer of the image display device shown in Fig. 10.
[Fig. 11B] Fig. 11B is a diagram showing an example of the display data row (five bits/display dot) stored in the display memory of the liquid crystal display driver of the image display device shown in Fig. 10.
[Fig. 11C] Fig. 11C is a diagram showing an example of the tone output values corresponding to the display data row shown in Fig. 11B.
[Fig. 12] Fig. 12 is a diagram showing an example of the assignments of the data input terminals of the liquid crystal display driver of the image display device shown in Fig. 10.
[Fig. 13] Fig. 13 is a diagram showing one setting example of the tone conversion table of the liquid crystal display driver of the image display device shown in Fig. 10.
[Fig. 14] Fig. 14 is a flow chart showing the display data piece output processing in the image display device shown in Fig. 10.
[Fig. 15] Fig. 15 is a schematic circuit diagram showing the configuration of the image display device in Embodiment 2 of the present invention for performing display based on the multiple-tone output values that are the three-tone output values or more.
[Fig. 16A] Fig. 16A is a diagram showing an example of the display data row stored in the tone display data storage portion of the microcomputer of the image display device shown in Fig. 15.
[Fig. 16B] Fig. 16B is a diagram showing an example of the display data row stored in the display memory of the liquid crystal display driver of the image display device shown in Fig. 15.
[Fig. 16C] Fig. 16C is a diagram showing an example of the tone output values for driving respective dots of a liquid crystal display panel shown in Fig. 15.
[Fig. 17] Fig. 17 is a diagram showing an example of the assignments of the data terminals of the liquid crystal display driver of the image display device shown in Fig. 15.
[Fig. 18] Fig. 18 is a diagram showing one setting example of the tone conversion table of the liquid crystal display driver of the image display device shown in Fig. 15.
[Fig. 19] Fig. 19 is a flow chart showing the display data piece output processing in the image display device shown in Fig. 15.
[Fig. 20] Fig. 20 is a schematic circuit diagram showing the image display device in Embodiment 1 of the present invention for performing color display.
[Fig. 21A] Fig. 21A is a diagram showing the display data row stored in a color display data storage portion of the microcomputer of the image display device shown in Fig. 20.
[Fig. 21B] Fig. 21B is a diagram showing the display data row stored in the display memory of the liquid crystal display driver of the image display device shown in Fig. 20.
[Fig. 21C] Fig. 21C is a diagram showing an example of the tone output values for driving a color liquid crystal display panel shown in Fig. 20.
[Fig. 22] Fig. 22 is an example of the assignments of the data input terminals of the liquid crystal display driver of the image display device shown in Fig. 20.
[Fig. 23] Fig. 23 is a diagram showing one setting example of the tone conversion table of the liquid crystal display driver of the image display device shown in Fig. 20.
[Fig. 24] Fig. 24 is a diagram showing another setting example of the tone conversion table of the liquid crystal display driver of the image display device shown in Fig. 20.
[Fig. 25] Fig. 25 is a flow chart showing the display data piece output processing in the image display device shown in Fig. 20.
[Fig. 26] Fig. 26 is a schematic circuit diagram showing the image display device in Embodiment 2 of the present invention for performing the color display
[Fig. 27A] Fig. 27A is a diagram showing an example of the display data row stored in the color display data storage portion of the microcomputer of the image display device shown in Fig. 26.
[Fig. 27B] Fig. 27B is a diagram showing an example of the display data row stored in the display memory of the liquid crystal display driver of the image display device shown in Fig. 26.
[Fig. 27C] Fig. 27C is a diagram showing an example of the tone output values for driving the color liquid crystal display panel shown in Fig. 26.
[Fig. 28] Fig. 28 is an example of the assignments of the data input terminals of the liquid crystal display driver of the image display device shown in Fig. 26.
[Fig. 29] Fig. 29 is a diagram showing one setting example of the tone conversion table stored in the tone conversion table storage portion of the liquid crystal display driver of the image display device shown in Fig. 26.
[Fig. 30] Fig. 30 is a diagram showing another setting example of the tone conversion table stored in the tone conversion table storage portion of the liquid crystal display driver of the image display device shown in Fig. 26.
[Fig. 31] Fig. 31 is a flow chart showing the display data piece output processing in the image display device shown in Fig. 26.
[Fig. 32] Fig. 32 is a schematic circuit diagram showing the image display device in Embodiment 3 of the present invention for performing the color display.
[Fig. 33A] Fig. 33A is a diagram showing the display data row stored in the color display data storage portion of the microcomputer of the image display device shown in Fig. 32.
[Fig. 33B] Fig. 33B is a diagram showing the display data row stored in the display memory of the liquid crystal display driver of the image display device shown in Fig. 32.
[Fig. 33C] Fig. 33C is a diagram showing an example of the tone output values for driving the color liquid crystal display panel shown in Fig. 32.
[Fig. 34] Fig. 34 is an example of the assignments of the data input terminals of the liquid crystal display driver of the image display device shown in Fig. 32.
[Fig. 35] Fig. 35 is a diagram showing one setting example of the tone conversion table stored in the tone conversion table storage portion of the liquid crystal display driver of the image display device shown in Fig. 32.
[Fig. 36] Fig. 36 is a flow chart showing the display data piece output processing in the image display device shown in Fig. 32.
[Fig. 37] Fig. 37 is a schematic circuit diagram showing the image display device in Embodiment 4 of the present invention for performing the color display.
[Fig. 38A] Fig. 38A is a diagram showing an example of the display data row stored in the color display data storage portion of the microcomputer of the image display device shown in Fig. 37.
[Fig. 38B] Fig. 38B is a diagram showing an example of the display data row stored in the display memory of the liquid crystal display driver of the image display device shown in Fig. 37.
[Fig. 38C] Fig. 38C is a diagram showing an example of the tone output values for driving the color liquid crystal display panel shown in Fig. 37.
[Fig. 39] Fig. 39 is an example of the assignments of the data input terminals of the liquid crystal display driver of the image display device shown in Fig. 37.
[Fig. 40A] Fig. 40A is a diagram showing one setting example of the tone conversion table stored in a plurality of tone conversion table storage portions of the liquid crystal display driver of the image display device shown in Fig. 37.
[Fig. 40B] Fig. 40B is a diagram showing one setting example of the tone conversion table stored in the plurality of tone conversion table storage portions of the liquid crystal display driver of the image display device shown in Fig. 37.
[Fig. 41] Fig. 41 is a flow chart showing the display data piece output processing in the image display device shown in Fig. 37.
[Fig. 42] Fig. 42 is a schematic circuit diagram showing the configuration of a conventional image display device.
[Fig. 43] Fig. 43 is a schematic circuit diagram showing the configurations of major portions of the conventional image display device.
[Fig. 44] Fig. 44 is a schematic diagram showing the configuration of a conventional color image display device.

### Description of Embodiments

An image display device of the present invention includes: an image display panel in which display dots are arranged in a matrix; an image display driver configured to cause the image display panel to perform display; and a microcomputer configured to control the image display driver, wherein: the image display driver includes a plurality of data input terminals, a display memory configured to store, as tone display data pieces, tone codes respectively corresponding to the display dots of the image display panel and each containing predetermined two or more bits, a tone conversion table storage portion configured to store a tone conversion table configured to convert the tone codes into tone output values corresponding to tone display of the image display panel, and a controller configured to set the tone conversion table in accordance with operation codes input through the plurality of data input terminals, read out the tone codes stored in the display memory, convert the tone codes into the tone output values by using the tone conversion table, and causes the image display panel to perform the display by tones corresponding to the tone output values; the microcomputer includes a plurality of operation code output terminals respectively connected to the plurality of data input terminals of the image display driver and capable of being switched to an output state or a high impedance state, at least one display data output terminal provided separately from the operation code output terminals, respectively connected to at least one of the plurality of data input terminals, and capable of being switched to the output state or the high impedance state, and a display data storage portion including a display image data area configured to create and store display data pieces corresponding to the display dots of the image display panel; when outputting the operation codes to the image display driver, the display data output terminal is set to the high impedance state, and then the operation codes are output through the plurality of operation code output terminals, and when outputting the display data pieces to the image display driver, the operation code output terminal whose corresponding data input terminal is commonly connected to the at least one display data output terminal among the plurality of operation code output terminals is set to the high impedance state, the display data pieces are then sequentially output in units of predetermined bits through the at least one display data output terminal, and predetermined fixed values are output through the operation code output terminals which are not commonly connected to the at least one display data output terminal among the plurality of operation code output terminals; the controller is configured to combine the display data pieces output through the at least one display data output terminal with the fixed values output through the operation code output terminals which are not commonly connected to the at least one display data output terminal, to store in the display memory the combined data piece as the tone code containing the predetermined two or more bits; and the controller is configured to set the tone conversion table such that the stored tone codes correspond to the tone output values.

According to the above configuration, to the plurality of data input terminals of the image display driver, the display data pieces are transmitted through the display data output terminals of the microcomputer, and the predetermined fixed values are transmitted through the plurality of operation code output terminals to which the display data output terminals of the microcomputer are not commonly connected. Then, the image display driver which has received the display data pieces and the fixed values allocates the display data pieces, output through the display data output terminals, to the tone code and allocates the fixed values to the other bits of the tone code. With this, the tone code which can be processed by the image display driver, contains a predetermined number of bits, and is the tone display data piece can be easily created in a short period of time. Therefore, without providing any special circuit configured to perform the bit extension, the bit extension processing can be quickly performed to perform the tone display corresponding to the display data piece by using the general-purpose image display driver configured to operate based on the tone display data pieces each containing tones corresponding to plural bits.

The image display device according to an embodiment of the present invention includes: an image display panel in which display dots are arranged in a matrix; an image display driver configured to cause the image display panel to perform display; and a microcomputer configured to control the image display driver, wherein: the image display driver includes a plurality of data input terminals, a display memory configured to store, as multiple-tone display data pieces, tone codes respectively corresponding to the display dots of the image display panel and each containing predetermined two or more bits, a tone conversion table storage portion configured to store a tone conversion table configured to convert the tone codes into tone output values corresponding to tone display of the image display panel, and a controller configured to set the tone conversion table in accordance with operation codes input through the plurality of data input terminals, read out the tone codes stored in the display memory, convert the tone codes into the tone output values by using the tone conversion table, and causes the image display panel to perform the display by tones corresponding to the tone output values; the microcomputer includes a plurality of operation code output terminals respectively connected to the plurality of data input terminals of the image display driver and capable of being switched to an output state or a high impedance state, at least one display data output terminal provided separately from the operation code output terminals, respectively connected to at least one of the plurality of data input terminals, and capable of being switched to the output state or the high impedance state, and a binary display data storage portion including a display image data area configured to create and store binary display data pieces corresponding to the display dots of the image display panel and each indicating one of a first tone output value and a second tone output value different from the first tone output value; when outputting the operation codes to the image display driver, the display data output terminal is set to the high impedance state, and then the operation codes are output through the plurality of operation code output terminals, and when outputting the display data pieces to the image display driver, the operation code output terminal whose corresponding data input terminal is commonly connected to the at least one display data output terminal among the plurality of operation code output terminals is set to the high impedance state, the display data pieces are then sequentially output in units of predetermined bits through the at least one display data output terminal, and predetermined fixed values are output through the operation code output terminals which are not commonly connected to the at least one display data output terminal among the plurality of operation code output terminals; the controller is configured to combine the display data pieces output through the at least one display data output terminal with the fixed values output through the operation code output terminals which are not commonly connected to the at least one display data output terminal, to store in the display memory the combined data piece as the tone code containing the predetermined two or more bits; and the controller is configured to set the tone conversion table such that among the stored tone codes, the tone code containing the display data piece indicating the first tone output value corresponds to the first tone output value, and the tone code containing the display data piece indicating the second tone output value corresponds to the second tone output value.

According to the above configuration, to the plurality of data input terminals of the image display driver, the one-bit display data pieces are transmitted through the display data output terminals of the microcomputer, and the predetermined fixed values are transmitted through the plurality of operation code output terminals to which the display data output terminals of the microcomputer are not commonly connected. Then, the image display driver which has received the display data pieces and the fixed values allocates the display data pieces, output through the display data output terminals, to at least one bit of the tone code and allocates the fixed values to the other bits of the tone code. With this, the tone code which can be processed by the image display driver, contains predetermined two or more bits, and is the multiple-tone display data piece can be easily created in a short period of time. Therefore, without providing any special circuit configured to perform the bit extension, the bit extension processing can be quickly performed to perform the two-tone display corresponding to the binary display data piece by using the general-purpose image display driver configured to operate based on the multiple-tone display data pieces each containing tones corresponding to plural bits.

Further, in the image display device according to a first aspect, the plurality of data input terminals of the image display driver may be 16 data input terminals; each of the tone codes may be configured as a five-bit code; the plurality of operation code output terminals of the microcomputer may be 16 operation code output terminals, the at least one display data output terminal of the microcomputer may be three display data output terminals, and the microcomputer may be configured to output the display data pieces in units of three bits through the three display data output terminals; and the controller may be configured to create the tone codes from three bits of the display data pieces transmitted through the three display data output terminals, the tone codes corresponding to three display dots and each being configured by one bit of the display data piece and four bits of the fixed values. With this, three bits of the display data pieces corresponding to three display dots can be simultaneously output from the microcomputer including the 16-bit output terminals, and three tone codes corresponding to respective display dots can be created simultaneously. Therefore, the processing is simple, and a data transmission time can be further shortened.

In the image display device according to a second aspect, the plurality of data input terminals of the image display driver may be eight data input terminals; each of the tone codes may be configured as a five-bit code; the plurality of operation code output terminals of the microcomputer may be eight operation code output terminals, the at least one display data output terminal of the microcomputer may be two display data output terminals, and the microcomputer may output the display data pieces in units of two bits through the two display data output terminals; and the controller may be configured to create the tone codes from four bits of the display data pieces obtained by two consecutive transmissions of two bits of the display data pieces through the two display data output terminals, the tone codes corresponding to two display dots and each being configured by one bit of the display data piece and four bits of the fixed values, and create the tone code corresponding to one display dot and configured by two bits of the display data pieces and three bits of the fixed values, the two bits of the display data pieces being transmitted different time through the display data output terminals. With this, even in a case where there is no extra output terminals of the microcomputer, three tone codes corresponding to three display dots can be created by two data transmissions based on three bits of the display data pieces corresponding to three display dots. Therefore, the processing is simple, the data transmission time can be further shortened, and such configuration is applicable to display devices of various apparatuses.

In the image display device according to the first aspect, the microcomputer may include eight output terminals including the display data output terminals; among the eight output terminals, each of the output terminals other than the display data output terminals may be in a non-connection state where no data piece is input; and the microcomputer may be configured to allocate eight low order bits of the display data pieces of a display data row to the eight output terminals such that three low order bits of the display data pieces in the eight low order bits of the display data pieces are output through the display data output terminals, the display data row being configured by the plurality of display data pieces stored in the display image data area of the binary display data storage portion, output the display data pieces, and at the time of a next output, again allocate the display data pieces of the display data row except for the display data pieces, having been output through the display data output terminals, such that three low order bits of the display data pieces of the display data row are output through the display data output terminals. In addition, in the image display device according to the first aspect, the microcomputer may include eight output terminals including the display data output terminals; among the eight output terminals, each of the output terminals other than the display data output terminals may be in a non-connection state where no data piece is input; and the microcomputer may be configured to allocate eight high order bits of the display data pieces of a display data row to the eight output terminals such that three high order bits of the display data pieces in the eight high order bits of the display data pieces are output through the display data output terminals, the display data row being configured by the plurality of display data pieces stored in the display image data area of the binary display data storage portion, output the display data pieces, and at the time of a next output, again allocate the display data pieces of the display data row except for the display data pieces, having been output through the display data output terminals, such that three high order bits of the display data pieces of the display data row are output through the display data output terminals. With this, in the first aspect, regardless of the number of bits of the display data pieces actually transmitted to the image display driver, the microcomputer reads out the display data pieces in units of eight bits (one byte) from the display data row stored in the binary display data storage portion and allocates eight bits of the display data pieces to the eight output terminals. At this time, each of the output terminals through which the display data pieces other than the display data pieces actually transmitted to the image display driver are output is in the non-connection state. Therefore, without performing any special mask processing, a required number of bits of the display data pieces can be easily, quickly transmitted to the image display driver.

In the image display device according to the second aspect, the microcomputer may include eight output terminals including the display data output terminals; among the eight output terminals, each of the output terminals other than the display data output terminals may be in a non-connection state where no data piece is input; and the microcomputer may be configured to at the time of a first output of two consecutive outputs, allocate eight low order bits of the display data pieces of a display data row to the eight output terminals such that two low order bits of the display data pieces in the eight low order bits of the display data pieces are output through the display data output terminals, the display data row being configured by the plurality of display data pieces stored in the display image data area of the binary display data storage portion, output the display data pieces, at the time of a second output, again allocate the display data pieces of the display data row except for a least significant display data piece of the display data pieces, having been output through the display data output terminals at the time of the first output, such that two low order bits of the display data pieces of the display data row are output through the display data output terminals, output the display data pieces, and at the time of a first output of next two consecutive outputs, again allocate the display data pieces of the display data row except for the display data pieces, having been output through the display data output terminals at the time of the previous output, such that two low order bits of the display data pieces of the display data row are output through the display data output terminals. In addition, in the image display device according to the second aspect, the microcomputer may include eight output terminals including the display data output terminals; among the eight output terminals, each of the output terminals other than the display data output terminals may be in a non-connection state where no data piece is input; and the microcomputer may be configured to at the time of a first output of two consecutive outputs, allocate eight high order bits of the display data pieces of a display data row to the eight output terminals such that two high order bits of the display data pieces in the eight high order bits of the display data pieces are output through the display data output terminals, the display data row being configured by the plurality of display data pieces stored in the display image data area of the binary display data storage portion, output the display data pieces, at the time of a second output, again allocate the display data pieces of the display data row except for a most significant display data piece of the display data pieces, having been output through the display data output terminals at the time of the first output, such that two high order bits of the display data pieces of the display data row are output through the display data output terminals, output the display data pieces, and at the time of a first output of next two consecutive outputs, again allocate the display data pieces of the display data row except for the display data pieces, having been output through the display data output terminals at the time of the previous output, such that two high order bits of the display data pieces of the display data row are output through the display data output terminals. With this, in the image display device according to the second aspect, regardless of the number of bits of the display data pieces actually transmitted to the image display driver, the microcomputer reads out the display data pieces in units of eight bits (one byte) from the display data row stored in the binary display data storage portion and allocates eight bits of the display data pieces to the eight output terminals. At this time, each of the output terminals through which the display data pieces other than the display data pieces actually transmitted to the image display driver are output is in the non-connection state. Therefore, without performing any special mask processing, a required number of bits of the display data pieces can be easily, quickly transmitted to the image display driver.

In the tone conversion table, the first tone output value may be set to a minimum value, and the second tone output value may be set to a maximum value. With this, the contrast of the image displayed on the image display panel can be maximized, and easy-to-see display can be realized.

In the image display device according to the first aspect, the microcomputer may include eight output terminals including the display data output terminals; among the eight output terminals, each of the output terminals other than the display data output terminals may be in a non-connection state where no data piece is input; and the microcomputer may be configured to read out (3 × n) bytes of the display data pieces from a display data row configured by the plurality of display data pieces stored in the display image data area of the binary display data storage portion, and sequentially output the read display data pieces through the display data output terminals while shifting the read display data pieces in units of three bits. With this, the number of bits of the display data pieces to be read out becomes an integral multiple of a least common multiple of the number of bits (three bits) of the display data pieces transmitted from the microcomputer to the image display driver and the number of bits (eight bits) of the display data pieces output through the output terminals. Therefore, the transmission processing of the display data pieces can be performed based on a repetition mode. In addition, the amount of calculations of the processing can be reduced, and the processing time can be shortened.

The microcomputer may include eight output terminals including the at least one display data output terminal and be configured to output the display data pieces in units of m bits through the at least one display data output terminal; among the eight output terminals, each of the output terminals other than the at least one display data output terminal may be in a non-connection state where no data piece is input; and the microcomputer may be configured to read out the display data pieces from a display data row, the number of bits of the read display data pieces being an integral multiple of a least common multiple of m that is the number of bits output through the at least one display data output terminal and eight that is the number of bits output through the output terminals, the display data row being configured by the plurality of display data pieces stored in the display image data area of the binary display data storage portion, and sequentially output the read display data pieces through the at least one display data output terminal while shifting the read display data pieces in units of m bits. With this, the number of bits of the display data pieces to be read out becomes an integral multiple of a least common multiple of the number of bits (m bits) of the display data pieces transmitted from the microcomputer to the image display driver and the number of bits (eight bits) of the display data pieces output through the output terminals. Therefore, the transmission processing of the display data pieces can be performed based on the repetition mode. In addition, the amount of calculations of the processing can be reduced, and the processing time can be shortened.

The image display device according to another embodiment of the present invention includes: an image display panel in which display dots are arranged in a matrix; an image display driver configured to cause the image display panel to perform display; and a microcomputer configured to control the image display driver, wherein: the image display driver includes a plurality of data input terminals, a display memory configured to store, as multiple-tone display data pieces, tone codes respectively corresponding to the display dots of the image display panel and each containing predetermined three or more bits, a tone conversion table storage portion configured to store a tone conversion table configured to convert the tone codes into tone output values corresponding to tone display of the image display panel, and a controller configured to set the tone conversion table in accordance with operation codes input through the plurality of data input terminals, read out the tone codes stored in the display memory, convert the tone codes into the tone output values by using the tone conversion table, and causes the image display panel to perform the display by tones corresponding to the tone output values; the microcomputer includes a plurality of operation code output terminals respectively connected to the plurality of data input terminals of the image display driver and capable of being switched to an output state or a high impedance state, at least two display data output terminal provided separately from the operation code output terminals, respectively connected to at least two of the plurality of data input terminals, and capable of being switched to the output state or the high impedance state, and a tone display data storage portion including a display image data area configured to create and store tone display data pieces corresponding to the display dots of the image display panel, the number of bits of the tone display data piece being smaller than the number of bits of the tone code of the display memory and is at least two or more; when outputting the operation codes to the image display driver, the display data output terminal is set to the high impedance state, and then the operation codes are output through the plurality of operation code output terminals, and when outputting the display data pieces to the image display driver, the operation code output terminal whose corresponding data input terminal is commonly connected to the at least one display data output terminal among the plurality of operation code output terminals is set to the high impedance state, the display data pieces are then sequentially output in units of predetermined bits through the at least one display data output terminal, and predetermined fixed values are output through the operation code output terminals which are not commonly connected to the at least one display data output terminal among the plurality of operation code output terminals; the controller is configured to combine the display data pieces output through the at least one display data output terminal with the fixed values output through the operation code output terminals which are not commonly connected to the at least one display data output terminal, to store in the display memory the combined data piece as the tone code containing the predetermined three or more bits; and the controller is configured to set the tone conversion table such that the tone output values correspond to all the stored tone codes which are able to be stored in the display memory.

According to the above configuration, to the plurality of data input terminals of the image display driver, the tone display data pieces, the number of bits of each of which is smaller than the number of bits of the tone code of the display memory of the image display driver and is at least two or more, are transmitted through the display data output terminals of the microcomputer, and the predetermined fixed values are transmitted through the plurality of operation code output terminals to which the display data output terminals of the microcomputer are not commonly connected. Then, the image display driver which has received the display data pieces and the fixed values allocates the display data pieces, output through the display data output terminal, to the tone code and allocates the fixed values to the other bits of the tone code. With this, the tone code which can be processed by the image display driver, contains a predetermined bits, and is the multiple-tone display data piece can be easily created in a short period of time. Therefore, without providing any special circuit configured to perform the bit extension, the bit extension processing can be quickly performed to perform the low tone gray scale display corresponding to the low-tone display data piece by using the general-purpose image display driver configured to operate based on the multiple-tone display data pieces each containing tones corresponding to plural bits.

Further, in the image display device according to the first aspect, the plurality of data input terminals of the image display driver may be 16 data input terminals; each of the tone codes may be configured as a five-bit code; the plurality of operation code output terminals of the microcomputer may be 16 operation code output terminals, the at least one display data output terminal of the microcomputer may be (k × 3) display data output terminals, and the microcomputer may be configured to output the display data pieces in units of three dots through the (k × 3) display data output terminals, the display data piece containing k bits corresponding to one dot, k being an arbitral integer smaller than five; and the controller may be configured to create the tone codes, corresponding to three display dots, from the (k × 3) bits of the display data pieces transmitted through the (k × 3) display data output terminals, the tone codes each being configured by k bits of the display data pieces corresponding to one dot and (5 - k) bits of the fixed values. With this, (k × 3) bits of the display data pieces corresponding to three display dots and each containing k bits can be simultaneously output from the microcomputer including the 16-bit output terminals, k being an arbitral integer smaller than five, and three five-bit tone codes corresponding to respective display dots can be created simultaneously. Therefore, the processing is simple, and the data transmission time can be further shortened.

In the image display device according to the second aspect, the plurality of data input terminals of the image display driver may be eight data input terminals, and each of the tone codes may be configured as a five-bit code; the plurality of operation code output terminals of the microcomputer may be eight operation code output terminals, the at least one display data output terminal of the microcomputer may be (2 × 2) display data output terminals, and the microcomputer may output the display data pieces in units of two dots through the (2 × 2) display data output terminals, the display data piece containing two bits corresponding to one dot; and the controller may be configured to, by using the display data pieces corresponding to three dots and obtained through the (2 × 2) display data output terminals by two consecutive transmissions in which the display data pieces corresponding to two dots are transmitted in a first transmission and the display data pieces corresponding to next two dots except for one lower order dot of the two dots transmitted in the first transmission are transmitted in a second transmission, create the tone codes corresponding to two display dots from the display data pieces corresponding to two dots and transmitted at once in the first or second transmission, each of the tone codes being configured by two bits of the tone codes and three bits of the fixed values, and create the tone code corresponding to one display dot from the display data piece corresponding to one dot and transmitted separately in the first and second transmissions, the tone code being configured by four bits of the display data pieces transmitted twice through the display data output terminals and one bit of the fixed value. With this, even in a case where there is no extra output terminals of the microcomputer, three five-bit tone codes corresponding to three display dots can be creased by two data transmissions based on (2 × 3) bits of the display data pieces corresponding to three display dots. Therefore, the processing is simple, the data transmission time can be further shortened, and such configuration is applicable to display devices of various apparatuses.

In the image display device according to the first aspect, the microcomputer may includes (m × 8) output terminals including the (k × 3) display data output terminals, (m × 8) being equal to or more than (k × 3) and a minimum number of an integral multiple of eight; among the (m × 8) output terminals, each of the output terminals other than the (k × 3) display data output terminals may be in a non-connection state where no data piece is input; and the microcomputer may be configured to allocate (m × 8) low order bits of the display data pieces of a display data row to the (m × 8) output terminals such that (k × 3) low order bits of the display data pieces in the (m × 8) low order bits of the display data pieces are output through the display data output terminals, the display data row being configured by the plurality of display data pieces stored in the display image data area of the tone display data storage portion, output the display data pieces, and at the time of a next output, again allocate the display data pieces of the display data row except for the display data pieces, having been output through the display data output terminals, such that (k × 3) low order bits of the display data pieces of the display data row are output through the display data output terminals.

In the image display device according to the first aspect, the microcomputer may include (m × 8) output terminals including the (k × 3) display data output terminals, (m × 8) being equal to or more than (k × 3) and a minimum number of an integral multiple of eight; among the (m × 8) output terminals, each of the output terminals other than the (k × 3) display data output terminals may be in a non-connection state where no data piece is input; and the microcomputer may be configured to allocate (m × 8) high order bits of the display data pieces of a display data row to the (m × 8) output terminals such that (k × 3) high order bits of the display data pieces in the (m × 8) high order bits of the display data pieces are output through the display data output terminals, the display data row being configured by the plurality of display data pieces stored in the display image data area of the tone display data storage portion, output the display data pieces, and at the time of a next output, again allocate the display data pieces of the display data row except for the display data pieces, having been output through the display data output terminals, such that (k × 3) high order bits of the display data pieces of the display data row are output through the display data output terminals. With this, in the first aspect, regardless of the number of bits of the display data pieces actually transmitted to the image display driver, the microcomputer reads out the display data pieces in units of (m × 8) bits (m bytes) from the display data row stored in the tone display data storage portion and allocates (m × 8) bits of the display data pieces to the (m × 8) output terminals. At this time, each of the output terminals through which the display data pieces other than the display data pieces actually transmitted to the image display driver are output is in the non-connection state. Therefore, without performing any special mask processing, a required number of bits of the display data pieces can be easily, quickly transmitted to the image display driver.

In the image display device according to the second aspect, the microcomputer may include eight output terminals including the display data output terminals; among the eight output terminals, each of the output terminals other than the display data output terminals may be in a non-connection state where no data piece is input; and the microcomputer may be configured to at the time of a first output of two consecutive outputs, allocate eight low order bits of the display data pieces of a display data row to the eight output terminals such that four low order bits of the display data pieces corresponding to two dots are output through the display data output terminals, the display data row being configured by the plurality of display data pieces stored in the display image data area of the tone display data storage portion, output the display data pieces, at the time of a second output, again allocate the display data pieces of the display data row except for two low order bits of the display data pieces corresponding to one dot in the display data pieces, having been output through the display data output terminals at the time of the first output, such that four low order bits of the display data pieces corresponding to two dots are output through the display data output terminals, output the display data pieces, and at the time of a first output of next two consecutive outputs, again allocate the display data pieces of the display data row except for the display data pieces, having been output through the display data output terminals at the time of the previous output, such that four low order bits of the display data pieces corresponding to two dots are output through the display data output terminals.

In the image display device according to the second aspect, the microcomputer may include eight output terminals including the display data output terminals; among the eight output terminals, each of the output terminals other than the display data output terminals may be in a non-connection state where no data piece is input; and the microcomputer may be configured to at the time of a first output of two consecutive outputs, allocate eight high order bits of the display data pieces of a display data row to the eight output terminals such that four high order bits of the display data pieces corresponding to two dots are output through the display data output terminals, the display data row being configured by the plurality of display data pieces stored in the display image data area of the tone display data storage portion, output the display data pieces, at the time of a second output, again allocate the display data pieces of the display data row except for two high order bits of the display data pieces corresponding to one dot in the display data pieces, having been output through the display data output terminals at the time of the first output, such that four high order bits of the display data pieces corresponding to two dots are output through the display data output terminals, output the display data pieces, and at the time of a first output of next two consecutive outputs, again allocate the display data pieces of the display data row except for the display data pieces, having been output through the display data output terminals at the time of the previous output, such that four high order bits of the display data pieces corresponding to two dots are output through the display data output terminals. With this, in the image display device according to the second aspect, regardless of the number of bits of the display data pieces actually transmitted to the image display driver, the microcomputer reads out the display data pieces in units of eight bits (one byte) from the display data row stored in the tone display data storage portion and allocates eight bits of the display data pieces to the eight output terminals. At this time, each of the output terminals through which the display data pieces other than the display data pieces actually transmitted to the image display driver are output is in the non-connection state. Therefore, without performing any special mask processing, a required number of bits of the display data pieces can be easily, quickly transmitted to the image display driver.

In the image display device according to the first aspect, the microcomputer may include (m × 8) output terminals including the (k × 3) display data output terminals, (m × 8) being equal to or more than (k × 3) and a minimum number of an integral multiple of eight; among the (m × 8) output terminals, each of the output terminals other than the (k × 3) display data output terminals may be in a non-connection state where no data piece is input; and the microcomputer may be configured to read out the display data pieces from a display data row, the number of bits of the read display data pieces being an integral multiple of a least common multiple of (m × 8) and (k × 3), the display data row being configured by the plurality of display data pieces stored in the display image data area of the tone display data storage portion, and sequentially output the read display data pieces through the display data output terminals while shifting the read display data pieces in units of (k × 3) bits. With this, the number of bits of the display data pieces to be read out becomes an integral multiple of a least common multiple of the number of bits ((k × 3) bits) of the display data pieces transmitted from the microcomputer to the image display driver and the number of bits ((m × 8) bits) of the display data pieces output through the output terminals. Therefore, the bit position of the display data piece to be output coincides with that in the previous processing, and the transmission processing can be performed based on the repetition mode. In addition, the amount of calculations of the processing can be reduced, and the processing time can be shortened.

The microcomputer may include eight output terminals including the display data output terminals and be configured to output (2 × 3) bits of the display data pieces by two outputs through the display data output terminals and repeatedly perform such output; among the eight output terminals, each of the output terminals other than the display data output terminals may be in a non-connection state where no data piece is input; and the microcomputer may be configured to read out the display data pieces from a display data row, the number of bits of the read display data pieces being an integral multiple of three, the display data row being configured by the plurality of display data pieces stored in the display image data area of the tone display data storage portion, and sequentially output the read display data pieces through the display data output terminals in units of (2 × 3) bits. With this, the number of bits of the display data pieces to be read out becomes an integral multiple of a least common multiple of the number of bits (2 × 3 bits) of the display data pieces transmitted from the microcomputer to the image display driver and the number of bits (eight bits) of the display data pieces output through the output terminals. Therefore, the bit position of the display data piece to be output coincides with that in the previous processing, and the transmission processing can be performed based on the repetition mode. In addition, the amount of calculations of the processing can be reduced, and the processing time can be shortened.

The tone conversion table may be set such that: the tone output value of the tone code corresponding to a minimum code of the display data piece is set to a minimum value; the tone output value of the tone code corresponding to a maximum code of the display data piece is set to a maximum value; and the tone output value of the tone code corresponding to an intermediate code other than the minimum code and the maximum code is set such that the tones on the image display panel are visually uniformized. With this, the contrast of the image displayed on the image display panel can be maximized. Since the tones are visually uniformized, easy-to-see display can be realized.

The image display device according to yet another embodiment of the present invention includes: a color image display panel in which display dots of three colors that are red (R), green (G), and blue (B) are sequentially arranged in a matrix; an image display driver configured to cause the color image display panel to perform display; and a microcomputer configured to control the image display driver, wherein: the image display driver includes 15 or more data input terminals to which the operation codes each containing plural bits, five or more bits of red (R) color display data pieces, five or more bits of green (G) color display data pieces, and five or more bits of blue (B) color display data pieces are input, a display memory configured to store the color display data pieces respectively corresponding to the display dots of the color image display panel and configured by red (R), green (G), and blue (B) tone codes each containing five or more bits, a tone conversion table storage portion configured to store a tone conversion table configured to convert the tone codes into tone output values corresponding to tone display of the color image display panel, and a controller configured to set the tone conversion table in accordance with operation codes input through the plurality of data input terminals, read out the tone codes stored in the display memory, convert the tone codes into the tone output values by using the tone conversion table, and cause the color image display panel to perform the display by tones corresponding to the tone output values; the microcomputer includes a plurality of operation code output terminals respectively connected to the plurality of data input terminals of the image display driver and capable of being switched to an output state or a high impedance state, eight color display data output terminals provided separately from the operation code output terminals, capable of being switched to the output state or the high impedance state, and arranged such that among the plurality of data input terminals that are five or more data input terminals for the red (R), five or more data input terminals for the green (G), and five or more data input terminals for the blue (B), two of the eight color display data output terminals are respectively connected to two of the data input terminals for one of the red (R), the green (G), and the blue (B), and three of the eight color display data output terminals are respectively connected to three of the data input terminals for each of the remaining two colors such that the data input terminals for the remaining two colors are bit-allocated exclusively with respect to the data input terminals for the above one of the red (R), the green (G), and the blue (B), and a color display data storage portion including the display image data area configured to create and store color image data pieces to be displayed on the color image display panel, the color image data pieces corresponding to the display dots of three colors that are the red (R), the green (G), and the blue (B) of the color image display panel, the tone codes of the display dots of three colors that are the red (R), the green (G), and the blue (B) each being configured by one byte in which two bits are assigned to one of three colors that are the red (R), the green (G), and the blue (B) and three bits are assigned to the remaining two colors such that these bits correspond to the color display data output terminals; when outputting the operation codes to the image display driver, the display data output terminals are set to the high impedance state, and then the operation codes are output through the plurality of operation code output terminals, and when outputting the display data pieces to the image display driver, the operation code output terminals whose corresponding data input terminals are commonly connected to the display data output terminals among the plurality of operation code output terminals are set to the high impedance state, the display data pieces are then sequentially output through the display data output terminals in units of byte, and predetermined fixed values are output through the operation code output terminals which are not commonly connected to the display data output terminals among the plurality of operation code output terminals; the controller is configured to combine the display data pieces output through the display data output terminals with the fixed values output through the operation code output terminals which are not commonly connected to the display data output terminals, to store in the display memory the display data pieces of three colors that are the red (R), the green (G), and the blue (B) as the tone codes each containing the predetermined five or more bits; and in the tone conversion table, a tone definition area for one color configured by two bits and tone definition areas for two colors each configured by three bits are separately set with respect to the tone codes having been exclusively bit-allocated.

According to the above configuration, to the plurality of data input terminals of the image display driver, the color display data pieces corresponding to one color and each containing two bits and the color display data pieces corresponding to each of the remaining two colors and each containing three bits are transmitted through the color display data output terminals of the microcomputer, and the predetermined fixed values are transmitted through the plurality of operation code output terminals to which the color display data output terminals of the microcomputer are not commonly connected. Then, the image display driver which has received the color display data pieces and the predetermined fixed values allocates the display data pieces, output through the color display data output terminals, to two bits of the tone code containing five or more bits and corresponding to one color and allocates the display data pieces to three bits of the tone code corresponding to each of the remaining two colors. Then, the image display driver allocates the fixed values, output through the operation code output terminals, to the other bits of the tone codes. With this, the tone code which can be processed by the image display driver, contains five or more bits, and is the color display data piece can be easily created in a short period of time. As above, by fully assigning the red (R), green (G), and blue (B) data pieces to one byte, the number of colors to be displayed can be increased, and the tones of one color to which two bits are assigned and the tones of each of the remaining two colors to each of which three bits are assigned can be set individually. In addition, by determining the tone setting in accordance with the properties of the color liquid crystal device and the like, visual color tone properties, and weighting of used colors depending on usages, the one-byte color data piece can be maximally utilized, and the color display close to full color can be realized by an inexpensive and simple configuration. Therefore, without providing any special circuit configured to perform the bit extension, the bit extension processing can be quickly performed to perform the color display corresponding to the color display data piece configured as one byte using the tone codes of three colors by using the general-purpose image display driver configured to operate based on the color display data pieces each containing tones corresponding to five or more bits for each color.

Further, one byte of the color display data piece is efficiently configured such that two bits are assigned to one color and three bits are assigned to each of the remaining two colors. Therefore, the capacity of the color display data storage portion of the microcomputer can be minimized, and the color display of 190 or more colors can be realized.

The bit assignments of one color corresponding to two bits and the remaining two colors each corresponding to three bits to the tone codes are exclusively performed. Therefore, the tone conversion table storage portion of the image display driver can set the tone output values separately between one color and each of the remaining two colors, the number of tones of the one color and the number of tones of each of the remaining two colors being different from each other. Thus, by independently optimizing the setting of the tone output values for one color, the number of tones of which is small, the entire color balance can be optimized efficiently.

Further, in the image display device according to the first aspect, the data input terminals of the image display driver may be 16 data input terminals; the tone codes may be configured as red (R), green (G), and blue (B) tone codes each containing five bits; the plurality of operation code output terminals of the microcomputer may be 16 operation code output terminals, the microcomputer includes the eight color display data output terminals, and the microcomputer is configured to output the display data pieces in units of one byte through the eight color display data output terminals in such a manner that two color display data output terminals corresponding to one color among the eight color display data output terminals are connected to data input terminals corresponding to two low order bits among the five data input terminals of the corresponding color of the image display driver, and three color display data output terminals corresponding to each of the remaining two colors among the eight color display data output terminals are connected to data input terminals corresponding to three high order bits among the five data input terminals of the corresponding color of the image display driver; and the controller may be configured to combine two or three-bit red (R) color display data pieces, two or three-bit green (G) color display data pieces, and two or three-bit blue (B) color display data pieces transmitted through the eight color display data output terminals with the fixed values output through the operation code output terminals to create red (R), green (G), and blue (B) tone codes each containing five bits. With this, the red (R), green (G), and blue (B) color display data pieces can be simultaneously output from the microcomputer including the 16 operation code output terminals and the eight color display data output terminals, and the five-bit tone codes corresponding to color display of three colors that are red (R), green (G), and blue (B) can be created simultaneously. Therefore, the processing is simple, and the data transmission time can be further shortened.

In the image display device according to the second aspect, the data input terminals of the image display driver may be 16 data input terminals; the tone codes may be configured as red (R), green (G), and blue (B) tone codes each containing five bits; the plurality of operation code output terminals of the microcomputer may be 16 operation code output terminals, the microcomputer may include the eight color display data output terminals, and the microcomputer may be configured to output the display data pieces in units of one byte through the eight color display data output terminals in such a manner that two color display data output terminals corresponding to one color among the eight color display data output terminals are connected to data input terminals corresponding to two high order bits among the five data input terminals of the corresponding color of the image display driver, and three color display data output terminals corresponding to each of the remaining two colors among the eight color display data output terminals are connected to data input terminals corresponding to three low order bits among the five data input terminals of the corresponding color of the image display driver; and the controller may be configured to combine two or three-bit red (R) color display data pieces, two or three-bit green (G) color display data pieces, and two or three-bit blue (B) color display data pieces transmitted through the eight color display data output terminals with the fixed values output through the operation code output terminals to create red (R), green (G), and blue (B) tone codes each containing five bits. With this, as with the image display device according to the first aspect, the red (R), green (G), and blue (B) color display data pieces can be simultaneously output from the microcomputer including the 16 operation code output terminals and the eight color display data output terminals, and the five-bit tone codes corresponding to color display of three colors that are red (R), green (G), and blue (B) can be created simultaneously. Therefore, the processing is simple, and the data transmission time can be further shortened.

In the image display device according to the third aspect, the data input terminals of the image display driver may be 18 or more data input terminals; the tone codes may be configured as red (R), green (G), and blue (B) tone codes each containing six or more bits; the microcomputer may include the plurality of operation code output terminals and the eight color display data output terminals and be configured such that two color display data output terminals corresponding to one color among the eight color display data output terminals are connected to data input terminals corresponding to two bits among the data input terminals of the corresponding color of the image display driver, three color display data output terminals corresponding to each of the remaining two colors among the eight color display data output terminals are connected to data input terminals corresponding to three bits among the data input terminals of the corresponding color of the image display driver, the one color to which two bits are assigned and the two colors to each of which three bits are assigned are assigned to the data input terminals corresponding to six or more bits such that these bits do not overlap, and the fixed values which are set exclusively between the one color to which two bits are assigned and the two colors to each of which three bits are assigned are input to the data input terminals to which the color display data input terminals are not connected; and the controller may be configured to combine two or three-bit red (R) color display data pieces, two or three-bit green (G) color display data pieces, and two or three-bit blue (B) color display data pieces transmitted through the eight color display data output terminals with the fixed values output through the operation code output terminals to create red (R), green (G), and blue (B) tone codes each containing six or more bits. With this, as with the image display device according to the first aspect, the red (R), green (G), and blue (B) color display data pieces can be simultaneously output from the microcomputer including the 16 operation code output terminals and the eight color display data output terminals, and the tone codes corresponding to color display of three colors that are red (R), green (G), and blue (B) and each containing six or more bits can be created simultaneously. Therefore, the processing is simple, and the data transmission time can be further shortened.

Further, the display memory of the image display driver stores the tone codes each containing six or more bits and configured such that one color corresponding to two-bit tones and the remaining two colors each corresponding to three-bit tones are completely exclusive. Therefore, the tone conversion table for one color corresponding to two-bit tones can define four tones, and the tone conversion table for each of the remaining two colors corresponding to three-bit tones can define eight tones. Thus, the color display of 256 colors at most can be performed by using one-byte color code.

In the image display device according to a fourth aspect, the image display driver may include nine or more data input terminals to which the operation codes each containing plural bits, three or more bits of red (R) color display data pieces, three or more bits of green (G) color display data pieces, and three or more bits of blue (B) color display data pieces are input, a display memory configured to store the color display data pieces respectively corresponding to the display dots of the image display panel and configured by red (R), green (G), and blue (B) tone codes each containing three or more bits, a plurality of tone conversion table storage portions configured to store a plurality of tone conversion tables corresponding to three colors that are red (R), green (G), and bluw (B) and configured to convert the tone codes into tone output values corresponding to tone display of the image display panel, and a controller configured to set the plurality of tone conversion tables in accordance with operation codes input through the plurality of data input terminals, read out the tone codes stored in the display memory, convert the tone codes into the tone output values by using the tone conversion table corresponding to the color of the read data piece, and cause the color image display panel to perform the display by tones corresponding to the tone output values; the microcomputer may include a plurality of operation code output terminals respectively connected to the plurality of data input terminals of the image display driver and capable of being switched to an output state or a high impedance state, eight color display data output terminals provided separately from the operation code output terminals, capable of being switched to the output state or the high impedance state, and arranged such that among the plurality of data input terminals that are three or more data input terminals for the red (R), three or more data input terminals for the green (G), and three or more data input terminals for the blue (B), two of the eight color display data output terminals are respectively connected to two of the data input terminals for one of the red (R), the green (G), and the blue (B), and three of the eight color display data output terminals are respectively connected to three of the data input terminals for each of the remaining two colors, and a color display data storage portion including the display image data area configured to create and store color image data pieces to be displayed on the image display panel, the color image data pieces corresponding to the display dots of three colors that are the red (R), the green (G), and the blue (B) of the image display panel, the tone codes of the display dots of three colors that are the red (R), the green (G), and the blue (B) each being configured by one byte in which two bits are assigned to one of three colors that are the red (R), the green (G), and the blue (B) and three bits are assigned to the remaining two colors such that these bits correspond to the color display data output terminals; and when outputting the operation codes to the image display driver, the display data output terminals may be set to the high impedance state, and then the operation codes may be output through the plurality of operation code output terminals, and when outputting the display data pieces to the image display driver, the operation code output terminals whose corresponding data input terminals are commonly connected to the display data output terminals among the plurality of operation code output terminals may be set to the high impedance state, the display data pieces may be then sequentially output through the display data output terminals in units of byte, and predetermined fixed values may be output through the operation code output terminals which are not commonly connected to the display data output terminals among the plurality of operation code output terminals. With this, as with the image display device according to the fourth aspect, the red (R), green (G), and blue (B) color display data pieces can be simultaneously output from the microcomputer including the 16 operation code output terminals and the eight color display data output terminals, and the tone codes corresponding to color display of three colors that are red (R), green (G), and blue (B) and each containing three or more bits can be created simultaneously. Therefore, the processing is simple, and the data transmission time can be further shortened.

Further, the image display driver includes the tone conversion tables respectively corresponding to three colors that are red (R), green (G), and blue (B). Therefore, by independently optimizing the setting of the tone output values for one color, the number of tones of which is small, the entire color balance can be optimized efficiently.

The tone conversion table for one color corresponding to two-bit tones can define four tones, and the tone conversion table for each of the remaining two colors corresponding to three-bit tones can define eight tones. Thus, the color display of 256 colors at most can be performed by using one-byte color code.

In the image display device according to each of the first to fourth aspects, three colors that are the red (R), the green (G), and the blue (B) may be weighted based on a display screen image; and one color weighted least may be assigned to two-bit data pieces, and each of the other two colors may be assigned to three-bit data pieces. For example, in a case where the red (R) is assigned to two bits, the color expression can be performed more effectively by considering human visual properties in which the red among three colors is most difficult to sense. In a case where the blue (B) is assigned to two bits, it is possible to effectively deal with a case where the display screen images of warm colors are often used.

The above object, other objects, features and advantages of the present invention will be made clear by the following detailed explanation of preferred embodiments with reference to the attached drawings.

Hereinafter, embodiments of the present invention will be explained in reference to the drawings. In the following explanations and drawings, the same reference signs are used for the same or corresponding components, and a repetition of the same explanation is avoided.

### 1. Image Display Device Configured to Perform Display Based on Binary Tone Output Values

First, a case where an image display device according to the present invention performs display (two-tone display, such as black-and-white display) based on binary display data pieces will be explained below using a plurality of embodiments.

### Embodiment 1

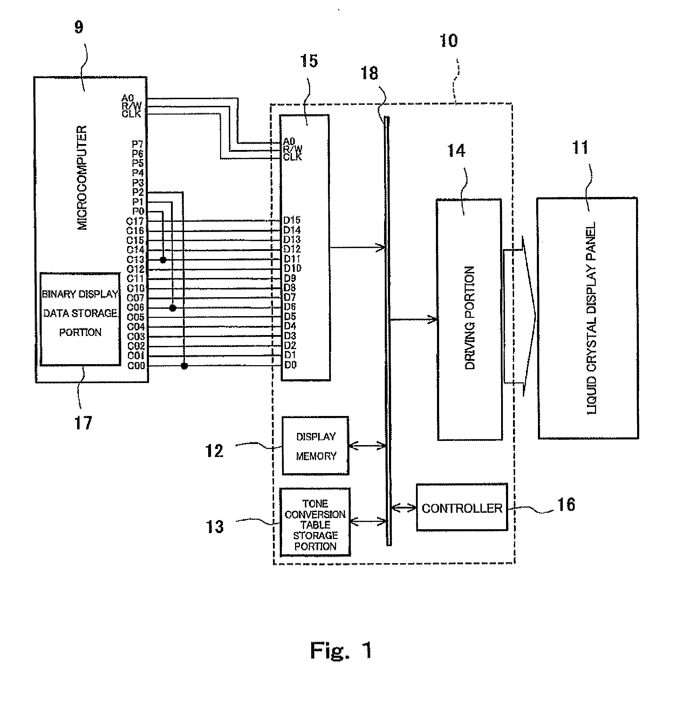

First, the image display device according to Embodiment 1 of the present invention for performing display based on the binary tone output values will be explained. Fig. 1 is a schematic circuit diagram showing the image display device in Embodiment 1 of the present invention for performing display based on the binary tone output values.

As shown in Fig. 1, the image display device according to the present embodiment includes: a liquid crystal display panel 11 that is an image display panel in which display dots are arranged in a matrix; a liquid crystal display (LCD) driver 10 that is an image display driver configured to drive the liquid crystal display panel 11 such that the liquid crystal display panel 11 performs display; a microcomputer 9 configured to transmit display data pieces to the liquid crystal display driver 10 and control the liquid crystal display driver 10.

In the present embodiment, the liquid crystal display panel 11 includes a display area of, for example, 128 × 240 dots.

The liquid crystal display driver 10 includes: an interface 15 including a plurality of data input terminals D0 to D15; a display memory 12 configured to store tone codes which are input through the plurality of data input terminals D0 to D15, correspond to respective display dots of the liquid crystal display panel 11, each includes two or more bits (for example, five bits), and are multiple-tone display data pieces; a tone conversion table storage portion 13 configured to store a tone conversion table configured to convert the tone codes into the tone output values corresponding to the tone display of the liquid crystal display panel 11; and a controller 16 configured to set the tone conversion table in accordance with operation codes input through the plurality of data input terminals D0 to D15, read out the tone codes stored in the display memory 12, convert the tone codes into the tone output values by using the tone conversion table, and drive the liquid crystal display panel 11 such that the liquid crystal display panel 11 performs display based on the tones corresponding to the tone output values. Each of the display memory 12 and the tone conversion table storage portion 13 is constituted by a storage portion, such as a RAM, provided in the liquid crystal display driver 10. The controller 16 is connected to respective components through a communication bus 18. The controller 16 stores the data pieces and operation codes, input through the interface 15, in the storage portions including the display memory 12 and the tone conversion table storage portion 13 and performs various calculations to control a driving portion 14.

In the present embodiment, to store the display data pieces containing five bits (32 tones) per display dot of the liquid crystal display panel 11, the display memory 12 includes a storage area of 128 × 240 × 5 bits.

The tone conversion table storage portion 13 sets and stores the tone conversion table in which 32 types of tone codes corresponding to five bits (32 tones) and the tone output values corresponding to the tone codes and indicating drive levels for applying voltages to respective display dots of the liquid crystal display panel 11 are associated with each other.

The controller 16 sequentially reads out the tone codes stored in the display memory 12 and corresponding to respective display dots and converts the tone codes into the tone output values by using the tone conversion table stored in the tone conversion table storage portion 13. Based on the tone output values, the driving portion 14 controls the drive levels of the corresponding display dots and displays an image on the liquid crystal display panel 11.

The data input terminals D0 to D15 provided in the interface 15 receive the display data pieces and operation codes transmitted from the microcomputer 9. Further, the interface 15 includes control terminals A0, R/W, and CLK configured to control input and output of data pieces, such as the display data pieces and the operation codes. For example, a clock terminal CLK that is the control terminal sets a timing at which the liquid crystal display driver 10 retrieves the display data pieces. To be specific, the liquid crystal display driver 10 is configured to retrieve the display data pieces when an input level of the clock terminal CLK transitions from a low level that is a first level to a high level that is a second level.

In the present embodiment, the microcomputer 9 is an eight bit microcomputer. The microcomputer 9 includes: a plurality of operation code output terminals C00 to C07 and C10 to C 17 which are respectively connected to the plurality of data input terminals D0 to D15 of the liquid crystal display driver 10 and can be switched to an output state or a high impedance state; and three display data output terminals P0 to P2 which are provided separately from the operation code output terminals C00 to C07 and C10 to C17, are respectively connected to three of the plurality of data input terminals D0 to D15, and can be switched to the output state or the high impedance state. The number of display data output terminals is determined in accordance with the spec of the liquid crystal display driver 10, and the present invention includes a case where the number of display data output terminals is at least one.

As above, the liquid crystal display driver 10 includes 16 data input terminals D0 to D15, and the microcomputer 9 includes 16 operation code output terminals C00 to C07 and C10 to C17 corresponding to the data input terminals D0 to D15 and three display data output terminals P0 to P2.

The microcomputer 9 also includes the control terminals A0, R/W, and CLK for data input-output control and controls data pieces, input to and output from the liquid crystal display driver 10.

Further, the microcomputer 9 includes a binary display data storage portion 17 including a display image data area (128 × 240 bits, that is, 128 × 30 bytes) configured to create and store binary display data pieces corresponding to the display dots of the liquid crystal display panel 11 and each indicating a first tone output value or a second tone output value different from the first tone output value. For example, the binary display data storage portion 17 is constituted by a RAM. A display data row constituting image data pieces to be displayed on the liquid crystal display panel 11 is created and stored in the display image data area provided in the binary display data storage portion 17. The microcomputer 9 is configured to sequentially read out the display data row and repeatedly transmit the display data row to the liquid crystal display driver 10 to dynamically display predetermined images on the liquid crystal display panel 11.

When the microcomputer 9 outputs the operation codes to the liquid crystal display driver 10, the microcomputer 9 sets each of the display data output terminals P0 to P2 to the high impedance state and then outputs the operation codes through the plurality of operation code output terminals C00 to C07 and C10 to C17. Here, setting each of the display data output terminals P0 to P2 to the high impedance state denotes that each of the display data output terminals P0 to P2 is electrically disconnected. Specifically, setting each of the display data output terminals P0 to P2 to the high impedance state is realized such that, for example, in a CMOS circuit in which direction registers and output terminals are connected to the display data output terminals P0 to P2, by setting an input mode in which each of a pair of output transistors is in an off state, the corresponding output terminal is set to a floating state.

As above, the display data output terminals P0 to P2 are set to the high impedance state. With this, when the operation codes are output through the operation code output terminals C00 to C07 and C10 to C17, current is prevented from mistakenly flowing to the display data output terminals P0 to P2 from the operation code output terminals (C00, C06, and C13 in the present embodiment) commonly connected to the display data output terminals P0 to P2 among the operation code output terminals C00 to C07 and C 10 to C 17, and port breakdown and malfunctions are prevented from occurring. In addition, the operation codes output through the operation code output terminals are prevented from being influenced by the flow of the current from the display data output terminals P0 to P2 to the operation code output terminals.

Thus, by transmitting the operation codes from the microcomputer 9 to the liquid crystal display driver 10, the tone conversion table is set as described below and is stored in the tone conversion table storage portion 13, and the controller 16 drives the liquid crystal display panel 11 based on the tone conversion table such that the liquid crystal display panel 11 performs display in accordance with the tones corresponding to the tone output values stored in the display memory 12.

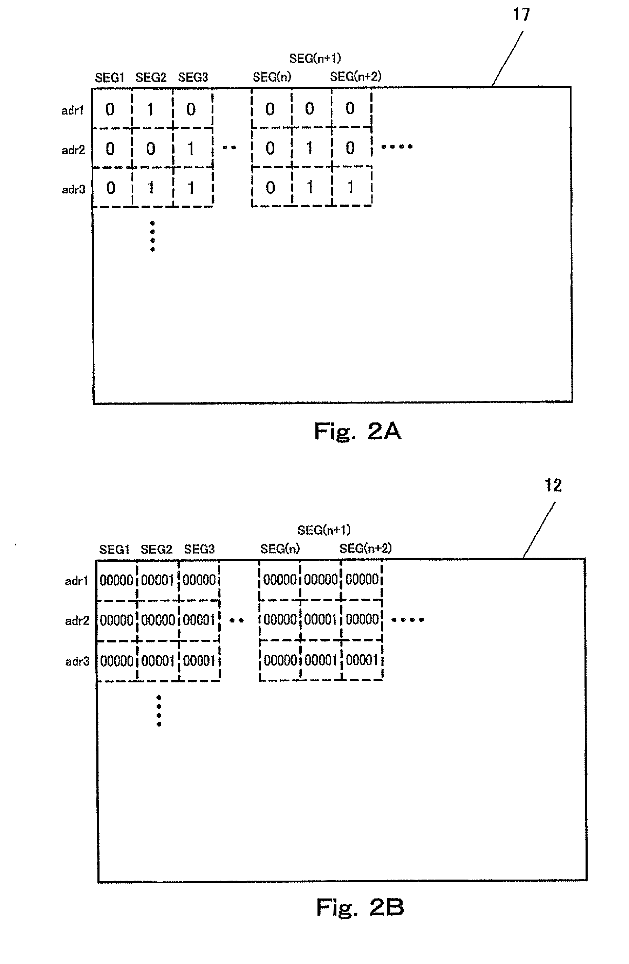

Figs. 2A and 2B are diagrams each showing an example of the display data row stored in the binary display data storage portion of the microcomputer or the display memory of the liquid crystal display driver in the image display device shown in Fig. 1. Fig. 2A is a diagram showing an example of the display data row (one bit/display dot) stored in the binary display data storage portion of the microcomputer. Fig. 2B is a diagram showing an example of the display data row (five bits/display dot) stored in the display memory of the liquid crystal display driver.

As shown in Fig. 2A, the display data pieces corresponding to respective display dots are stored as one-bit (binary) data pieces in the display image data area of the binary display data storage portion 17 of the microcomputer 9. The controller 16 of the liquid crystal display driver 10 converts the one-bit display data pieces into five-bit multiple-tone display data pieces (tone codes) by bit extension processing, and as shown in Fig. 2B, stores the data pieces in the display memory 12 of the liquid crystal display driver 10.

Therefore, when outputting the display data pieces to the liquid crystal display driver 10, the operation code output terminals C00, C06, and C13 whose corresponding data input terminals D0 to D25 are commonly connected to the display data output terminals P0 to P2 among the plurality of operation code output terminals C00 to C07 and C10 to C 17 are set to the high impedance state, and the display data pieces (0 or 1) are sequentially output in units of three bits from the display data output terminals P0 to P2 (the display data pieces are simultaneously output from three display data output terminals P0 to P2 such that one bit is output for each segment). In addition, predetermined fixed values (0 in the present embodiment) are output from the operation code output terminals C0 1 to C05, C07 to C12, and C14 to C17 to which the display data output terminals P0 to P2 are not commonly connected among the plurality of operation code output terminals C00 to C07 and C10 to C 17.

The controller 16 is configured to generate five-bit tone codes based on the display data pieces (0 or 1) output from the display data output terminals P0 to P2 and the fixed values (0 in the present embodiment) output from the operation code output terminals C01 to C05, C07 to C12, and C14 to C17 to which the display data output terminals P0 to P2 are not commonly connected.

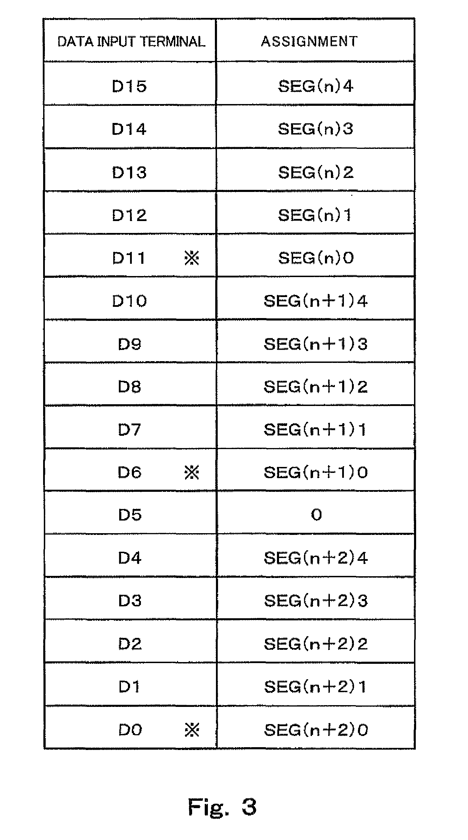

Fig. 3 is an example of the assignments of the data input terminals of the liquid crystal display driver of the image display device shown in Fig. 1. As shown in Fig. 3, in the present embodiment, the plurality of data input terminals D0 to D15 are associated with three segments SEG(n), SEG(n+1), and SEG(n+2), and the data input terminals D0 to D4, D6 to D10, or D11 to D15 in each segment are respectively assigned to five bits obtained by the bit extension. Specifically, the data pieces input to the data input terminals D0 to D4 sequentially denote zeroth bit to fourth bit of the segment SEG(n+2), the data pieces input to the data input terminals D6 to D10 sequentially denote zeroth bit to fourth bit of the segment SEG(n+1), and the data pieces input to the data input terminals D11 to D 15 sequentially denote zeroth bit to fourth bit of the segment SEG(n). Since the five-bit data pieces corresponding to three dots (15 bits in total) are assigned to 16 data input terminals, the data input terminal D5 among the data input terminals D0 to D15 is an excess input terminal and is not used (in the present embodiment, the fixed value (0) is input to the data input terminal D5 but is not used). As long as the display data output terminals P0 to P2 are respectively connected to the data input terminal corresponding to the segment SEG(n), the data input terminal corresponding to the segment SEG(n+1), and the data input terminal corresponding to the segment SEG(n+2) among the plurality of data input terminals D0 to D15, any input terminals among 15 data input terminals D0 to D15 other than the data input terminal D5 may be used, and how to assign the data input terminals to the segments is not limited to the above and may be set variously, preferably.

As described above, the display data output terminals P0 to P2 are respectively connected to the data input terminals D0, D6, and D11, and the display data pieces are output in units of three bits through the three display data output terminals P0 to P2. With this, the display data pieces are input to the data input terminals D0, D6, and D11, and the fixed values (0) are input to the other data input terminals D1 to D5, D7 to D10, and D12 to D15. Therefore, among the data pieces input to the liquid crystal display driver 10, only the zeroth bit in each segment changes (only the bits indicated by * in Fig. 3 change), and the other bits are the fixed values (0).

Thus, the controller 16 of the liquid crystal display driver 10 retrieves the data pieces for respective segments in accordance with the above assignments from the data pieces input to the data input terminals D0 to D15. With this, the controller 16 of the liquid crystal display driver 10 creates the five-bit tone codes corresponding to three display dots (three segments), the five-bit tone codes each being configured by one of three bits of the display data pieces transmitted through the three display data output terminals P0 to P2 and four bits of the fixed values. The five-bit display data pieces (tone codes) are stored in the display memory 12 as shown in Fig. 2B.

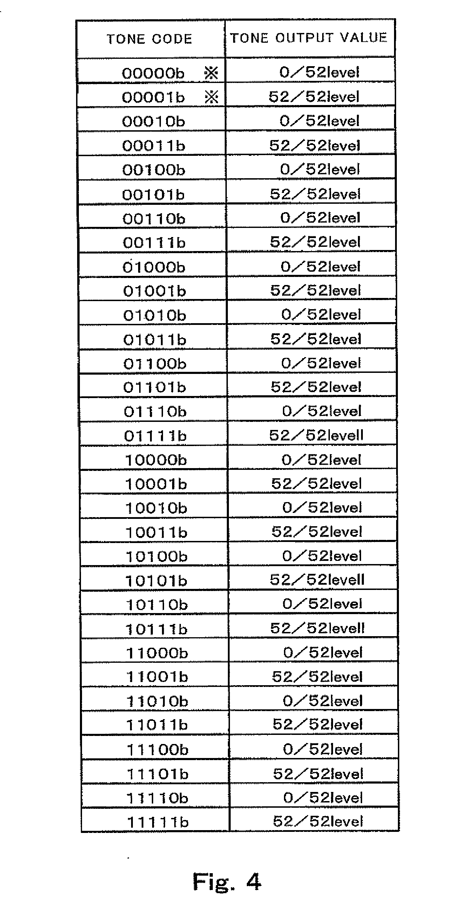

Fig. 4 is a diagram showing one setting example of the tone conversion table of the liquid crystal display driver of the image display device shown in Fig. 1.

As shown in Fig. 4, the five-bit tone code can express 32 (2⁵) types of codes. The tone conversion table in which values selected by the operation codes of the microcomputer 9 from 52 levels of tone output values are set to 32 types of codes is set and stored in the tone conversion table storage portion 13.

At this time, the controller 16 sets the tone conversion table such that: among the stored tone codes, the tone code (00000b in the present embodiment) containing the display data piece indicating the first tone output value corresponds to the first tone output value (0/52 level in the present embodiment); and among the stored tone codes, the tone code (00001b in the present embodiment) containing the display data piece indicating the second tone output value corresponds to the second tone output value (52/52 level).

As described above, among the data pieces input to the liquid crystal display driver 10, only the zeroth bit of each segment changes (becomes 0 or 1), and the other bits are the fixed values (0). Therefore, the generated tone code becomes 00000b or 00001b (only the tone codes shown by * in Fig. 4 are generated), and the other tone codes are not generated in principle. Thus, by associating 00000b with the first tone output value and associating 00001 b with the second tone output value, two-tone display (for example, black and white display) based on the original one-bit binary display data pieces can be performed. However, since the other tone codes may be mistakenly generated by the influence of noises, the other tone codes (tone codes generated at the time of the occurrence of error) are also associated with the tone output values which do not influence on the images displayed on the liquid crystal display panel 11.

In the present embodiment, the two-tone display is realized by setting the second tone output value (bright display) to be higher than the first tone output value (dark display). In addition, in the tone conversion table of the present embodiment, the first tone output value is set to the 0/52 level (black display) that is a minimum value, and the second tone output value is set to the 52/52 level (white display) that is a maximum value. Therefore, the contrast of the image displayed on the liquid crystal display panel 11 can be maximized, and easy-to-see display can be realized. The present embodiment is set such that the first tone output value (that is, the bright display) is set when the original display data piece is 0, and the second tone output value (that is, the dark display) is set when the original display data piece is 1. However, the present embodiment may be set such that the second tone output value (that is, the dark display) is set when the original display data piece is 0, and the first tone output value (that is, the bright display) is set when the original display data piece is 1.

The controller 16 reads out the tone codes stored in the display memory 12 and converts the tone codes into the tone output values by using the tone conversion table stored in the tone conversion table storage portion 13. Then, the controller 16 drives the liquid crystal display panel 11 such that the liquid crystal display panel 11 performs display based on the tones corresponding to the tone output values.

According to the above configuration, to the plurality of data input terminals D0 to D15 of the liquid crystal display driver 10, the one-bit display data pieces are transmitted through the display data output terminals P0 to P2 of the microcomputer 9, and the predetermined fixed values are transmitted through the plurality of operation code output terminals C01 to C05, C07 to C 12, and C 14 to C 17 to which the display data output terminals P0 to P2 of the microcomputer 9 are not commonly connected. Then, the liquid crystal display driver 10 which has received the display data pieces and the fixed values allocates the display data piece, output through the display data output terminals P0 to P2, to at least one bit of the tone code and allocates the fixed values to the other bits of the tone code. With this, the tone code which can be processed by the liquid crystal display driver 10, contains predetermined two or more bits (five bits), and is the multiple-tone display data piece can be easily created in a short period of time. Therefore, without providing any special circuit configured to perform the bit extension, the bit extension processing can be quickly performed to perform two-tone display corresponding to the binary display data piece by using the general-purpose liquid crystal display driver 10 configured to operate based on the multiple-tone display data pieces each containing tones corresponding to plural bits. With this, the display data row stored in the display memory 12 of the liquid crystal display driver 10 is 128 × 240 × 5 bits whereas the display data row stored in the binary display data storage portion 17 of the microcomputer 9 is just 128 × 240 bits (128 × 30 bytes), that is, 1/5 of the display data row stored in the display memory 12. Therefore, the processing can be adequately quickly performed by a conventional microcomputer used in a remote controller or operating portion of an apparatus and configured to perform mode switching processing, buzzer generating processing, voice processing, communication processing, and the like.

In the present embodiment, three bits of the display data pieces corresponding to three display dots can be simultaneously output from the microcomputer 9 including the output terminals C00 to C07 and C10 to C17 corresponding to 16 bits, and three tone codes corresponding to respective display dots can be created simultaneously. Therefore, the processing is simple, and a data transmission time can be further shortened.

In the present embodiment, each of the tone codes (tone codes generated at the time of the occurrence of error) other than the tone codes to be generated is associated with the tone output value corresponding to the bit (zeroth bit in the present embodiment) which changes even when no error has occurred. To be specific, the tone output value is associated with the 0/52 level when the zeroth bit is 0, and the tone output value is associated with the 52/52 level when the zeroth bit is 1. However, the present invention is not limited to this. For example, each of the tone codes (tone codes generated at the time of the occurrence of error) other than the tone codes to be generated may be associated with the tone output value of one of the tone codes to be generated (each of all the tone codes other than the tone code 00000b may be associated with the 52/52 level, or each of all the tone codes other than the tone code 00001b may be associated with the 0/52 level) or may be associated with an intermediate value (for example, a 26/52 level) between two tone output values associated with the tone codes to be generated.

In a case where the tone output value corresponding to a case where the value of the one-bit display data piece is 0 (no data piece exists) is the first tone output value, and the tone output value corresponding to a case where the value of the one-bit display data piece is 1 (data piece exists) is the second tone output value, the first tone output value may be larger or smaller than the second tone output value. To be specific, in a case where the first tone output value corresponding to 0 that is the value of the one-bit display data piece is larger than the second tone output value corresponding to 1 that is the value of the one-bit display data piece, portions around images, such as letters, are brighter than the images, that is, reversed display (negative display) is realized. In contrast, in a case where the first tone output value corresponding to 0 that is the value of the one-bit display data piece is smaller than the second tone output value corresponding to 1 that is the value of the one-bit display data piece, the portions around the images, such as letters, are darker than the images, that is, non-reversed display (positive display) is realized.

Each of all the fixed values output through the operation code output terminals C01 to C05, C07 to C12, and C14 to C17 of the microcomputer 9 may be 0 or may be 1. Moreover, both 0 and 1 may be output as long as the output pattern is predetermined for each segment. This can be realized by, for example, setting each of the fixed values of the operation code output terminals C01, C03, C07, C11, C14, and C16 to 0, setting each of the fixed values of the operation code output terminals C02, C04, C10, C12, C 15, and C17 to 1, associating the tone code 10100b with the first tone output value (0/52 level), and associating the tone code 10101b with the second tone output value (52/52 level).

In the present embodiment, the microcomputer 9 includes eight output terminals P0 to P7 including the display data output terminals P0 to P2. Among the eight output terminals P0 to P7, each of the output terminals P3 to P7 other than the display data output terminals P0 to P2 is in a non-connection state where no data piece is input.

Further, the microcomputer 9 is configured to: allocate eight low order bits of the display data pieces in the display data row to eight output terminals P0 to P7 such that three low order bits of the display data pieces in the eight low order bits of the display data pieces are output through the display data output terminals P0 to P2, the display data row being configured by a plurality of display data pieces stored in the display image data area of the binary display data storage portion 17, and output the display data pieces; and at the time of a next output, again allocate the display data row except for the display data pieces having been output through the display data output terminals P0 to P2 such that three low order bits of the display data pieces in the display data row are output through the display data output terminals P0 to P2.

The following will explain a procedure in which the microcomputer 9 transmits the display data pieces stored in the display image data area of the binary display data storage portion 17 in the image display device of the present embodiment. Control regarding data transmission and reception between the microcomputer 9 and the liquid crystal display driver 10 and setting of the tone conversion table are known technologies and are not directly related to the present invention, so that detailed explanations thereof are omitted in the present embodiment.

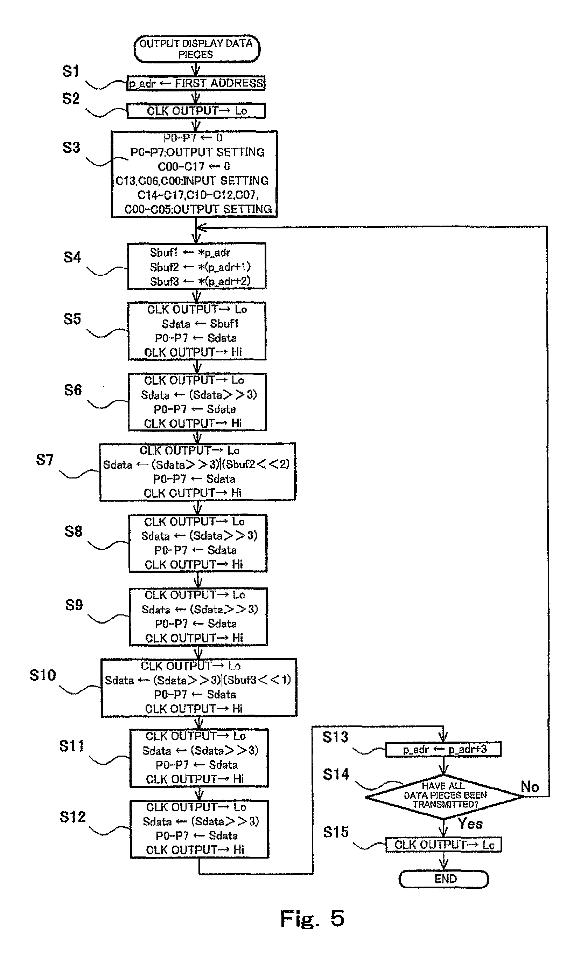

Fig. 5 is a flow chart showing display data piece output processing in the image display device shown in Fig. 1. First, the microcomputer 9 stores as a pointer p_adr a first address of the binary display data row stored in the display image data area of the binary display data storage portion 17 (Step S1). Next, the microcomputer 9 sets the output level of the clock terminal CLK that is the control terminals to the low level (Step S2).

The microcomputer 9 sets each of the outputs of the output terminals P0 to P7 to 0, and then sets each of the output terminals P0 to P7 to the output state. Next, the microcomputer 9 sets each of the outputs of the operation code output terminals C00 to C07 and C10 to C17 to 0. Then, the microcomputer 9 sets each of the operation code output terminals C13, C06, and C00 to the high impedance state (input state) and sets each of the other operation code output terminals C 14 to C17, C10 to C12, C07, and C00 to C05 to the output state (Step S3).

Next, the microcomputer 9 reads out the first address stored as the pointer p_adr and reads out three bytes of the display data row from the first address. The three bytes of the display data row are temporarily stored in transmitter buffers Sbuf1, Sbuf2, and Sbuf3 such that one byte is stored in each buffer (Step S4). Then, while maintaining the low level of the output level of the clock terminal CLK, the microcomputer 9 sets the transmitter buffer Sbuf1 corresponding to the first byte to send data Sdata. The microcomputer 9 outputs respective display data pieces of the send data Sdata to the output terminals P0 to P7. Then, when the microcomputer 9 transitions the output level of the clock terminal CLK to the high level, the liquid crystal display driver 10 retrieves the display data pieces, corresponding to three display dots (three bits), output through the display data output terminals P0 to P2 connected to the data input terminals D0, D6, and D11 of the liquid crystal display driver among the output terminals P0 to P7 (Step S5). The liquid crystal display driver 10 generates three tone codes from the display data pieces corresponding to three display dots as described above and stores the three tone codes in corresponding addresses of the display memory 12.

Then, the microcomputer 9 again transitions the output level of the clock terminal CLK to the low level and shifts the display data pieces set in the send data Sdata to the right by three bits. Here, shifting the data pieces to the right denotes that by shifting the send data Sdata to the low order bit side, the display data pieces except for the display data pieces having been output through the display data output terminals P0 to P2 in Step S5 are moved up to the least significant bit of the send data Sdata. Then, the microcomputer 9 outputs respective display data pieces of the newly set send data Sdata to the output terminals P0 to P4. Since the display data pieces of the send data Sdata are reduced by three bits, the data pieces are not output through the output terminals P5 to P7. However, this does not cause any problem since each of the output terminals P5 to P7 is in the non-connection state. When the microcomputer 9 transitions the output level of the clock terminal CLK to the high level, the liquid crystal display driver 10 retrieves the display data pieces, corresponding to three display dots (three bits), output through the display data output terminals P0 to P2 connected to the data input terminals D0, D6, and D11 of the liquid crystal display driver among the output terminals P0 to P4 (Step S6). In this case, when the liquid crystal display driver 10 stores in the display memory 12 the tone codes generated from the display data pieces, the liquid crystal display driver 10 shifts the address by three display dots and then stores the tone codes.

Next, the microcomputer 9 again transitions the output level of the clock terminal CLK to the low level and shifts the display data pieces set in the send data Sdata to the right by three bits. At this time, the display data pieces set in the send data Sdata are only two bits. Here, the transmitter buffer Sbuf2 corresponding to the second byte is shifted to the left by two bits (the display data piece of the least significant bit of the transmitter buffer Sbuf2 is set to be shifted to the high order bit side by two bits from the least significant bit of the send data Sdata), and the resultant data pieces are ORed with the send data Sdata. With this, the display data row configured by the remaining two low order bits of the send data Sdata (the two high order bits of the transmitter buffer Sbf1 of the first byte) and the six low order bits of the transmitter buffer Sbuf2 of the second byte is set in the new send data Sdata. Then, the microcomputer 9 outputs respective display data pieces of the send data Sdata to the output terminals P0 to P7. When the microcomputer 9 transitions the output level of the clock terminal CLK to the high level, the liquid crystal display driver 10 retrieves the display data pieces, corresponding to three display dots (three bits), output through the display data output terminals P0 to P2 (Step S7). Up to here, the liquid crystal display driver 10 has retrieved all the display data pieces of the transmitter buffer Sbuf1 of the first byte and the display data piece of the first bit (least significant bit) of the transmitter buffer Sbuf2 of the second byte.

Then, the microcomputer 9 again transitions the output level of the clock terminal CLK to the low level and shifts the send data Sdata to the right by three bits (the transmitter buffer Sbuf2 of the second byte may be shifted to the right by one bit to be set in the new send data Sdata). With this, seven bits of the data pieces other than the transmitted least significant bit of the transmitter buffer Sbuf2 of the second byte are set in the send data Sdata. The microcomputer 9 outputs respective display data pieces of the newly set send data Sdata to the output terminals P0 to P6. When the microcomputer 9 transitions the output level of the clock terminal CLK to the high level, the liquid crystal display driver 10 retrieves the display data pieces, corresponding to three display dots (three bits), output through the display data output terminals P0 to P2 (Step S8).

Then, the microcomputer 9 again transitions the output level of the clock terminal CLK to the low level and shifts the display data pieces set in the send data Sdata to the right by three bits. Then, the microcomputer 9 outputs respective display data pieces of the newly set send data Sdata to the output terminals P0 to P3. When the microcomputer 9 transitions the output level of the clock terminal CLK to the high level, the liquid crystal display driver 10 retrieves the display data pieces, corresponding to three display dots (three bits), output through the display data output terminals P0 to P2 (Step S9).

Next, the microcomputer 9 again transitions the output level of the clock terminal CLK to the low level and shifts the display data piece set in the send data Sdata to the right by three bits. At this time, the display data piece set in the send data Sdata is only one bit. Here, the transmitter buffer Sbuf3 corresponding to the third byte is shifted to the left by one bit, and the resultant data pieces are ORed with the send data Sdata. With this, the display data row configured by the remaining one low order bit of the send data Sdata (the most significant bit of the transmitter buffer Sbuf2 of the second byte) and seven low order bits of the transmitter buffer Sbuf3 of the third byte is set in the new send data Sdata. Then, the microcomputer 9 outputs respective display data pieces of the send data Sdata to the output terminals P0 to P7. When the microcomputer 9 transitions the output level of the clock terminal CLK to the high level, the liquid crystal display driver 10 retrieves the display data pieces, corresponding to three display dots (three bits), output through the display data output terminals P0 to P2 (Step S10). Up to here, the liquid crystal display driver 10 has retrieved all the display data pieces of the transmitter buffers Sbuf1 and Sbuf2 of the first and second bytes and two low order bits of the display data pieces of the transmitter buffer Sbuf3 of the third byte.

Then, the microcomputer 9 again transitions the output level of the clock terminal CLK to the low level and shifts the display data pieces set in the send data Sdata to the right by three bits (the transmitter buffer Sbuf3 of the third byte may be shifted to the right by two bits to be set in the new send data Sdata). Then, the microcomputer 9 outputs respective display data pieces of the newly set send data Sdata to the output terminals P0 to P3. When the microcomputer 9 transitions the output level of the clock terminal CLK to the high level, the liquid crystal display driver 10 retrieves the display data pieces, corresponding to three display dots (three bits), output through the display data output terminals P0 to P2 (Step S11). By repeating this operation one more time (Step S12), the liquid crystal display driver 10 retrieves all the display data pieces of the transmitter buffer Sbuf3 of the third byte. As above, by transmitting the display data pieces in units of three bits, just three bytes of the display data pieces can be transmitted in Step S12.

Next, the microcomputer 9 shifts the pointer p_adr by three bytes to set the least significant bit of the display data row of the fourth byte as the first address (Step S13). At this time, the microcomputer 9 determines whether or not the number of transmitted display data pieces has reached the number of all the display data pieces (Step S14). Specifically, the microcomputer 9 determines whether or not a value obtained by subtracting the first address of the display data row from the number of data pieces indicated by the pointer p_adr is equal to or higher than a predetermined number of data pieces (3,840 in the case of the liquid crystal display panel 11 including the display dots of 3,840 bytes (= 128 bits × 30 bytes)). When the number of transmitted display data pieces has not yet reached the number of all the display data pieces (No in Step S14), Steps S4 to S13 are repeated. When the number of transmitted display data pieces has reached the number of all the display data pieces (Yes in Step S14), the microcomputer 9 sets the output level of the clock terminal CLK to the low level and terminates the transmission processing.

As above, regardless of the number of bits of the display data pieces actually transmitted to the liquid crystal display driver 10, the microcomputer 9 reads out the display data pieces in units of eight bits (one byte) from the display data row stored in the binary display data storage portion 17 and allocates eight bits of the display data pieces to the eight output terminals P0 to P7. At this time, each of the output terminals P3 to P7 through which the display data pieces other than the display data pieces actually transmitted to the liquid crystal display driver 10 are output is in the non-connection state. Therefore, without performing any special mask processing, a required number of bits of the display data pieces can be easily, quickly transmitted to the liquid crystal display driver 10.

Further, the microcomputer 9 of the present embodiment is configured to: read out (3 × n) bytes (n = 1 in the present embodiment) of the display data pieces from the display data row configured by a plurality of display data pieces stored in the display image data area of the binary display data storage portion 17; and sequentially output the read display data pieces through the display data output terminals P0 to P2 while shifting the read display data pieces by three bits each time. With this, the number of bits of the display data pieces to be read out becomes an integral multiple of a least common multiple of the number of bits (three bits) of the display data pieces transmitted from the microcomputer 9 to the liquid crystal display driver 10 and the number of bits (eight bits) of the display data pieces output through the output terminals P0 to P7. Therefore, the transmission processing of the display data pieces can be performed based on a repetition mode (Steps S4 to S13) in which eight three-bit shift processing are performed as one cycle. In addition, the number of times of termination determination (Step S14) performed in each cycle can be reduced to 1/8. Therefore, the amount of calculations of the processing can be reduced, and the processing time can be shortened.

In the present embodiment, the transmission of the data pieces is started from the low order bit of the display data row. However, the present embodiment is not limited to this, and the transmission of the data pieces may be started from the high order bit of the display data row.

The present embodiment has explained the configuration in which the data pieces are output in units of three bits through the display data output terminals P0 to P2. However, the display data pieces may be output in units of m bits through the display data output terminals. In this case, the microcomputer 9 is configured to: read out n bits of the display data pieces from the display data row configured by a plurality of display data pieces stored in the display image data area of the binary display data storage portion 17, n being an integral multiple of a least common multiple of m that is the number of bits output through the display data output terminals and eight that is the number of bits output through the output terminals P0 to P7; and sequentially output the read display data pieces through the display data output terminals while shifting the read display data pieces in units of m bits. With this, the same effects as above can be obtained. To be specific, the number of bits of the display data pieces to be read out becomes the integral multiple of the least common multiple of the number of bits (m bits) of the display data pieces transmitted from the microcomputer to the liquid crystal display driver and the number of bits (eight bits) of the display data pieces output through the output terminals P0 to P7. Therefore, the transmission processing of the display data pieces can be performed based on the repetition mode. In addition, the amount of calculations of the processing can be reduced, and the processing time can be shortened.

### Embodiment 2

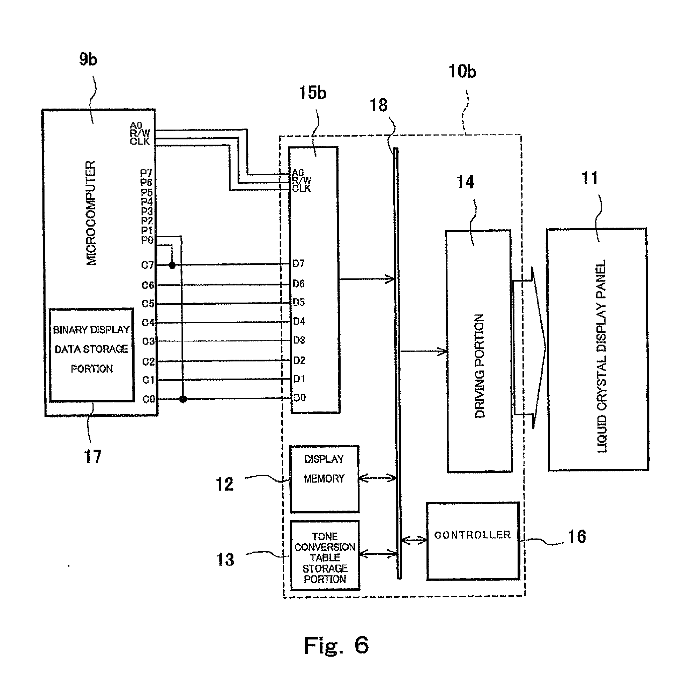

Next, the image display device according to Embodiment 2 of the present invention will be explained. Fig. 6 is a schematic circuit diagram showing the image display device configured to perform display based on the binary tone output values in Embodiment 2 of the present invention. In the present embodiment, the same reference signs are used for the same components as in Embodiment 1, and explanations thereof are omitted.

The present embodiment is different from Embodiment 1 in that: a microcomputer 9b includes eight operation code output terminals C0 to C7 and two display data output terminals P0 and P1 and outputs the display data pieces in units of two bits through the two display data output terminals P0 and P1; and the controller 16 is configured to create five-bit tone codes, corresponding to two display dots, from four bits of the display data pieces obtained by two consecutive outputs of two bits of the display data pieces through the two display data output terminals P0 and P1, the five-bit tone codes each being configured by one bit of the display data piece and four bits of the fixed values, and also create a five-bit tone code corresponding to one display dot, the five-bit tone code being configured by two bits of the display data pieces transmitted different time through the display data output terminals P0 and P1 and three bits of the fixed values.

Correspondingly, an interface 15b of a liquid crystal display driver 10b includes eight data input terminals D0 to D7 through which the operation codes and the display data pieces are retrieved. As with Embodiment 1, the interface 15b includes the control terminals A0, R/W, and CLK configured to control input and output of data pieces. To be specific, in the present embodiment, the liquid crystal display driver 10b can be configured by switching the mode (16 bit mode) of the liquid crystal display driver 10 of Embodiment 1 to an eight bit mode.

In the present embodiment, the display data output terminals P0 and P1 are respectively connected to the data input terminals D7 and D0. To be specific, the operation code output terminals C0 and C7 are respectively, commonly connected to the display data output terminals P1 and P0.

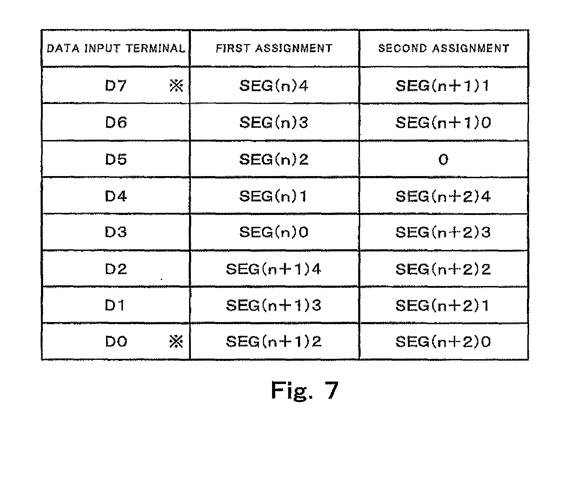

Fig. 7 is a diagram showing an example of the assignments of the data terminals of the liquid crystal display driver of the image display device shown in Fig. 5. As shown in Fig. 7, in the present embodiment, the display data pieces are retrieved twice consecutively through the plurality of data input terminals D0 to D7. Then, the retrieved display data pieces (16 bits) are associated with three segments SEG(n), SEG(n+1), and SEG(n+2), and by the two consecutive data retrieving through the data input terminals D0 to D7, the display data piece is assigned to one of five bits in each segment, the five bits being obtained by the bit extension. Specifically, the data pieces input to the data input terminals D7 to D3 in the first data retrieving respectively denote the fourth bit to zeroth bit of the segment SEG(n), the data pieces input to the data input terminals D2 to D0 in the first data retrieving and the data pieces input to the data input terminals D7 to D6 in the second data retrieving respectively denote the fourth bit to zeroth bit of the segment SEG(n+1), and the data pieces input to the data input terminals D4 to D0 in the second data retrieving respectively denote the fourth bit to zeroth bit of the segment SEG(n+2). As with Embodiment 1, among the data input terminals D0 to D7, the data input terminal D5 in the second data retrieving is an excess input terminal and is not used. In the present embodiment, how to assign the data pieces to the segments is not limited to the above and may be set variously, preferably.

As described above, the display data output terminals P0 and P1 are respectively connected to the data input terminals D7 and D0, and the display data pieces are output in units of two bits through the two display data output terminals P0 and P1. With this, the display data pieces are input to the data input terminals D0 and D7, and the fixed values (0) are input to the other data input terminals D1 to D6. Therefore, among the data pieces input to the liquid crystal display driver 10b, only the fourth bit in the first segment SEG(n), the first bit and second bit in the second segment SEG(n+1), and the zeroth bit in the third segment SEG(n+2) change (only the bits shown by * in Fig. 7 change), and the other bits are the fixed values (0).

Thus, the controller 16 of the liquid crystal display driver 10b retrieves the data pieces for respective segments in accordance with the above assignments from the data pieces input to the data input terminals D0 to D7. With this, the controller 16 creates the five-bit tone codes, corresponding to two display dots, from four bits of the display data pieces (as described below, two of these four bits of the display data pieces are the same as each other) transmitted through the two display data output terminals P0 and P1 in twice, the five-bit tone codes each being configured by one bit of the display data piece and four bits of the fixed values. In addition, the controller 16 creates the five-bit tone code corresponding to one display dot, the five-bit tone code being configured by two bits of the display data pieces transmitted different time through the display data output terminals P0 and P1 and three bits of the fixed values. With this, the controller 16 creates the tone codes corresponding to three segments in total. The five-bit multiple-tone display data pieces (tone codes) are stored in the display memory 12 as shown in Fig. 2B.

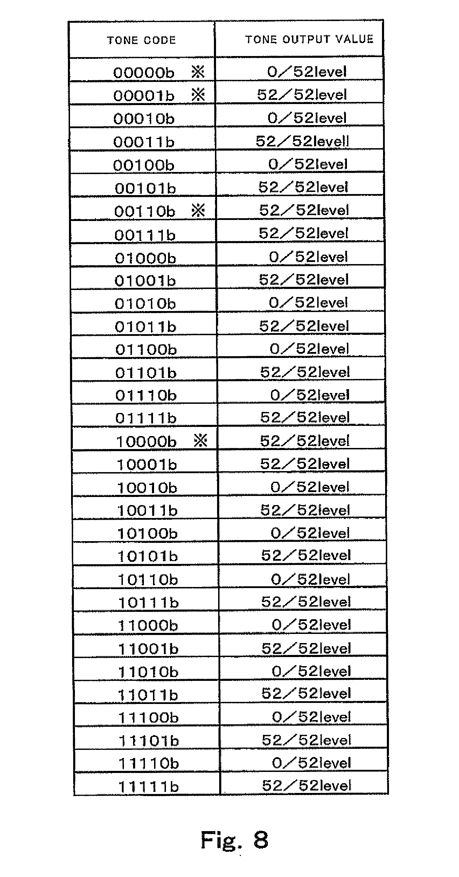

Fig. 8 is a diagram showing one setting example of the tone conversion table of the liquid crystal display driver of the image display device shown in Fig. 6.

As shown in Fig. 8, the tone conversion table of the present embodiment is set such that: among the stored tone codes, the tone code (00000b in the present embodiment) containing the display data piece indicating the first tone output value corresponds to the first tone output value (0/52 level in the present embodiment); and among the stored tone codes, the tone code (00001b, 00110b, and 10000b in the present embodiment) containing the display data piece indicating the second tone output value corresponds to the second tone output value (52/52 level).

As described above, among the data pieces input to the liquid crystal display driver 10b, only the fourth bit of the first segment SEG(n), the first bit and second bit of the second segment SEG(n+1), and the zeroth bit of the third segment SEG(n+2) change (each becomes 0 or 1), and the other bits are the fixed values (0). In addition, at the time of the second (second-half) data transmission of the two consecutive data transmissions, the display data row is shifted to the right by one bit with respect to the display data row at the time of the first data transmission as described below. Therefore, the values of the first bit and second bit of the second segment SEG(n+1) become the same as each other. On this account, the generated tone code becomes 00000b, 00001b, 00110b, or 10000b (only the tone codes shown by * in Fig. 4 are generated), and the other tone codes are not generated in principle. Thus, by associating 00000b with the first tone output value and associating each of 00001b, 00110b, and 10000b with the second tone output value, binary tone display based on the original one-bit binary display data pieces can be performed. However, since the other tone codes may be mistakenly generated by the influence of noises, the other tone codes (tone codes generated at the time of the occurrence of error) are also associated with the tone output values which do not influence on the images displayed on the liquid crystal display panel 11.

In the present embodiment, the two-tone display is realized by setting the second tone output value (bright display) to be higher than the first tone output value (dark display). In addition, in the tone conversion table of the present embodiment, the first tone output value is set to the 0/52 level (black display) that is a minimum value, and the second tone output value is set to the 52/52 level (white display) that is a maximum value. Therefore, the contrast of the image displayed on the liquid crystal display panel 11 can be maximized, and easy-to-see display can be realized. The present embodiment is set such that the first tone output value (that is, the bright display) is set when the original display data piece is 0, and the second tone output value (that is, the dark display) is set when the original display data piece is 1. However, the present embodiment may be set such that the second tone output value (that is, the dark display) is set when the original display data piece is 0, and the first tone output value (that is, the bright display) is set when the original display data piece is 1.

According to the above configuration, even in a case where there is no extra output terminals (operation code output terminals) of the microcomputer 9b, three tone codes corresponding to three display dots can be created by two data transmissions based on three bits of the display data pieces corresponding to three display dots. Therefore, the processing is simple, the data transmission time can be further shortened, and such configuration is applicable to display devices of various apparatuses.

Each of all the fixed values output through the operation code output terminals C1 to C6 of the microcomputer 9b may be 0 or may be 1. Moreover, both 0 and 1 may be output as long as the output pattern is predetermined for each segment.

In the present embodiment, the microcomputer 9b includes eight output terminals P0 to P7 including the display data output terminals P0 and P1. Among the eight output terminals P0 to P7, each of the output terminals P2 to P7 other than the display data output terminals P0 and P1 is in the non-connection state where no data piece is input.

Further, the microcomputer 9b is configured to: at the time of the first output of the two consecutive outputs, allocate eight low order bits of the display data pieces of the display data row to eight output terminals P0 to P7 such that two low order bits of the display data pieces in the eight low order bits of the display data pieces are output through the display data output terminals P0 and P1, the display data row being configured by a plurality of display data pieces stored in the display image data area of the binary display data storage portion 17, and output the display data pieces; at the time of the second output, again allocate the display data row except for the least significant display data piece among the display data pieces having been output through the display data output terminals P0 and P1 at the time of the first output such that two low order bits of the display data pieces in the display data row are output through the display data output terminals P0 and P1, and output the display data pieces; and at the time of the first output of the next two consecutive outputs, again allocate the display data row except for the display data pieces having been output through the display data output terminals P0 and P1 at the time of the previous output such that two low order bits of the display data pieces in the display data row are output through the display data output terminals.

The following will explain a procedure in which the microcomputer 9b transmits the display data pieces stored in the display image data area of the binary display data storage portion 17 in the image display device of the present embodiment.

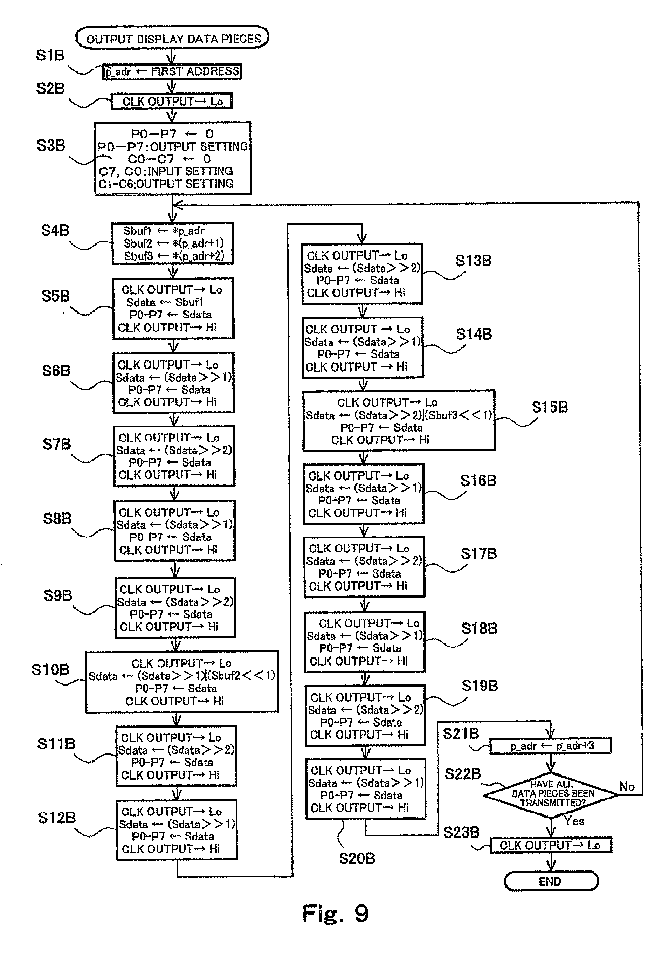

Fig. 9 is a flow chart showing the display data piece output processing in the image display device shown in Fig. 5. First, the microcomputer 9b stores as the pointer p_adr the first address of the binary display data row stored in the display image data area of the binary display data storage portion 17 (Step S1B). Next, the microcomputer 9b sets the output level of the clock terminal CLK that is the control terminal to the low level (Step S2B).

The microcomputer 9b sets each of the outputs of the output terminals P0 to P7 to 0, and then sets each of the output terminals P0 to P7 to the output state. Next, the microcomputer 9b sets each of the outputs of the operation code output terminals C0 to C7 to 0. Then, the microcomputer 9b sets each of the operation code output terminals C7 and C0 to the high impedance state (input state) and sets each of the other operation code output terminals C1 to C6 to the output state (Step S3B).

Next, the microcomputer 9b reads out the first address stored as the pointer p_adr and reads out three bytes of the display data row from the first address. The three bytes of the display data row are temporarily stored in the transmitter buffers Sbuf1, Sbuf2, and Sbuf3 such that one byte is stored in each buffer (Step S4B). Then, while maintaining the low level of the output level of the clock terminal CLK, the microcomputer 9b sets the transmitter buffer Sbuf1 corresponding to the first byte to the send data Sdata. The microcomputer 9b outputs respective display data pieces of the send data Sdata to the output terminals P0 to P7. Then, when the microcomputer 9b transitions the output level of the clock terminal CLK to the high level, the liquid crystal display driver 10b retrieves the display data pieces, corresponding to two display dots (two bits), output through the display data output terminals P0 and P1 connected to the data input terminals D0 and D7 of the liquid crystal display driver among the output terminals P0 to P7, and performs the first assignment (Step S5B).

Then, the microcomputer 9b again transitions the output level of the clock terminal CLK to the low level and shifts the display data pieces set in the send data Sdata to the right by one bit (shift to the low order bit side). Then, the microcomputer 9b outputs respective display data pieces of the newly set send data Sdata to the output terminals P0 to P6. Since the display data pieces of the send data Sdata are reduced by one bit, the data piece is not output through the output terminal, P7. However, this does not cause any problem since the output terminal P7 is in the non-connection state. In addition, since the high order display data pieces among the display data pieces having been transmitted in Step S5B are transmitted again, the values of the display data pieces assigned to the second bit and first bit of the second segment SEG(n+1) become the same as each other. When the microcomputer 9b transitions the output level of the clock terminal CLK to the high level, the liquid crystal display driver 10b retrieves the display data pieces, corresponding to two display dots (two bits), output through the display data output terminals P0 and P1 connected to the data input terminals D0 and D7 of the liquid crystal display driver among the output terminals P0 to P6, and performs the second assignment (Step S6B). The liquid crystal display driver 10b generates three tone codes from the display data pieces corresponding to three display dots (one of three display data pieces is common between the first assignment and the second assignment) based on the first assignment and the second assignment as described above, and stores the tone codes in corresponding addresses of the display memory 12.

Next, the microcomputer 9b again transitions the output level of the clock terminal CLK to the low level and shifts the display data pieces set in the send data Sdata to the right by two bits. Then, the microcomputer 9b outputs respective display data pieces of the newly set send data Sdata to the output terminals P0 to P4. Since the display data pieces of the send data Sdata are reduced by three bits from the data pieces of the send data Sdata in Step S5B, the data pieces are not output to the output terminals P5 to P7. When the microcomputer 9b transitions the output level of the clock terminal CLK to the high level, the liquid crystal display driver 10b retrieves the display data pieces, corresponding to two display dots (two bits), output through the display data output terminals P0 and P1 connected to the data input terminals D0 and D7 of the liquid crystal display driver among the output terminals P0 to P4, and performs the first assignment (Step S7B).

Then, as with Step S6B, the microcomputer 9b shifts the display data pieces set in the send data Sdata to the right by one bit, transmits the display data pieces, corresponding to two display dots (two bits), output through the display data output terminals P0 and P1 to the liquid crystal display driver 10b, and causes the liquid crystal display driver 10b to perform the second assignment (Step S8B). The liquid crystal display driver 10b generates three tone codes from the display data pieces corresponding to three display dots based on the first assignment (Step S7B) and the second assignment (Step S8B) and stores the tone codes in corresponding addresses of the display memory 12.

Next, as with Step S7B, the microcomputer 9b shifts the display data pieces set in the send data Sdata to the right by two bits, transmits the display data pieces, corresponding to two display dots (two bits), output through the display data output terminals P0 and P1 to the liquid crystal display driver 10b, and causes the liquid crystal display driver 10b to perform the first assignment (Step S9B).

Then, the microcomputer 9b again transitions the output level of the clock terminal CLK to the low level and shifts the display data pieces set in the send data Sdata to the right by one bit. At this time, the display data piece set in the send data Sdata is only the most significant bit. Here, the transmitter buffer Sbuf2 corresponding to the second byte is shifted to the left by one bit, and the resultant data pieces are ORed with the send data Sdata. With this, the display data row configured by the remaining one low order bit (the most significant bit of the transmitter buffer Sbuf1 of the first byte) of the send data Sdata and seven low order bits of the transmitter buffer Sbuf2 of the second byte is set in the new send data Sdata. Then, the microcomputer 9b outputs respective display data pieces of the send data Sdata to the output terminals P0 to P7. When the microcomputer 9b transitions the output level of the clock terminal CLK to the high level, the liquid crystal display driver 10b retrieves the display data pieces, corresponding to two display dots (two bits), output through the display data output terminals P0 and P1 and performs the second assignment (Step S10B). The liquid crystal display driver 10b generates three tone codes from the display data pieces corresponding to three display dots based on the first assignment (Step S9B) and the second assignment (Step S10B) and stores the tone codes in corresponding addresses of the display memory 12.

Subsequently, as with Steps S7B and S8B, each of the first assignment and the second assignment is performed twice (Steps S11B to S14B). Then, the liquid crystal display driver 10b generates three tone codes from the display data pieces corresponding to three display dots based on the first assignment (Step S11B), the second assignment (Step S12B), the first assignment (Step S13B), and the second assignment (Step S14B) and stores the tone codes in corresponding addresses of the display memory 12.

Then, the microcomputer 9b again transitions the output level of the clock terminal CLK to the low level and shifts the display data pieces set in the send data Sdata to the right by two bits. At this time, the display data piece set in the send data Sdata is only one bit. Here, the transmitter buffer Sbuf3 corresponding to the third byte is shifted to the left by one bit, and the resultant data pieces are ORed with the send data Sdata. With this, the display data row configured by the remaining one low order bit of the send data Sdata (the most significant bit of the transmitter buffer Sbuf2 of the second byte) and seven low order bits of the transmitter buffer Sbuf3 of the third byte is set in the new send data Sdata. Then, the microcomputer 9b outputs respective display data pieces of the send data Sdata to the output terminals P0 to P7. When the microcomputer 9b transitions the output level of the clock terminal CLK to the high level, the liquid crystal display driver 10b retrieves the display data pieces, corresponding to two display dots (two bits), output through the display data output terminals P0 and P1 and performs the first assignment (Step S 15B).

Then, as with Step S6B, the microcomputer 9b shifts the display data pieces set in the send data Sdata to the right by one bit (sets the transmitter buffer Sbuf3 of the third byte in the new send data Sdata), transmits the display data pieces, corresponding to two display dots (two bits), output through the display data output terminals P0 and P1 to the liquid crystal display driver 10b, and causes the liquid crystal display driver 10b to perform the second assignment (Step S16B). The liquid crystal display driver 10b generates three tone codes from the display data pieces corresponding to three display dots based on the first assignment (Step S15B) and the second assignment (Step S16B) and stores the tone codes in corresponding addresses of the display memory 12.

Subsequently, as with Steps S7B and S8B, each of the first assignment and the second assignment is performed twice (Steps S17B to S20B). Then, the liquid crystal display driver 10b generates three tone codes from the display data pieces corresponding to three display dots based on the first assignment (Step S17B), the second assignment (Step S18B), the first assignment (Step S19B), and the second assignment (Step S20B) and stores the tone codes in corresponding addresses of the display memory 12. As above, by transmitting the display data pieces in units of three bits in the two consecutive data transmissions, just three bytes of the display data pieces can be transmitted in Step S20B.

Next, the microcomputer 9b shifts the pointer p_adr by three bytes to set the least significant bit of the display data row of the fourth byte as the first address (Step S21B). At this time, as with Embodiment 1, the microcomputer 9b determines whether or not the number of transmitted display data pieces has reached the number of all the display data pieces (Step S22B). When the number of transmitted display data pieces has not yet reached the number of all the display data pieces (No in Step S22B), Steps S4B to S21B are repeated. When the number of transmitted display data pieces has reached the number of all the display data pieces (Yes in Step S14), the microcomputer 9b sets the output level of the clock terminal CLK to the low level and terminates the transmission processing.

As above, in the present embodiment, regardless of the number of bits of the display data pieces actually transmitted to the liquid crystal display driver 10b, the microcomputer 9b reads out the display data pieces in units of eight bits (one byte) from the display data row stored in the binary display data storage portion 17 and allocates eight bits of the display data pieces to the eight output terminals. P0 to P7. At this time, each of the output terminals P2 to P7 through which the display data pieces other than the display data pieces actually transmitted to the liquid crystal display driver 10b are output is in the non-connection state. Therefore, without performing any special mask processing, a required number of bits of the display data pieces can be easily, quickly transmitted to the liquid crystal display driver 10b.

Further, the microcomputer 9b of the present embodiment is configured to: read out (3 × n) bytes (n = 1 in the present embodiment) of the display data pieces from the display data row in the two consecutive transmission processing, the display data row being configured by a plurality of display data pieces stored in the display image data area of the binary display data storage portion 17; and sequentially output the read display data pieces through the display data output terminals P0 and P1 while shifting the read display data pieces by predetermined bits each time. With this, the number of bits of the display data pieces to be read out becomes an integral multiple of a least common multiple of the number of bits (three bits) of the display data pieces transmitted from the microcomputer 9b to the liquid crystal display driver 10b in the two consecutive transmission processing and the number of bits (eight bits) of the display data pieces output through the output terminals P0 to P7. Therefore, the transmission processing of the display data pieces can be performed based on the repetition mode (Steps S4B to S21B) in which eight bit shift processing including two-bit shift processing in the first assignment and one-bit shift processing in the second assignment are performed as one cycle. In addition, the number of times of termination determination (Step S22B) performed in each cycle can be reduced to 1/8. Therefore, the amount of calculations of the processing can be reduced, and the processing time can be shortened.

Since two (first-half and second-half) data transmissions are performed in the present embodiment, the time required is twice as long as that of Embodiment 1. However, since the number of operation code output terminals required in the microcomputer 9b in the present embodiment is half the number in Embodiment 1, the input and output terminals are used for the other functions. If 16 terminals cannot be used as the operation code output terminals or if the amount of calculations in the other functions is small and the processing time is enough, an inexpensive microcomputer in which the number of terminals is small can be used by realizing the configuration of the present embodiment.

The foregoing has explained the embodiment of the present invention configured to perform display based on the binary tone output values. However, the present invention is not limited to the above embodiments, and various improvements, changes, and modifications may be made within the spirit of the present invention. For example, respective components in the above plurality of embodiments may be arbitrarily combined with one another.

Each of Embodiments 1 and 2 has explained an example in which the display data pieces are transmitted in units of three bytes, but the display data pieces may be transmitted in units of an integral multiple of three bytes. The processing time can be shortened as the number of bits (the number of bytes) of the display data pieces processed in one cycle increases.

Since each of Embodiments 1 and 2 has explained the liquid crystal display panel 11 of 128 × 240 dots, the number of bytes in one screen is 3,840 bytes which is a multiple of three. However, the present invention is also applicable to the liquid crystal display panel of, for example, 128 × 256 dots. Specifically, in this case, the number of bytes in one screen is 4,096 bytes which is a multiple of three plus one byte. The present invention can easily deal with this case without increasing the program size by performing in Fig. 5 Step S 14, in which the termination determination is performed, after Step S7, in which the transmission of the first byte is completed.

Each of the above embodiments has been explained by using the liquid crystal display device as the image display device. However, the above embodiments are not limited to this. The image display device may be a device configured to display images by transmitting the display data pieces to a plurality of display dots. The image display device may be, for example, a display device using organic EL, a fluorescent display tube, or the like.

### 2. Image Display Device Configured to Perform Display Based on Multiple-tone Output Values That are Three-tone Output Value or More

Next, a case where an image display device according to the present invention performs display (for example, gray scale display) based on multiple-tone output values that are three-tone output values or more will be explained below using a plurality of embodiments.

### Embodiment 1

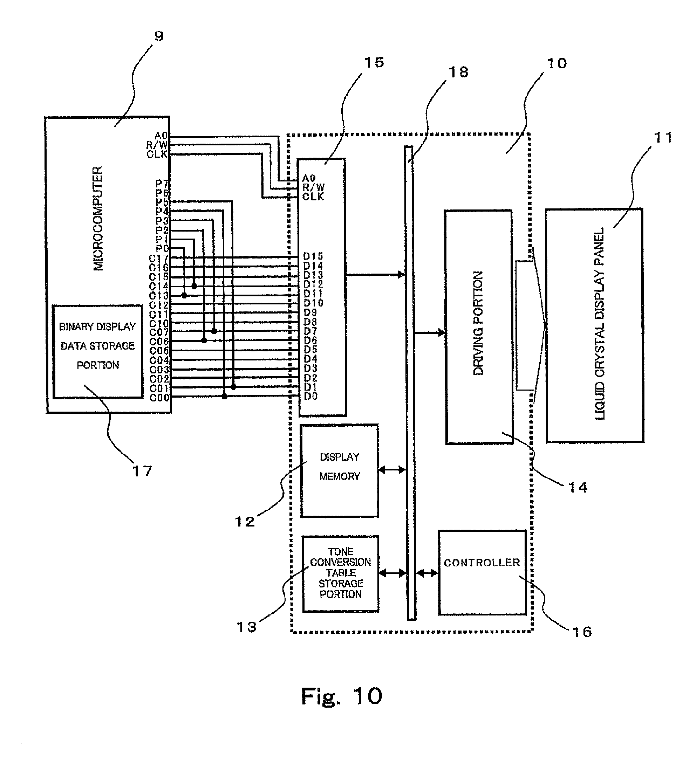

First, the image display device according to Embodiment 1 of the present invention for performing display based on the multiple-tone output values that are the three-tone output values or more will be explained. Fig. 10 is a schematic circuit diagram showing the image display device in Embodiment 1 of the present invention for performing display based on the multiple-tone output values that are the three-tone output values or more.

As shown in Fig. 10, the image display device according to the present embodiment includes: a liquid crystal display panel 11 that is an image display panel in which display dots are arranged in a matrix; a liquid crystal display (LCD) driver 10 that is an image display driver configured to drive the liquid crystal display panel 11 such that the liquid crystal display panel 11 performs display; a microcomputer 9 configured to transmit display data pieces to the liquid crystal display driver 10 and control the liquid crystal display driver 10.

In the present embodiment, the liquid crystal display panel 11 includes a display area of, for example, 128 × 240 dots.

The liquid crystal display driver 10 includes: an interface 15 including a plurality of data input terminals D0 to D 15; a display memory 12 configured to store tone codes which are input through the plurality of data input terminals D0 to D15, correspond to respective display dots of the liquid crystal display panel 11, each includes three or more bits (for example, five bits), and are multiple-tone display data pieces; a tone conversion table storage portion 13 configured to store a tone conversion table configured to convert the tone codes into the tone output values corresponding to the tone display of the liquid crystal display panel 11; and a controller 16 configured to set the tone conversion table in accordance with operation codes input through the plurality of data input terminals D0 to D 15, read out the tone codes stored in the display memory 12, convert the tone codes into the tone output values by using the tone conversion table, and drive the liquid crystal display panel 11 such that the liquid crystal display panel 11 performs display based on the tones corresponding to the tone output values. Each of the display memory 12 and the tone conversion table storage portion 13 is constituted by a storage portion, such as a RAM, provided in the liquid crystal display driver 10. The controller 16 is connected to respective components through a communication bus 18. The controller 16 stores the data pieces and operation codes, input through the interface 15, in the storage portions including the display memory 12 and the tone conversion table storage portion 13 and performs various calculations to control a driving portion 14.

In the present embodiment, to store the display data pieces containing five bits (32 tones) per display dot of the liquid crystal display panel 11, the display memory 12 includes a storage area of 128 × 240 × 5 bits.

The tone conversion table storage portion 13 sets and stores the tone conversion table in which 32 types of tone codes corresponding to five bits (32 tones) and the tone output values corresponding to the tone codes and indicating drive levels for applying voltages to respective display dots of the liquid crystal display panel 11 are associated with each other.

The controller 16 sequentially reads out the tone codes stored in the display memory 12 and corresponding to respective display dots and converts the tone codes into the tone output values by using the tone conversion table stored in the tone conversion table storage portion 13. Based on the tone output values, the driving portion 14 controls the drive levels of the corresponding display dots and displays an image on the liquid crystal display panel 11.

The data input terminals D0 to D15 provided in the interface 15 receive the display data pieces and operation codes transmitted from the microcomputer 9. Further, the interface 15 includes control terminals A0, R/W, and CLK configured to control input and output of data pieces, such as the display data pieces and the operation codes. For example, a clock terminal CLK that is the control terminal sets a timing at which the liquid crystal display driver 10 retrieves the display data pieces. To be specific, the liquid crystal display driver 10 is configured to retrieve the display data pieces when an input level of the clock terminal CLK transitions from a low level that is a first level to a high level that is a second level.

In the present embodiment, the microcomputer 9 is an eight bit microcomputer. The microcomputer 9 includes: a plurality of operation code output terminals C00 to C07 and C10 to C17 which are respectively connected to the plurality of data input terminals D0 to D15 of the liquid crystal display driver 10 and can be switched to an output state or a high impedance state; and six display data output terminals P0 to P5 which are provided separately from the operation code output terminals C00 to C07 and C10 to C 17, are respectively connected to six of the plurality of data input terminals D0 to D15, and can be switched to the output state or the high impedance state. The number of display data output terminals is determined in accordance with the spec of the liquid crystal display driver 10, and the present invention includes a case where the number of display data output terminals is at least two.

As above, the liquid crystal display driver 10 includes 16 data input terminals D0 to D15, and the microcomputer 9 includes 16 operation code output terminals C00 to C07 and C10 to C17 corresponding to the data input terminals D0 to D 15 and six display data output terminals. P0 to P5.

The microcomputer 9 also includes the control terminals A0, R/W, and CLK for data input-output control and controls data pieces input to and output from the liquid crystal display driver 10.

Further, the microcomputer 9 includes a tone display data storage portion 17 including a display image data area (128 × 240 × 2 bits, that is, 128 × 60 bytes) configured to create and store 2-bit 4-tone gray scale display data pieces corresponding to the display dots of the liquid crystal display panel 11. For example, the tone display data storage portion 17 is constituted by a RAM. A display data row constituting image data pieces to be displayed on the liquid crystal display panel 11 is created and stored in the display image data area provided in the tone display data storage portion 17. The microcomputer 9 is configured to sequentially read out the display data row and repeatedly transmits the display data row to the liquid crystal display driver 10 to dynamically display predetermined images on the liquid crystal display panel 11.

When the microcomputer 9 outputs the operation codes to the liquid crystal display driver 10, the microcomputer 9 sets each of the display data output terminals P0 to P5 to the high impedance state and then outputs the operation codes through the plurality of operation code output terminals C00 to C07 and C10 to C17. Here, setting each of the display data output terminals P0 to P5 to the high impedance state denotes that each of the display data output terminals P0 to P5 is electrically disconnected. Specifically, setting each of the display data output terminals P0 to P5 to the high impedance state is realized such that, for example, in a CMOS circuit in which direction registers and output terminals are connected to the display data output terminals P0 to P5, by setting an input mode in which each of a pair of output transistors is in an off state, the corresponding output terminal is set to a floating state.

As above, the display data output terminals P0 to P5 are set to the high impedance state. With this, when the operation codes are output through the operation code output terminals C00 to C07 and C10 to C17, current is prevented from mistakenly flowing to the display data output terminals P0 to P5 from the operation code output terminals (C00, C01, C06, C07, C13, and C14 in the present embodiment) commonly connected to the display data output terminals P0 to P5 among the operation code output terminals C00 to C07 and C10 to C17, and port breakdown and malfunctions are prevented from occurring. In addition, the operation codes output through the operation code output terminals are prevented from being influenced by the flow of the current from the display data output terminals P0 to P5 to the operation code output terminals.

Thus, by transmitting the operation codes from the microcomputer 9 to the liquid crystal display driver 10, the tone conversion table is set as described below and is stored in the tone conversion table storage portion 13, and the controller 16 drives the liquid crystal display panel 11 based on the tone conversion table such that the liquid crystal display panel 11 performs display in accordance with the tones corresponding to the tone output values stored in the display memory 12.

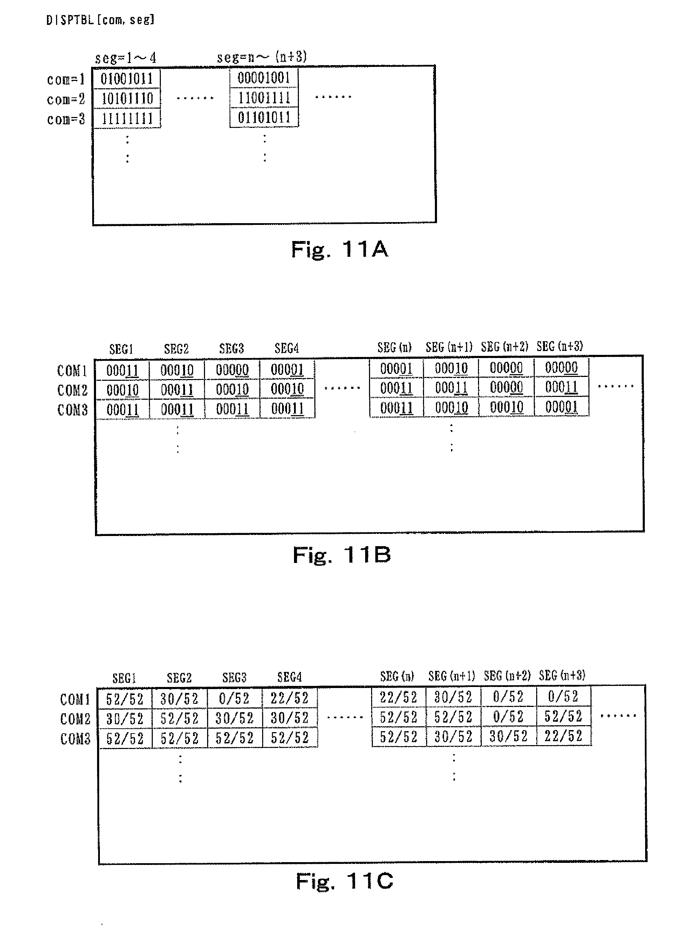

Figs. 11A to 11C are diagrams each showing an example of the display data row stored in the tone display data storage portion of the microcomputer or the display memory of the liquid crystal display driver in the image display device shown in Fig. 10 or an example of the tone output values for driving respective dots of the liquid crystal display panel. Fig. 11A is a diagram showing an example of the display data row (two bits/display dot) stored in the tone display data storage portion of the microcomputer. Fig. 11B is a diagram showing an example of the display data row (five bit/display dot) stored in the display memory of the liquid crystal display driver. Fig. 11C is a diagram showing an example of the tone output values corresponding to the display data row of Fig. 11B.

As shown in Fig. 11A, the display data pieces corresponding to respective display dots are stored as two-bit (four-tone gray scale) data pieces in the display image data area of the tone display data storage portion 17 of the microcomputer 9. The controller 16 of the liquid crystal display driver 10 converts the two-bit display data pieces into five-bit multiple-tone display data pieces (tone codes) by bit extension processing, and as shown in Fig. 11B, stores the data pieces in the display memory 12 of the liquid crystal display driver 10.

Further, the controller 16 of the liquid crystal display driver 10 drives the dots of the liquid crystal display panel 11 based on the data pieces stored in the tone conversion table storage portion 13, that is, based on the tone output values shown in Fig. 11C, the dots corresponding to the tone codes shown in Fig. 11B.

Therefore, when outputting the display data pieces to the liquid crystal display driver 10, the operation code output terminals C00, C01, C06, C07, C13, and C14 whose corresponding data input terminals D0 to D15 are commonly connected to the display data output terminals P0 to P5 among the plurality of operation code output terminals, C00 to C07 and C10 to C17 are set to the high impedance state, and the display data pieces (two bits × 3) are sequentially output in units of six bits from the display data output terminals P0 to P5 (the display data pieces corresponding to three segments are simultaneously output from six display data output terminals P0 to P5 such that two bits are output for each segment). In addition, predetermined fixed values (0 in the present embodiment) are output from the operation code output terminals C02 to C05, C10 to C12, and C15 to C17 to which the display data output terminals P0 to P5 are not commonly connected among the plurality of operation code output terminals C00 to C07 and C10 to C17.

The controller 16 is configured to generate five-bit tone codes based on the display data pieces (two bits × 3) output from the display data output terminals P0 to P5 and the fixed values (0 in the present embodiment) output from the operation code output terminals C02 to C05, C10 to C12, and C15 to C17 to which the display data output terminals P0 to P5 are not commonly connected.

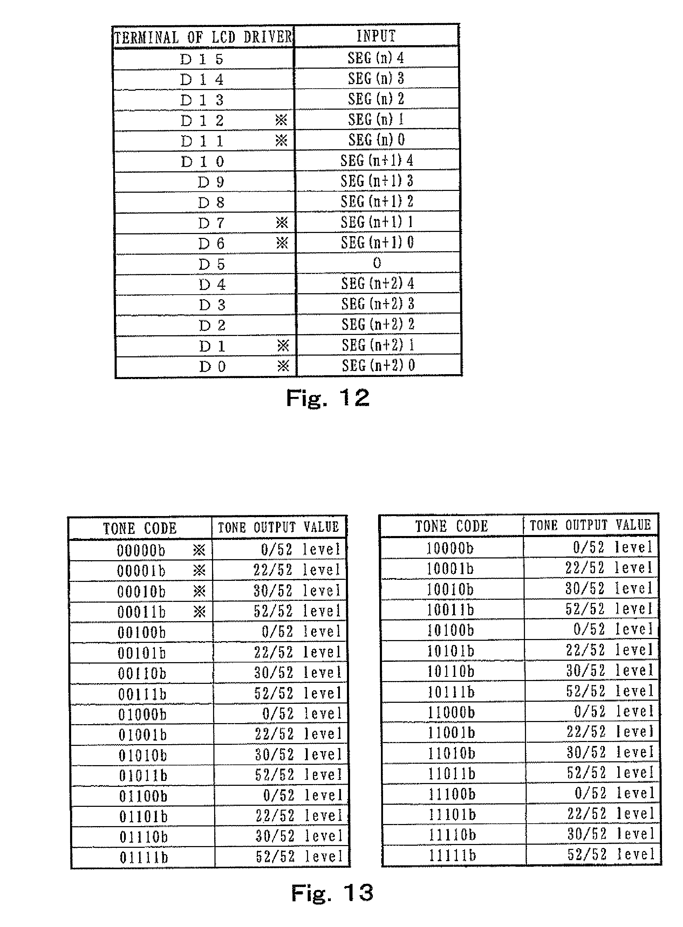

Fig. 12 is an example of the assignments of the data input terminals of the liquid crystal display driver of the image display device shown in Fig. 10. As shown in Fig. 12, in the present embodiment, the plurality of data input terminals D0 to D15 are associated with three segments SEG(n), SEG(n+1), and SEG(n+2), and two bits of the display data pieces output through display data output terminals P0 to P5 of the microcomputer 9 are assigned to two of five bits of the data input terminals D0 to D4, D6 to D10, or D11 to D15 in each segment, the five bits being obtained by the bit extension. Specifically, the data pieces input to the data input terminals D0 to D4 sequentially denote zeroth bit to fourth bit of the segment SEG(n+2), the data pieces input to the data input terminals D6 to D10 sequentially denote zeroth bit to fourth bit of the segment SEG(n+1), and the data pieces input to the data input terminals D11 to D15 sequentially denote zeroth bit to fourth bit of the segment SEG(n).

Since the five-bit data pieces corresponding to three dots (15 bits in total) are assigned to 16 data input terminals, the data input terminal D5 among the data input terminals D0 to D15 is an excess input terminal and is not used (in the present embodiment, the fixed value (0) is input to the data input terminal D5 but is not used).

As long as the display data output terminals P0 and P1, P2 and P3, and P4 and P5 respectively corresponding to the segments are respectively connected to the data input terminal corresponding to the segment SEG(n), the data input terminal corresponding to the segment SEG(n+1), and the data input terminal corresponding to the segment SEG(n+2) among the plurality of data input terminals D0 to D15, any input terminals among 15 data input terminals D0 to D15 other than the data input terminal D5 may be used, and how to assign the data input terminals to the segments is not limited to the above and may be set variously, preferably.

As described above, the display data output terminals P0 and P1, P2 and P3, and P4 and P5 are respectively connected to the data input terminals D11 and D12, D6 and D7, and D0 and D1, and the display data pieces are output in units of six bits (two bits × three segments) through the six display data output terminals P0 to P5. With this, the display data pieces are input to the data input terminals D11 and D12, D6 and D7, and D0 and D1, and the fixed values (0) are input to the other data input terminals D13 to D15, D8 to D10, and D2 to D5. Therefore, among the data pieces input to the liquid crystal display driver 10, only the zeroth bit and the first bit in each segment change (only the bits indicated by * in Fig. 12 change), and the other bits are the fixed values (0).

Thus, the controller 16 of the liquid crystal display driver 10 retrieves the data pieces for respective segments in accordance with the above assignments from the data pieces input to the data input terminals D0 to D15. With this, the controller 16 of the liquid crystal display driver 10 creates the five-bit tone codes corresponding to three display dots (three segments), the five-bit tone codes each being configured by two of six bits (two bits × three segments) of the display data pieces transmitted through the six display data output terminals P0 to P5 and three bits of the fixed values. The five-bit display data pieces (tone codes) are stored in the display memory 12 as shown in Fig. 11B.

Fig. 13 is a diagram showing one setting example of the tone conversion table storage portion 13 of the liquid crystal display driver 10 of the image display device shown in Fig. 10.

As shown in Fig. 13, the five-bit tone code can express 32 (2⁵) types of codes. The tone conversion table in which values selected by the operation codes of the microcomputer 9 from 52 levels of tone output values are set to 32 types of codes is set and stored in the tone conversion table storage portion 13.

At this time, the controller 16 sets the tone conversion table such that: among the stored tone codes, the tone code (00000b in the present embodiment) containing the display data piece indicating the first tone output value corresponds to the first tone output value (0/52 level in the present embodiment); among the stored tone codes, the tone code (00001b in the present embodiment) containing the display data piece indicating the second tone output value corresponds to the second tone output value (22/52 level); among the stored tone codes, the tone code (00010b in the present embodiment) containing the display data piece indicating the third tone output value corresponds to the second tone output value (30/52 level); and among the stored tone codes, the tone code (00011b in the present embodiment) containing the display data piece indicating the fourth tone output value corresponds to the second tone output value (52/52 level).

Thus, the tone codes stored in the display memory 12 shown in Fig. 11B are converted into the tone output values set as above, and the liquid crystal display panel 11 is driven based on the tone output values shown in Fig. 11C to display two-bit four-tone gray scale images.

As described above, among the data pieces input to the liquid crystal display driver 10, only the zeroth bit and first bit in each segment change (the zeroth bit and first bit in each segment become one of 00b to 11b), and the other bits are the fixed values (0). Therefore, the generated tone code becomes one of 00000b to 00011b (only the tone codes shown by * in Fig. 13 are generated), and the other tone codes are not generated in principle. Thus, by setting the tone output values respectively corresponding to 00000b to 00011b, four-tone gray scale display based on the original two-bit four-tone display data pieces can be performed. However, since the other tone codes may be mistakenly generated by the influence of noises, the other tone codes (tone codes generated at the time of the occurrence of error) are also associated with the tone output values which do not influence on the images displayed on the liquid crystal display panel 11.

In the present embodiment, the tone display is realized by setting higher output values sequentially from the first tone output value (dark display) to the fourth tone output value (bright display) in this order. In addition, in the tone conversion table of the present embodiment, the first tone output value is set to the 0/52 level (black display) that is a minimum value, and the fourth tone output value is set to the 52/52 level (white display) that is a maximum value. Therefore, the contrast of the image displayed on the liquid crystal display panel 11 can be maximized. Further, the second and third tone output values are not set so as to be numerically the same as each other but are set so as to be visually the same as each other in accordance with the properties of the liquid crystal display panel. Therefore, easy-to-see display can be realized.

The present embodiment is set such that the first tone output value (that is, the dark display) is set when the original display data piece is 00b, and the fourth tone output value (that is, the bright display) is set when the original display data piece is 11b. However, the present embodiment may be set such that the fourth tone output value (that is, the bright display) is set when the original display data piece is 00b, the first tone output value (that is, the dark display) is set when the original display data piece is 11, and in accordance with these, the third tone output value is set when the original display data piece is 01b, and the second tone output value is set when the original display data piece is 10b. As above, the second and third tone output values are set so as to be visually the same as each other. However, those values may be set so as to be different from each other depending on the intended use. Also, regarding its setting method, those values may be set based on a value, such as a contrast value.

The controller 16 reads out the tone codes stored in the display memory 12 and converts the tone codes into the tone output values by using the tone conversion table stored in the tone conversion table storage portion 13. Then, the controller 16 drives the liquid crystal display panel 11 such that the liquid crystal display panel 11 performs display based on the tones corresponding to the tone output values.

According to the above configuration, to the plurality of data input terminals D0 to D15 of the liquid crystal display driver 10, the display data pieces (two bits × three segments) are transmitted through the display data output terminals P0 to P5 of the microcomputer 9, and the predetermined fixed values are transmitted through the plurality of operation code output terminals C02 to C05, C10 to C12, and C15 to C17 to which the display data output terminals P0 to P5 of the microcomputer 9 are not commonly connected. Then, the liquid crystal display driver 10 which has received the display data pieces and the fixed values allocates the display data pieces, output through the display data output terminals P0 to P5, to at least two bits of the tone code and allocates the fixed values to the other bits of the tone code. With this, the tone code which can be processed by the liquid crystal display driver 10, contains predetermined three or more bits (five bits), and is the multiple-tone display data piece can be easily created in a short period of time. Therefore, without providing any special circuit configured to perform the bit extension, the bit extension processing can be quickly performed to perform four-tone gray scale display corresponding to the low-tone (two-bit four-tone) display data piece by using the general-purpose the liquid crystal display driver 10 configured to operate based on the multiple-tone display data pieces each containing tones corresponding to plural bits. With this, the display data row stored in the display memory 12 of the liquid crystal display driver 10 is 128 × 240 × 5 bits whereas the display data row stored in the tone display data storage portion 17 of the microcomputer 9 is minimum necessary. For example, in the case of two bits, that is, four tones, the display data row stored in the tone display data storage portion 17 of the microcomputer 9 is just 128 × 240 × 2 bits (128 × 60 bytes), that is, 2/5 of the display data row stored in the display memory 12. Therefore, the processing can be adequately quickly performed by a conventional microcomputer used in a remote controller or operating portion of an apparatus and configured to perform mode switching processing, buzzer generating processing, voice processing, communication processing, and the like.

In the present embodiment, six bits of the display data pieces corresponding to three display dots can be simultaneously output from the microcomputer 9 including the output terminals C00 to C07 and C10 to C17 corresponding to 16 bits, and three tone codes corresponding to respective display dots can be created simultaneously. Therefore, the processing is simple, and a data transmission time can be further shortened.

In the present embodiment, each of the tone codes (tone codes generated at the time of the occurrence of error) other than the tone codes to be generated is associated with the tone output value corresponding to the bit (the zeroth bit and the first bit in the present embodiment) which changes even when no error has occurred. To be specific, the tone output value is associated with the 0/52 level when the zeroth bit and the first bit are 00b, the tone output value is associated with the 22/52 level when the zeroth bit and the first bit are 01b, the tone output value is associated with the 30/52 level when the zeroth bit and the first bit are 10b, and the tone output value is associated with the 52/52 level when the zeroth bit and the first bit are 11b.

However, the present invention is not limited to this. For example, each of all the tone output values set to the tone codes other than the tone codes to be generated may be associated with the 52/52 level, the 0/52 level, or a level most suitable for the intended use.

In a case where the tone output value corresponding to a case where the value of the two-bit display data piece is 00b (minimum data piece) is the first tone output value, and the tone output value corresponding to a case where the value of the two-bit display data piece is 11b (maximum data piece) is the fourth tone output value, the first tone output value may be larger or smaller than the fourth tone output value. To be specific, in a case where the first tone output value corresponding to 00b that is the value of the two-bit display data piece is larger than the fourth tone output value corresponding to 11b that is the value of the two-bit display data piece, portions around images, such as letters, whose display data values are larger are brighter than the images, that is, reversed display (negative display) is realized. In contrast, in a case where the first tone output value corresponding to 00b that is the value of the two-bit display data piece is smaller than the fourth tone output value corresponding to 11b that is the value of the two-bit display data piece, the portions around the images, such as letters, whose display data values are larger are darker than the images, that is, non-reversed display (positive display) is realized. As a matter of course, generally, the second and third tone output values are set in accordance with a magnitude relation between the first and fourth tone output values. However, for the purpose of obtaining a special effect, the magnitude relation among the first to fourth tone output values may be set randomly.

Each of all the fixed values output through the operation code output terminals C02 to C05, C10 to C12, and C15 to C17 of the microcomputer 9 may be 0 or may be 1. Moreover, both 0 and 1 may be output as long as the output pattern is predetermined for each segment. This can be realized by, for example, setting each of the fixed values of the operation code output terminals C03, C11, and C16 to 0, setting each of the fixed values of the operation code output terminals C02, C04, C10, C12, C15, and C17 to 1, associating the tone code 10100b with the first tone output value (0/52 level), associating the tone code 10101b with the first tone output value (22/52 level), associating the tone code 10110b with the first tone output value (30/52 level), and associating the tone code 10111b with the fourth tone output value (52/52 level).

In the present embodiment, the microcomputer 9 includes eight output terminals P0 to P7 including the display data output terminals P0 to P5. Among the eight output terminals P0 to P7, each of the output terminals P6 and P7 other than the display data output terminals P0 to P5 is in a non-connection state where no data piece is input.

Further, the microcomputer 9 is configured to: allocate eight low order bits of the display data pieces in the display data row to eight output terminals P0 to P7 such that six low order bits of the display data pieces in the eight low order bits of the display data pieces are output through the display data output terminals P0 to P5, the display data row being configured by a plurality of display data pieces stored in the display image data area of the tone display data storage portion 17, and output the display data pieces; and at the time of a next output, again allocate the display data row except for the display data pieces having been output through the display data output terminals P0 to P5 such that six low order bits of the display data pieces in the display data row are output through the display data output terminals P0 to P5.

The following will explain a procedure in which the microcomputer 9 transmits the display data pieces stored in the display image data area of the tone display data storage portion 17 in the image display device of the present embodiment. Control regarding data transmission and reception between the microcomputer 9 and the liquid crystal display driver 10 and setting of the tone conversion table are known technologies and are not directly related to the present invention, so that detailed explanations thereof are omitted in the present embodiment.

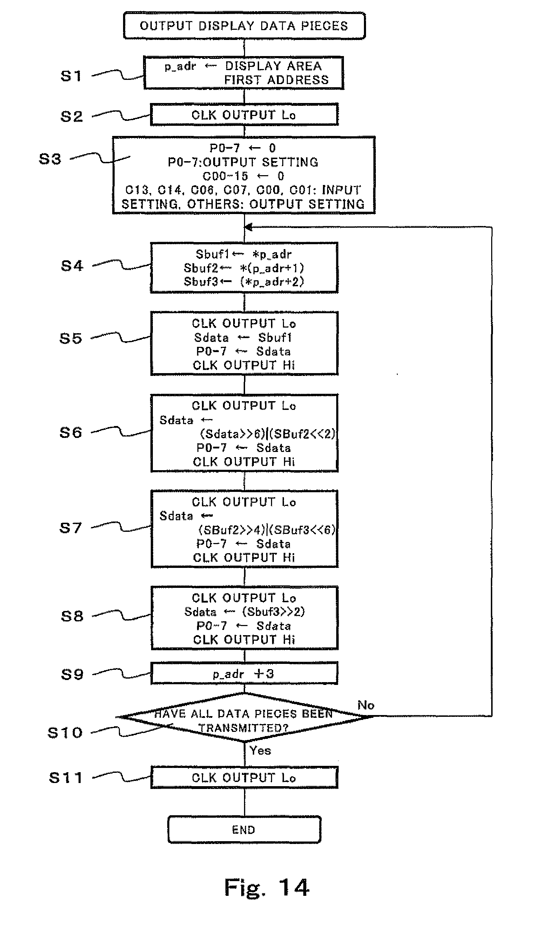

Fig. 14 is a flow chart showing display data piece output processing in the image display device shown in Fig. 10. First, the microcomputer 9 stores as a pointer p_adr a first address of the two-bit four-tone gray scale display data row stored in the display image data area of the tone display data storage portion 17 (Step S1). Next, the microcomputer 9 sets the output level of the clock terminal CLK that is the control terminal to the low level (Step S2).

The microcomputer 9 sets each of the outputs of the output terminals P0 to P7 to 0, and then sets each of the output terminals P0 to P7 to the output state. Next, the microcomputer 9 sets each of the outputs of the operation code output terminals C00 to C07 and C10 to C 17 to 0. Then, the microcomputer 9 sets each of the operation code output terminals C13, C14, C06, C07, C00, and C01 to the high impedance state (input state) and sets each of the other operation code output terminals C15 to C 17, C10 to C12, and C02 to C05 to the output state (Step S3).

Next, the microcomputer 9 reads out the first address stored as the pointer p_adr and reads out three bytes of the display data row from the first address. The three bytes of the display data row are temporarily stored in transmitter buffers Sbuf1, Sbuf2, and Sbuf3 such that one byte is stored in each buffer (Step S4).

Then, while maintaining the low level of the output level of the clock terminal CLK, the microcomputer 9 sets the transmitter buffer Sbuf1 corresponding to the first byte to send data Sdata. The microcomputer 9 outputs respective display data pieces of the send data Sdata to the output terminals P0 to P7. Then, when the microcomputer 9 transitions the output level of the clock terminal CLK to the high level, the liquid crystal display driver 10 retrieves the display data pieces, corresponding to three display dots (six bits), output through the display data output terminals P0 to P5 connected to the data input terminals D0, D1, D6, D7, D11, and D12 of the liquid crystal display driver among the output terminals P0 to P7 (Step S5). The liquid crystal display driver 10 generates three tone codes from the display data pieces corresponding to three display dots as described above and stores the three tone codes in corresponding addresses of the display memory 12.

Then, the microcomputer 9 again transitions the output level of the clock terminal CLK to the low level and shifts the display data pieces set in the send data Sdata to the right by six bits. Here, shifting the data pieces to the right denotes that by shifting the send data Sdata to the low order bit side, the display data pieces except for the display data pieces having been output through the display data output terminals P0 to P5 in Step S5 are moved up to the least significant bit of the send data Sdata. Then, to set the next data pieces in six empty high order bits of the send data Sdata, the display data pieces of the transmitter buffer Sbuf2 of the second byte are shifted to the left by two bits, and the resultant data pieces are ORed with the send data Sdata. The obtained data pieces are set in the send data Sdata. When the shift processing has been performed, each of six high order bits of the send data Sdata and two low order bits of the transmitter buffer Sbuf2 having been shifted to the left by two bits is 0. Therefore, in the send data Sdata, the remaining two bits of the first transmission are set in the low order bit side, and the six bits of the next data pieces are set in the high order bit side. Then,the microcomputer 9 outputs respective display data pieces of the newly set send data Sdata to the output terminals P0 to P7. When the microcomputer 9 transitions the output level of the clock terminal CLK to the high level, the liquid crystal display driver 10 retrieves the display data pieces, corresponding to the next three display dots (six bits), output through the display data output terminals P0 to P5 connected to the data input terminals D0, D1, D6, D7, D11, and D12 of the liquid crystal display driver among the output terminals P0 to P7 (Step S6). In this case, when the liquid crystal display driver 10 stores in the display memory 12 the tone codes generated from the display data pieces, the liquid crystal display driver 10 shifts the address by three display dots and then stores the tone codes.

Next, the microcomputer 9 again transitions the output level of the clock terminal CLK to the low level and sets in the send data Sdata the OR of the data pieces obtained by shifting the transmitter buffer Sbuf2 of the second byte to the right by four bits and the data pieces obtained by shifting the transmitter buffer Sbuf3 of the third byte to the left by six bits. Thus, the next send data is prepared in six low order bits of the send data Sdata. Then, the microcomputer 9 outputs respective display data pieces of the send data Sdata to the output terminals P0 to P7. When the microcomputer 9 transitions the output level of the clock terminal CLK to the high level, the liquid crystal display driver 10 retrieves the display data pieces, corresponding to the next three display dots (three bits), output through the display data output terminals P0 to P5 (Step S7). Again, when the liquid crystal display driver 10 stores in the display memory 12 the tone codes generated from the display data pieces, the liquid crystal display driver 10 shifts the address by three display dots and then stores the tone codes.

Then, the microcomputer 9 again transitions the output level of the clock terminal CLK to the low level and set in the send data Sdata the data pieces obtained by shifting the transmitter buffer Sbuf3 of the third byte to the right by two bits. Thus, the last display data pieces, corresponding to three dots, among three bytes (12 dots) set in the transmitter buffers Sbuf1 to Sbuf3 are prepared in six low order bits of the send data Sdata. Then, the microcomputer 9 outputs respective display data pieces of the send data Sdata to the output terminals P0 to P7. When the microcomputer 9 transitions the output level of the clock terminal CLK to the high level, the liquid crystal display driver 10 retrieves the display data pieces, corresponding to the next three display dots (three bits), output through the display data output terminals P0 to P5 (Step S8). Again, when the liquid crystal display driver 10 stores in the display memory 12 the tone codes generated from the display data pieces, the liquid crystal display driver 10 shifts the address by three display dots and then stores the tone codes.

Next, the microcomputer 9 shifts the pointer p_adr by three bytes to set the least significant bit of the display data row of the fourth byte as the first address (Step S9).

Next, the microcomputer 9 determines whether or not the number of transmitted display data pieces has reached the number of all the display data pieces (Step S10). Specifically, the microcomputer 9 determines whether or not a value obtained by subtracting the first address of the display data row from the number of data pieces indicated by the pointer p_adr is equal to or higher than a predetermined number of data pieces (7,680 in the present embodiment including 7,680 bytes (128 bits x 60 bytes) of the display data pieces). When the number of transmitted display data pieces has not yet reached the number of all the display data pieces (No in Step S 10), Steps S4 to S9 are repeated. When the number of transmitted display data pieces has reached the number of all the display data pieces (Yes in Step S 10), the microcomputer 9 sets the output level of the clock terminal CLK to the low level (Step S11) and terminates the transmission processing.

As above, regardless of the number of bits of the display data pieces actually transmitted to the liquid crystal display driver 10, the microcomputer 9 reads out the display data pieces in units of eight bits (one byte) from the display data row stored in the tone display data storage portion 17 and allocates eight bits of the display data pieces to eight output terminals P0 to P7. At this time, each of the output terminals P6 and P7 through which the display data pieces other than the display data pieces actually transmitted to the liquid crystal display driver 10b are output is in the non-connection state. Therefore, without performing any special mask processing, a required number of bits of the display data pieces can be easily, quickly transmitted to the liquid crystal display driver 10.

Further, the microcomputer 9 of the present embodiment is configured to: read out (3 x n) bytes (n = 1 in the present embodiment) of the display data pieces from the display data row configured by a plurality of display data pieces stored in the display image data area of the tone display data storage portion 17; and sequentially output the read display data pieces through the display data output terminals P0 to P5 while shifting the read display data pieces by six bits each time. With this, the number of bits of the display data pieces to be read out becomes an integral multiple of a least common multiple of the number of bits (six bits) of the display data pieces transmitted from the microcomputer 9 to the liquid crystal display driver 10 and the number of bits (eight bits) of the display data pieces output through the output terminals P0 to P7. Therefore, the transmission processing of the display data pieces can be performed based on the repetition mode (Steps S4 to S9) in which three three-bit shift processing are performed and the data pieces are output four times as one cycle. In addition, the number of times of termination determination (Step S10) performed in each cycle can be reduced to 1/4. Therefore, the amount of calculations of the processing can be reduced, and the processing time can be shortened.

In the present embodiment, the transmission of the data pieces is started from the low order bit of the display data row. However, the present embodiment is not limited to this, and the transmission of the data pieces may be started from the high order bit of the display data row.

The present embodiment has explained the configuration in which six bits of the data pieces are output in units of four times through the display data output terminals P0 to P7 (eight terminals). However, the present embodiment may be configured such that: the display data pieces, the number of bits of which is an integral multiple of a least common multiple of (m × 8) and (k × 3), are read out from the display data row through (m × 8) output terminals including (k × 3) display data output terminals, the display data row being configured by a plurality of k-bit tone gray scale display data pieces stored in the display image data area of the tone display data storage portion 17, (m × 8) being equal to or larger than (k × 3), being an integral multiple of eight, and being a minimum number; and the read display data pieces are sequentially output through the display data output terminals while shifting the read display data pieces by (k × 3) bits. Even in this case, the same effects as above can be obtained. To be specific, the number of bits of display data pieces to be read out becomes an integral multiple of a least common multiple of the number of bits (k × three bits) of the display data pieces transmitted from the microcomputer 9 to the liquid crystal display driver 10 and the number of bits (m × eight bits) of the display data pieces output through the output terminals. Thus, the transmission processing of the display data pieces can be performed based on the repetition mode, the amount of calculations of the processing can be reduced, and the processing time can be shortened.

### Embodiment 2

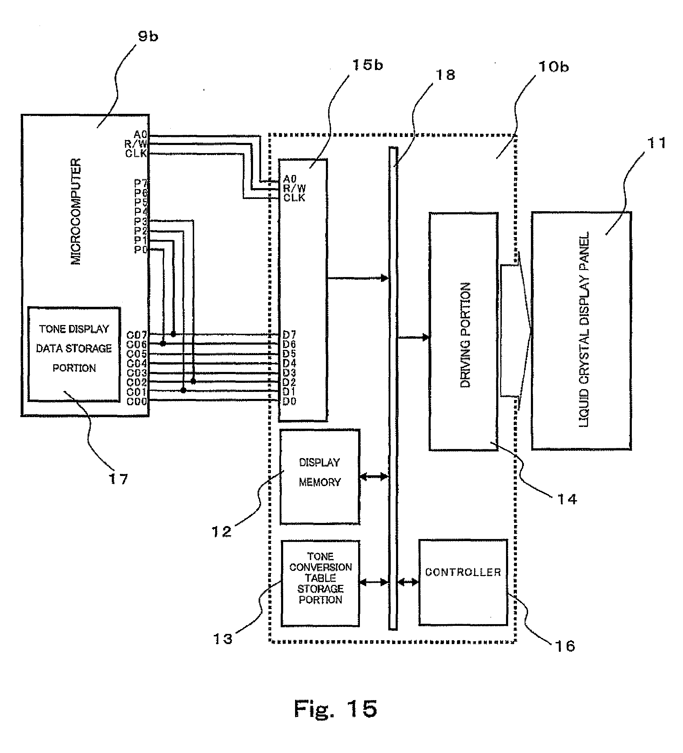

Next, the image display device according to Embodiment 2 of the present invention for performing display based on the multiple-tone output values that are the three-tone output values or more will be explained. Fig. 15 is a schematic circuit diagram showing the image display device of Embodiment 2 of the present invention for performing display based on the multiple-tone output values that are the three-tone output values or more. In the present embodiment, the same reference signs are used for the same components as in Embodiment 1, and explanations thereof are omitted.

The present embodiment is different from Embodiment 1 in that: the microcomputer 9b includes eight operation code output terminals C00 to C07 and four display data output terminals P0 to P3 and outputs the display data pieces in units of four bits through the four display data output terminals P0 and P3; and the controller 16 is configured to create five-bit tone codes, corresponding to two display dots, from eight bits of the display data pieces obtained by the consecutive outputs of four bits of the display data pieces through the four display data output terminals P0 to P3, the five-bit tone codes each being configured by two bits of the display data pieces and three bits of the fixed values, and also create a five-bit tone code corresponding to one display dot, the five-bit tone code being configured by four bits of the display data pieces transmitted different time through the display data output terminals P0 to P3 and one bit of the fixed value.

Correspondingly, an interface 15b of a liquid crystal display driver 10b includes eight data input terminals D0 to D7 through which the operation codes and the display data pieces are retrieved. As with Embodiment 1, the interface 15b includes the control terminals A0, R/W, and CLK configured to control input and output of data pieces. To be specific, in the present embodiment, the liquid crystal display driver 10b can be configured by switching the mode (16 bit mode) of the liquid crystal display driver 10b of Embodiment 1 to an eight bit mode.

In the present embodiment, the display data output terminals P0 and P1 are respectively connected to the data input terminals D6 and D7, and the display data output terminals P2 and P3 are respectively connected to the data input terminals D1 and D2. To be specific, the operation code output terminals C06 and C07 are respectively, commonly connected to the display data output terminals P0 and P1, and the operation code output terminals C01 and C02 are respectively, commonly connected to the display data output terminals P2 and P3.

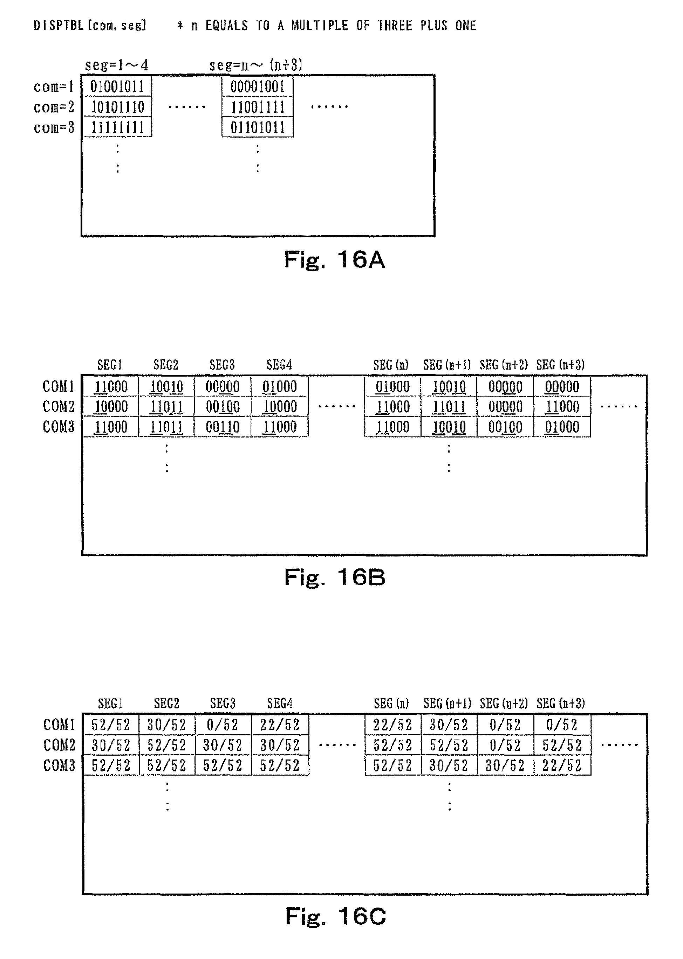

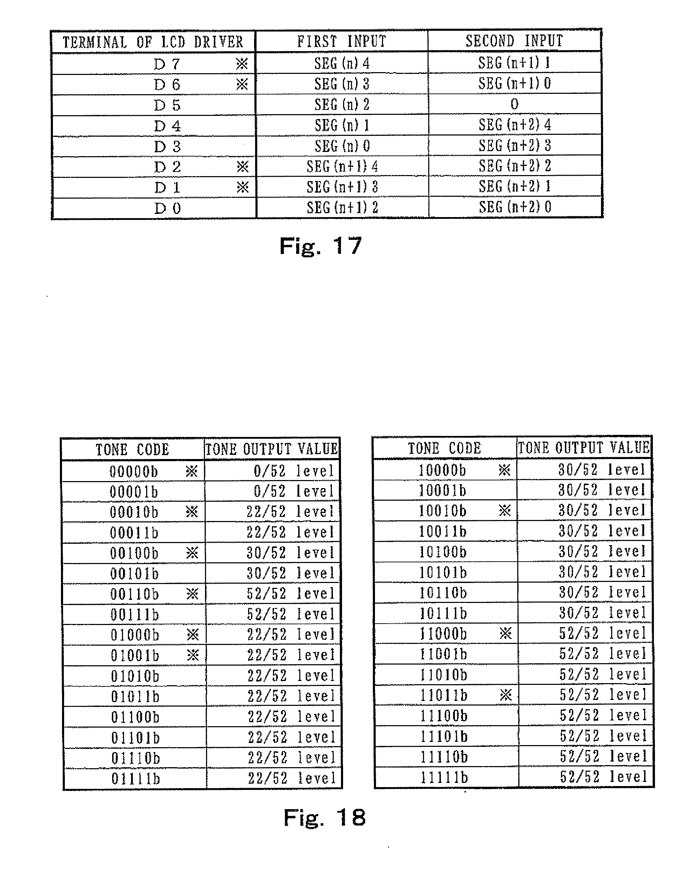

Fig. 16A is a diagram showing an example of the display data row stored in the tone display data storage portion of the microcomputer of the image display device shown in Fig. 15. Fig. 16B is a diagram showing an example of the display data row stored in the display memory of the liquid crystal display driver of the image display device shown in Fig. 15. Fig. 16C is a diagram showing an example of the tone output values for driving respective dots of the liquid crystal display panel shown in Fig. 15. Fig. 17 is a diagram showing an example of the assignments of the data terminals of the liquid crystal display driver 10b of the image display device shown in Fig. 15.

As shown in Fig. 17, in the present embodiment, the display data pieces are retrieved twice consecutively through the plurality of data input terminals D0 to D7. Then, the retrieved display data pieces (16 bits) are associated with three segments SEG(n), SEG(n+1), and SEG(n+2), and by the two consecutive data retrieving through the data input terminals D0 to D7, the display data pieces are assigned to two or four of five bits in each segment, the five bits being obtained by the bit extension. Specifically, the data pieces input to the data input terminals D7 to D3 in the first data retrieving respectively denote the fourth bit to zeroth bit of the segment SEG(n), the data pieces input to the data input terminals D2 to D0 in the first data retrieving and the data pieces input to the data input terminals D7 to D6 in the second data retrieving respectively denote the fourth bit to zeroth bit of the segment SEG(n+1), and the data pieces input to the data input terminals D4 to D0 in the second data retrieving respectively denote the fourth bit to zeroth bit of the segment SEG(n+2). As with Embodiment 1, among the data input terminals D0 to D7, the data input terminal D5 in the second data retrieving is an excess input terminal and is not used. In the present embodiment, how to assign the data pieces to the segments is not limited to the above and may be set variously, preferably.

As described above, the display data output terminals P0 and P1 are respectively connected to the data input terminals D6 and D7, and the display data output terminals P2 and P3 are respectively connected to the data input terminals D1 and D2. The display data pieces are output in units of four bits through four display data output terminals P0 to P3. With this, the display data pieces are input to the data input terminals D6, D7, D1, and D2, and the fixed values (0) are input to the other data input terminals D0 and D3 to D5. Therefore, among the data pieces input to the liquid crystal display driver 10b, only the third bit and fourth bit of the first segment SEG(n), the third bit, fourth bit, zeroth bit, and first bit of the second segment SEG(n+1), and the first bit and second bit of the third segment SEG(n+2) change (only the bits shown by * in Fig. 17 change), and the other bits are the fixed values (0).

Thus, the controller 16 of the liquid crystal display driver 10b retrieves the data pieces for respective segments in accordance with the above assignments from the data pieces input to the data input terminals D0 to D7. With this, the controller 16 creates the five-bit tone codes, corresponding to two display dots, from eight bits of the display data pieces (as described below, four of these eight bits of the display data pieces are the same as each other) transmitted through the four display data output terminals P0 to P3 in twice, the five-bit tone codes each being configured by two bits of the display data pieces and three bits of the fixed values. In addition, the controller 16 creates the five-bit tone code corresponding to one display dot, the five-bit tone code being configured by four bits of the display data pieces transmitted different time through the display data output terminals P0 to P3 and one bit of the fixed value. With this, the controller 16 creates the tone codes corresponding to three segments in total. In the present embodiment, the five-bit multiple-tone display data pieces (tone codes) are stored in the display memory 12 as shown in Fig. 16B.

Fig. 18 is a diagram showing one setting example of the tone conversion table of the liquid crystal display driver of the image display device shown in Fig. 15.

As shown in Fig. 18, the tone conversion table of the present embodiment is set such that: among the stored tone codes, the tone code (00000b in the present embodiment) containing the display data piece indicating the first tone output value corresponds to the first tone output value (0/52 level in the present embodiment); among the stored tone codes, the tone code (00010b, 01000b, and 01001b in the present embodiment) containing the display data piece indicating the second tone output value corresponds to the second tone output value (22/52 level); among the stored tone codes, the tone code (00100b, 10000b, and 10010b in the present embodiment) containing the display data piece indicating the third tone output value corresponds to the third tone output value (30/52 level); and among the stored tone codes, the tone code (00110b, 11000b, and 11011b in the present embodiment) containing the display data piece indicating the fourth tone output value corresponds to the fourth tone output value (52/52 level).

As described above, among the data pieces input to the liquid crystal display driver 10b, only the third bit and fourth bit of the first segment SEG(n), the zeroth bit, first bit, third bit, and fourth bit of the second segment SEG(n+1), and the first bit and second bit of the third segment SEG(n+2) change (each becomes 0 or 1), and the other bits are the fixed values (0). In addition, at the time of the second (second-half) data transmission of the two consecutive data transmissions, the display data row is shifted to the right by two bits with respect to the display data row at the time of the first data transmission as described below. Therefore, the values of the zeroth bit, first bit, third bit, and fourth bit of the second segment SEG(n+1) become the same as one another. On this account, the generated tone code becomes 00000b, 00010b, 00100b, 00110b, 01000b, 0T001b, 10000b, 10010b, 11000b, or 11011b (only the tone codes shown by * in Fig. 18 are generated), and the other tone codes are not generated in principle. Thus, by associating 00000b with the first tone output value, associating each of 00010b, 01000b, and 01001b with the second tone output value, associating each of 00100b, 10000b, and 10010b with the third tone output value, and associating each of 00110b, 11000b, and 11011b with the fourth tone output value, two-bit four-tone gray scale display based on the original two-bit display data pieces can be performed. However, since the other tone codes may be mistakenly generated by the influence of noises, the other tone codes (tone codes generated at the time of the occurrence of error) are also associated with the tone output values which do not influence on the images displayed on the liquid crystal display panel 11.

In the present embodiment, the four tone display is realized by setting higher output values sequentially from the first tone output value (dark display) to the fourth tone output value (bright display) in this order. In addition, in the tone conversion table of the present embodiment, the first tone output value is set to the 0/52 level (black display) that is a minimum value, and the fourth tone output value is set to the 52/52 level (white display) that is a maximum value. Therefore, the contrast of the image displayed on the liquid crystal display panel 11 can be maximized, and easy-to-see display can be realized. The present embodiment is set such that: the first tone output value (that is, the bright display) is set when the original display data piece is 00b; the second tone output value is set when the original display data piece is 01b; the third tone output value is set when the original display data piece is 10b; and the fourth tone output value (that is, the dark display) is set when the original display data piece is 11b. However, the present embodiment may be set such that: the fourth tone output value (that is, the dark display) is set when the original display data piece is 00b; the third tone output value is set when the original display data piece is 01b; the second tone output value is set when the original display data piece is 10b; and the first tone output value (that is, the bright display) is set when the original display data piece is 11b.

According to the above configuration, even in a case where there is no extra output terminals (operation code output terminals) of the microcomputer 9b, three tone codes corresponding to three display dots can be created by two data transmissions based on three bits of the display data pieces corresponding to three display dots. Therefore, the processing is simple, the data transmission time can be further shortened, and such configuration is applicable to display devices of various apparatuses.

Each of all the fixed values output through the operation code output terminals C00, and C03 to C05 of the microcomputer 9b may be 0 or may be 1. Moreover, both 0 and 1 may be output as long as an exclusive output pattern is predetermined for each segment.

In the present embodiment, the microcomputer 9b includes eight output terminals P0 to P7 including the display data output terminals P0 to P3. Among the eight output terminals P0 to P7, each of the output terminals P4 to P7 other than the display data output terminals P0 to P3 is in the non-connection state where no data piece is input.

Further, the microcomputer 9b is configured to: at the time of the first output of the two consecutive outputs, allocate eight low order bits of the display data pieces of the display data row to eight output terminals P0 to P7 such that four low order bits of the display data pieces in the eight low order bits of the display data pieces are output through the display data output terminals P0 to P3, the display data row being configured by a plurality of display data pieces stored in the display image data area of the tone display data storage portion 17, and output the display data pieces; at the time of the second output, again allocate the display data row except for the two low order bits of the display data pieces among the display data pieces having been output through the display data output terminals P0 to P3 at the time of the first output such that four low order bits of the display data pieces in the display data row are output through the display data output terminals P0 to P3, and output the display data pieces; and at the time of the first output of the next two consecutive outputs, again allocate the display data row except for the display data pieces having been output through the display data output terminals P0 to P3 at the time of the previous output such that four low order bits of the display data pieces in the display data row are output through the display data output terminals.

The following will explain a procedure in which the microcomputer 9b transmits the display data pieces stored in the display image data area of the tone display data storage portion 17 in the image display device of the present embodiment.

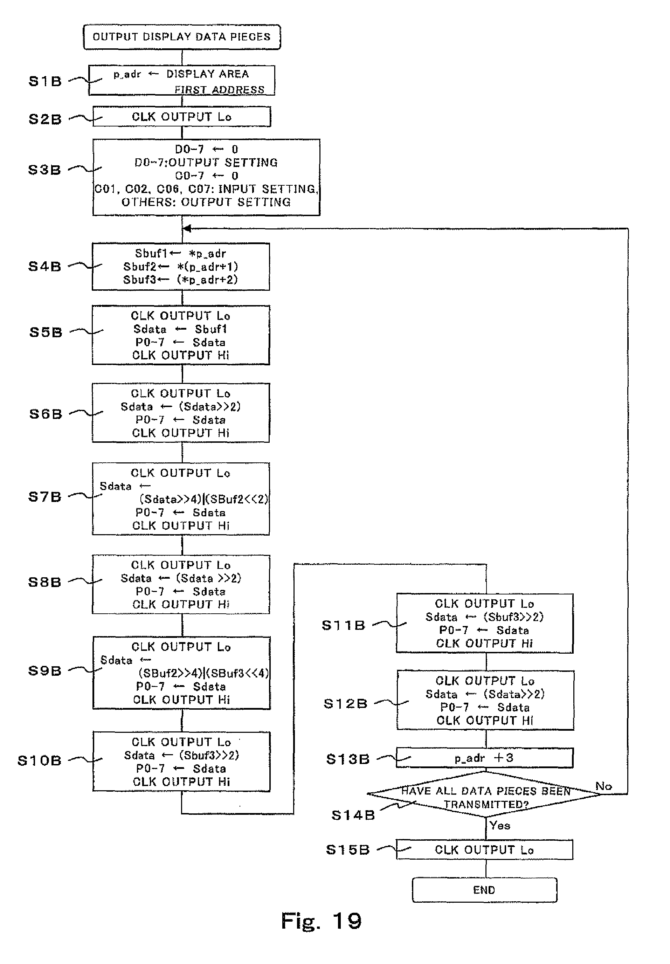

Fig. 19 is a flow chart showing the display data piece output processing in the image display device shown in Fig. 15. First, the microcomputer 9b stores as the pointer p_adr the first address of the display data row of the two-bit four-tone gray scale display values stored in the display image data area of the tone display data storage portion 17 (Step S1B). Next, the microcomputer 9b sets the output level of the clock terminal CLK that is the control terminal to the low level (Step S2B).

The microcomputer 9b sets each of the outputs of the output terminals P0 to P7 to 0, and then sets each of the output terminals P0 to P7 to the output state. Next, the microcomputer 9b sets each of the outputs of the operation code output terminals C0 to C7 to 0. Then, the microcomputer 9b sets each of the operation code output terminals C01, C02, C06, and C07 to the high impedance state (input state) and sets each of the other operation code output terminals C01, and C3 to C5 to the output state (Step S3B).

Next, the microcomputer 9b reads out the first address stored as the pointer p_adr and reads out three bytes of the display data row from the first address. The three bytes of the display data row are temporarily stored in the transmitter buffers Sbuf1, Sbuf2, and Sbuf3 such that one byte is stored in each buffer (Step S4B). Then, while maintaining the low level of the output level of the clock terminal CLK, the microcomputer 9b sets the transmitter buffer Sbuf1 corresponding to the first byte to the send data Sdata. The microcomputer 9b outputs respective display data pieces of the send data Sdata to the output terminals P0 to P7. Then, when the microcomputer 9b transitions the output level of the clock terminal CLK to the high level, the liquid crystal display driver 10b retrieves the display data pieces, corresponding to two display dots (four bits), output through the display data output terminals P0 to P3 connected to the data input terminals D1, D2, D6, and D7 of the liquid crystal display driver among the output terminals P0 to P7, and performs the first assignment (Step S5B).

Then, the microcomputer 9b again transitions the output level of the clock terminal CLK to the low level and shifts the display data pieces set in the send data Sdata to the right by two bits (shift to the low order bit side). Then, the microcomputer 9b outputs respective display data pieces of the newly set send data Sdata to the output terminals P0 to P7. Since the display data pieces of the send data Sdata are reduced by two bits, 0 is output to each of the output terminals P6 and P7. However, this does not cause any problem since the output terminals P6 and P7 are in the non-connection state. In addition, since the high order display data pieces among the display data pieces having been transmitted in Step S5B are transmitted again, the values of the display data pieces assigned to the third bit, fourth bit, zeroth bit, and first bit of the second segment SEG(n+1) become the same as each other. When the microcomputer 9b transitions the output level of the clock terminal CLK to the high level, the liquid crystal display driver 10b retrieves the display data pieces, corresponding to two display dots (four bits), output through the display data output terminals P0 to P3 connected to the data input terminals D1, D2, D6, and D7 among the output terminals P0 to P7, and performs the second assignment (Step S6B). The liquid crystal display driver 10b generates three tone codes from the display data pieces corresponding to three display dots (one of three display data pieces is common between the first assignment and the second assignment) based on the first assignment and the second assignment as described above, and stores the tone codes in corresponding addresses of the display memory 12.

Next, the microcomputer 9b again transitions the output level of the clock terminal CLK to the low level and shifts the display data pieces set in the send data Sdata to the right by four bits. In this state, since only two bits remains in the send data Sdata, the send data Sdata is ORed with the values obtained by shifting the data pieces of the transmitter buffer Sbuf2 as the next data pieces to the left by two bits. Then, the microcomputer 9b outputs respective display data pieces of the newly set send data Sdata to the output terminals P0 to P7. Next, when the microcomputer 9b transitions the output level of the clock terminal CLK to the high level, the liquid crystal display driver 10b retrieves the display data pieces, corresponding to two display dots (four bits), output through the display data output terminals P0 to P3 connected to the data input terminals D1, D2, D6, and D7 among the output terminals P0 to P7, and performs the first assignment (Step S7B).

Then, as with Step S6B, the microcomputer 9b shifts the display data pieces set in the send data Sdata to the right by two bits, transmits the display data pieces, corresponding to two display dots (two bits), output through the display data output terminals P0 to P3 to the liquid crystal display driver 10b, and transitions the output level of the clock terminal CLK to cause the liquid crystal display driver 10b to perform the second assignment (Step S8B). The liquid crystal display driver 10b generates three tone codes from the display data pieces corresponding to three display dots based on the first assignment (Step S7B) and the second assignment (Step S8B) and stores the tone codes in corresponding addresses of the display memory 12.

Next, the microcomputer 9b sets in the send data Sdata the OR of the values obtained by shifting the data pieces of the transmitter buffer Sbuf2 to the right by four bits and the values obtained by shifting the data pieces of the transmitter buffer Sbuf3 to the left by four bits. Next, the microcomputer 9b outputs respective display data pieces of the newly set send data Sdata to the output terminals P0 to P7 and transitions the output level of the clock terminal CLK to the high level. With this, the microcomputer 9b transmits the display data pieces, corresponding to two display dots (four bits), through the display data output terminals P0 to P3 to the liquid crystal display driver 10b and causes the liquid crystal display driver 10b to perform the first assignment (Step S9B).

Then, the microcomputer 9b again transitions the output level of the clock terminal CLK to the low level and shifts the display data pieces set in the send data Sdata to the right by two bits. Then, the microcomputer 9b outputs respective display data pieces of the send data Sdata to the output terminals P0 to P7. When the microcomputer 9b transitions the output level of the clock terminal CLK to the high level, the liquid crystal display driver 10b retrieves the display data pieces, corresponding to two display dots (four bits), output through the display data output terminals P0 to P3 and performs the second assignment (Step S10B). The liquid crystal display driver 10b generates three tone codes from the display data pieces corresponding to three display dots based on the first assignment (Step S9B) and the second assignment (Step S10B) and stores the tone codes in corresponding addresses of the display memory 12.

Then, the microcomputer 9b again transitions the output level of the clock terminal CLK to the low level and sets in the send data Sdata the values obtained by shifting the data pieces of the transmitter buffer Sbuf3 to the right by two bits. Then, the microcomputer 9b outputs the display data pieces of the send data Sdata to the output terminals P0 to P7. When the microcomputer 9b transitions the output level of the clock terminal CLK to the high level, the liquid crystal display driver 10b retrieves the display data pieces, corresponding to two display dots (four bits), output through the display data output terminals P0 to P3 and performs the first assignment (Step S11B).

Then, as with Step S6B, the microcomputer 9b shifts the display data pieces set in the send data Sdata to the right by two bits, transmits the display data pieces, corresponding to two display dots (four bits), output through the display data output terminals P0 to P3 to the liquid crystal display driver 10b, and transitions the output level of the clock terminal CLK to the high level to cause the liquid crystal display driver 10b to perform the second assignment (Step S12B). The liquid crystal display driver 10b generates three tone codes from the display data pieces corresponding to three display dots based on the first assignment (Step S11B) and the second assignment (Step S12B) and stores the tone codes in corresponding addresses of the display memory 12.

Next, the microcomputer 9b shifts the pointer p_adr by three bytes to set the least significant bit of the display data row of the fourth byte as the first address (Step S13B). Next, as with Embodiment 1, the microcomputer 9b determines whether or not the number of transmitted display data pieces has reached the number of all the display data pieces (Step S 14B). When the number of transmitted display data pieces has not yet reached the number of all the display data pieces (No in Step S14B), Steps S4B to S13B are repeated. When the number of transmitted display data pieces has reached the number of all the display data pieces (Yes in Step S14B), the microcomputer 9b sets the output level of the clock terminal CLK to the low level (Step S15B) and terminates the transmission processing.

As above, in the present embodiment, regardless of the number of bits of the display data pieces actually transmitted to the liquid crystal display driver 10b, the microcomputer 9b reads out the display data pieces in units of eight bits (one byte) from the display data row stored in the tone display data storage portion 17 and allocates eight bits of the display data pieces to the eight output terminals P0 to P7. At this time, each of the output terminals P4 to P7 through which the display data pieces other than the display data pieces actually transmitted to the liquid crystal display driver 10b are output is in the non-connection state. Therefore, without performing any special mask processing, a required number of bits of the display data pieces can be easily, quickly transmitted to the liquid crystal display driver 10b.

Further, the microcomputer 9b of the present embodiment is configured to: read out (3 × n) bytes (n = 1 in the present embodiment) of the display data pieces from the display data row in the two consecutive transmission processing, the display data row being configured by a plurality of display data pieces stored in the display image data area of the tone display data storage portion 17; and sequentially output the read display data pieces through the display data output terminals P0 to P3 while shifting the read display data pieces by predetermined bits each time. With this, the number of bits of the display data pieces to be read out becomes an integral multiple of a least common multiple of the number of bits (six bits) of the display data pieces transmitted from the microcomputer 9b to the liquid crystal display driver 10b in the two consecutive transmission processing and the number of bits (eight bits) of the display data pieces output through the output terminals P0 to P7. Therefore, the transmission processing of the display data pieces in units of three bytes can be performed based on the repetition mode (Steps S4B to S13B) in which eight bit shift processing including four-bit shift processing in the first assignment and two-bit shift processing in the second assignment are performed equivalently (to rationalize the processing, the actual processing is not simple shift processing) as one cycle. In addition, the number of times of termination determination (Step S14B) performed in each cycle can be reduced to 1/8. Therefore, the amount of calculations of the processing can be reduced, and the processing time can be shortened.

Since two (first-half and second-half) data transmissions are performed in the present embodiment, the time required is twice as long as that of Embodiment 1. However, since the number of operation code output terminals required in the microcomputer 9b in the present embodiment is half the number in Embodiment 1, the input and output terminals are used for the other functions. If 16 terminals cannot be used as the operation code output terminals or if the amount of calculations in the other functions is small and the processing time is enough, an inexpensive microcomputer in which the number of terminals is small can be used by realizing the configuration of the present embodiment.

The foregoing has explained the embodiment of the present invention configured to perform display based on the multiple-tone output values that are the three-tone output values or more. However, the present invention is not limited to the above embodiments, and various improvements, changes, and modifications may be made within the spirit of the present invention. For example, respective components in the above plurality of embodiments may be arbitrarily combined with one another.

Each of Embodiments 1 and 2 has explained an example in which the display data pieces are transmitted in units of three bytes, but the display data pieces may be transmitted in units of an integral multiple of three bytes. The processing time can be shortened as the number of bits (the number of bytes) of the display data pieces processed in one cycle increases.

Since each of Embodiments 1 and 2 has explained the liquid crystal display panel 11 of 128 × 240 dots, the number of bytes in one screen is 3,840 bytes which is a multiple of three. However, the present invention is also applicable to the liquid crystal display panel of, for example, 128 × 256 dots. Specifically, in this case, the number of bytes in one screen is 4,096 bytes which is a multiple of three plus one byte. The present invention can easily deal with this case without increasing the program size by performing in Fig. 14 Step S10, in which the termination determination is performed, after Step S6, in which the transmission of the first byte is completed.

Each of the above embodiments has been explained by using the liquid crystal display device as the image display device. However, the above embodiments are not limited to this. The image display device may be a device configured to display images by transmitting the display data pieces to a plurality of display dots. The image display device may be, for example, a display device using organic EL, a fluorescent display tube, or the like.

### 3. Image Display Device Configured to Perform Color Display

Next, a case where an image display device according to the present invention performs color display will be explained below using a plurality of embodiments.

### Embodiment 1

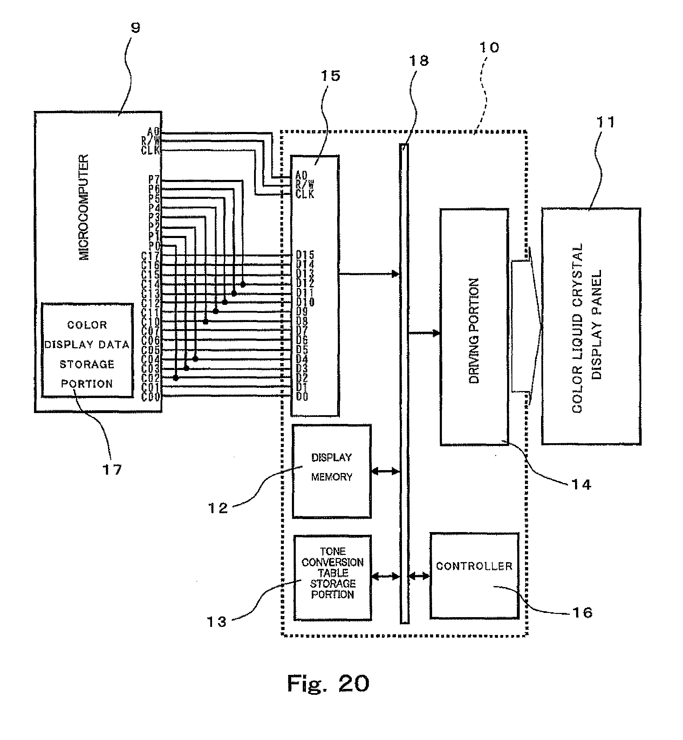

First, the image display device according to Embodiment 1 of the present invention for performing color display will be explained. Fig. 20 is a schematic circuit diagram showing the image display device in Embodiment 1 of the present invention for performing color display.

As shown in Fig. 20, the image display device according to the present embodiment includes: a color liquid crystal display panel 11 that is an image display panel in which display dots are arranged in a matrix; a color liquid crystal display (LCD) driver 10 that is an image display driver configured to drive the color liquid crystal display panel 11 such that the color liquid crystal display panel 11 performs display; a microcomputer 9 configured to transmit display data pieces to the liquid crystal display driver 10 and control the color liquid crystal display driver 10.

In the present embodiment, the color liquid crystal display panel 11 includes a display area of, for example, 128 × 256 dots.

The liquid crystal display driver 10 includes: an interface 15 including a plurality of data input terminals D0 to D15; a display memory 12 configured to store tone codes which are input through the plurality of data input terminals D0 to D15, correspond to respective display dots of the color liquid crystal display panel 11, correspond to three colors that are red (R), green (G), and blue (B), each contains five bits, and are color display data pieces; a tone conversion table storage portion 13 configured to store a tone conversion table configured to convert the tone codes into the tone output values corresponding to the tone display of the color liquid crystal display panel 11; and a controller 16 configured to set the tone conversion table in accordance with operation codes input through the plurality of data input terminals D0 to D15, read out the tone codes stored in the display memory 12, convert the tone codes into the tone output values by using the tone conversion table, and drive the color liquid crystal display panel 11 through a drive portion 14 such that the color liquid crystal display panel 11 performs display based on the tones corresponding to the tone output values. Each of the display memory 12 and the tone conversion table storage portion 13 is constituted by a storage portion, such as a RAM, provided in the liquid crystal display driver 10. The controller 16 is connected to respective components through a communication bus 18. The controller 16 stores the data pieces and operation codes, input through the interface 15, in the storage portions including the display memory 12 and the tone conversion table storage portion 13 and performs various calculations to control the driving portion 14.

In the present embodiment, to store the color display data pieces containing (five bits (32 tones) × 3 colors) bits per display dot of the color liquid crystal display panel 11, the display memory 12 includes a storage area of at least 128 × 256 × 5 × 3 bits.

The tone conversion table storage portion 13 sets and stores the tone conversion table in which 32 types of tone codes corresponding to five bits (32 tones) and the tone output values corresponding to the tone codes and indicating drive levels for applying voltages to respective display dots of the color liquid crystal display panel 11 are associated with each other.

The controller 16 sequentially reads out the tone codes stored in the display memory 12 and corresponding to respective display dots and converts the tone codes into the tone output values by using the tone conversion table stored in the tone conversion table storage portion 13. Based on the tone output values, the driving portion 14 controls the drive levels of the corresponding red (R), green (G), and blue (B) display dots and displays an image on the color liquid crystal display panel 11.

The data input terminals D0 to D15 provided in the interface 15 receive the display data pieces and operation codes transmitted from the microcomputer 9. Further, the interface 15 includes control terminals A0, R/W, and CLK configured to control input and output of data pieces, such as the display data pieces and the operation codes. For example, a clock terminal CLK that is the control terminal sets a timing at which the liquid crystal display driver 10 retrieves the display data pieces. To be specific, the liquid crystal display driver 10 is configured to retrieve the display data pieces when an input level of the clock terminal CLK transitions from a low level that is a first level to a high level that is a second level.

In the present embodiment, the microcomputer 9 includes: 16 operation code output terminals C00 to C07 and C10 to C17 which can be switched to the output state or the high impedance state and through which the operation codes are output to the liquid crystal display driver 10; and eight color display data output terminals P0 to P7 which are provided separately from the operation code output terminals and can be switched to the output state or the high impedance state and through which the color display data pieces of three colors that are red (R), green (G), and blue (B) are output.

The 16 operation code output terminals C00 to C07 and C10 to C17 are respectively connected to the data input terminals D0 to D15 of the liquid crystal display driver 10. Among the color display data output terminals P0 to P7, the color display data output terminals P6 and P7 through which two bits for the red (R) tone code are output are respectively connected to the data input terminals D11 and D12 corresponding to two low order bits of the red (R) five-bit tone code corresponding to the data input terminals D11 to D15 among the data input terminals D0 to D15 of the liquid crystal display driver 10, and in addition, the operation code output terminals C 13 and C14 are respectively connected to the data input terminals D11 and D12. Moreover, the color display data output terminals P3 to P5 through which three bits for the green (G) tone code are output are respectively connected to the data input terminals D8 to D10 corresponding to three high order bits of the green (G) five-bit tone code corresponding to the data input terminals D6 to D10 among the data input terminals D0 to D15 of the liquid crystal display driver 10 such that three bits of the green (G) and two bits of the red (R) connected on the low order bit side of the green (G) are exclusively arranged in terms of bits, and in addition, the operation code output terminals C10 to C12 are respectively connected to the data input terminals D8 to D10. Further, the color display data output terminals P0 to P2 through which three bits for the blue (B) tone code are output are respectively connected to the data input terminals D2 to D4 corresponding to three high order bits of the blue (B) five-bit tone code corresponding to the data input terminals D0 to D4 among the data input terminals D0 to D15 of the liquid crystal display driver 10 such that three bits of the blue (B) and two bits of the red (R) are exclusively arranged in terms of bits, and in addition, the operation code output terminals C02 to C04 are respectively connected to the data input terminals D2 to D4.

The microcomputer 9 also includes the control terminals A0, R/W, and CLK for data input-output control and controls data pieces input to and output from the liquid crystal display driver 10.

Further, the microcomputer 9 sets such that: one byte of the color display data pieces of three colors that are red (R), green (G), and blue (B) corresponds to one display dot of the color liquid crystal display panel 11; the red (R) tone code is assigned to two high order bits; the green (G) tone code is assigned to the next three bits; the blue (B) tone code is assigned to three low order bits; and these bits of the color display data pieces correspond to the color display data output terminals P0 to P7.

Further, the microcomputer 9 includes the color display data storage portion 17 including a color display image data area (128 × 256 bytes) configured to store the display dots of three colors that are red (R), green (G), and blue (B) as one byte of the color display data pieces. For example, the color display data storage portion 17 is constituted by a RAM. A display data row constituting image data pieces to be displayed on the color liquid crystal display panel 11 is created and stored in the display image data area provided in the color display data storage portion 17. The microcomputer 9 is configured to sequentially read out the display data row and repeatedly transmit the display data row to the liquid crystal display driver 10 to dynamically display predetermined images on the color liquid crystal display panel 11.

When the microcomputer 9 outputs the operation codes to the liquid crystal display driver 10, the microcomputer 9 sets each of the display data output terminals P0 to P7 to the high impedance state and then outputs the operation codes through the plurality of operation code output terminals C00 to C07 and C10 to C17. Here, setting each of the display data output terminals P0 to P7 to the high impedance state denotes that each of the display data output terminals P0 to P7 is electrically disconnected. Specifically, setting each of the display data output terminals P0 to P7 to the high impedance state is realized such that, for example, in a CMOS circuit in which direction registers and output terminals are connected to the display data output terminals P0 to P7, by setting an input mode in which each of a pair of output transistors is in an off state, the corresponding output terminal is set to a floating state.

As above, the display data output terminals P0 to P7 are set to the high impedance state. With this, when the operation codes are output through the operation code output terminals C00 to C07 and C10 to C17, short current is prevented from flowing to the display data output terminals P0 to P7 from the operation code output terminals (C02 to C04 and C10 to C14 in the present embodiment) commonly connected to the display data output terminals P0 to P7 among the operation code output terminals C00 to C07 and C10 to C 17, and port breakdown and malfunctions are prevented from occurring. In addition, the operation codes output through the operation code output terminals are prevented from being influenced by the flow of the short current from the display data output terminals P0 to P7 to the operation code output terminals.

Thus, by transmitting the operation codes from the microcomputer 9 to the liquid crystal display driver 10, the tone conversion table is set as described below and is stored in the tone conversion table storage portion 13, and the controller 16 drives the color liquid crystal display panel 11 based on the tone conversion table such that the color liquid crystal display panel 11 performs display through the driving portion 14 in accordance with the tone output values corresponding to the tone codes stored in the display memory 12.

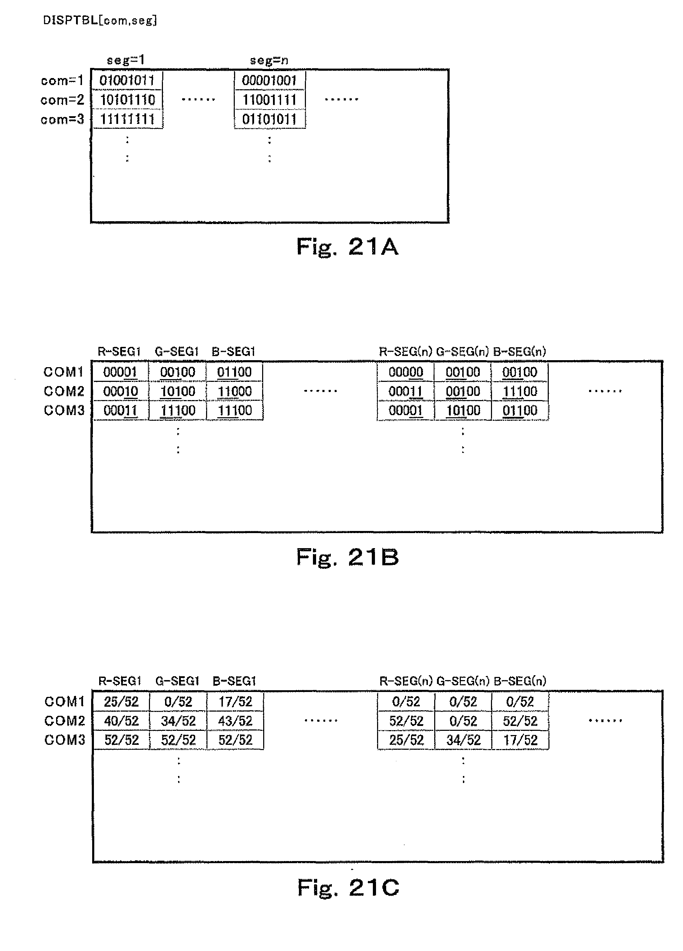

Figs. 21A to 21C are diagrams each showing an example of the display data row stored in the color display data storage portion 17 of the microcomputer 9 or the display memory 12 of the liquid crystal display driver 10 in the image display device shown in Fig. 20 or an example of the tone output values for driving the color liquid crystal display panel 11. Fig. 21A is a diagram showing an example of the color display data row (one byte/color display dot) stored in the color display data storage portion 17 of the microcomputer. Fig. 21B is a diagram showing an example of the display data row ((five bits × 3) bits/color display dot) stored in the display memory 12 of the liquid crystal display driver 10. Fig. 21C is a diagram showing an example of the tone output values (luminance) for driving the color liquid crystal display panel 11.

As shown in Fig. 21A, the color display data pieces corresponding to respective display dots are stored as an arrangement DISPTBL[com, seg] of 128 × 256 (32 kilobytes) in the display image data area of the color display data storage portion 17 of the microcomputer 9. In each byte, two high order bits denote the red (R), the next three bits denote the green (G), and three low order bits denote the blue (B), The controller 16 of the liquid crystal display driver 10 receives the color display data pieces, containing two bits of the red (R), three bits of the green (G), and three bits of the blue (B), together with the fixed values output through the operation code output terminals of the microcomputer 9 and stores the color display data pieces as red (R), green (G), and blue (B) five-bit tone codes in the display memory 12 of the liquid crystal display driver 10 as shown in Fig. 21B. The digits underlined in Fig. 21B correspond to values of respective color display data pieces stored in the color display data storage portion 17 of the microcomputer 9. The digits other than the underlined digits are the fixed values (0) output through the operation code output terminals of the microcomputer 9. Further, the controller 16 of the liquid crystal display driver 10 converts the tone codes shown in Fig. 21B into the tone output values based on the below-described tone conversion table. Based on the tone output values shown in Fig. 21C, the controller 16 of the liquid crystal display driver 10 drives corresponding display cells of the color liquid crystal display panel 11. For example, regarding COM1 and SEG(n), the red R-SEG(n) is 0/52, the green G-SEG(n) is 0/52, the blue G-SEG(n) is 0/52, the drive bias voltage is 0, and the luminance of each of three colors is 0. As a result, the color displayed is black. Regarding COM3 and SEG1, the red R-SEG(n) is 52/52, the green G-SEG(n) is 52/52, the blue G-SEG(n) is 52/52, the drive bias voltage is full bias, and the luminance of each of three colors is full. As a result, the color displayed is white. As a matter of course, in a case where the tone output values of the red (R), the green (G), and the blue (B) are different from the above two patterns, color corresponding to the luminance of three colors will be displayed.

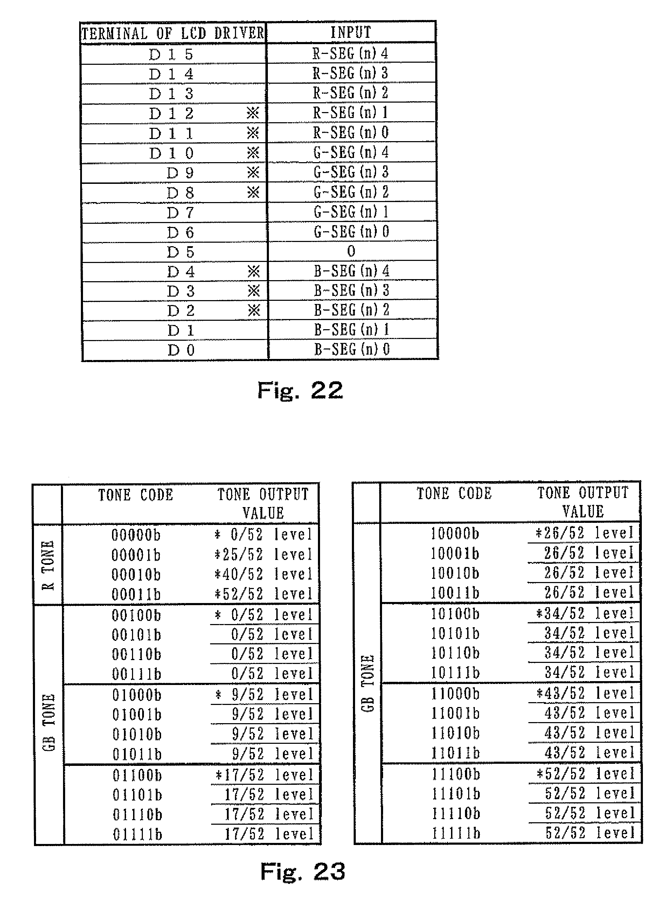

Fig. 22 is a diagram showing an example of the assignments of the data input terminals of the liquid crystal display driver 10 of the image display device shown in Fig. 20. As shown in Fig. 22, in the present embodiment, the plurality of data input terminals D0 to D15 are assigned to the red (R), the green (G), and the blue (B), that is, five tone data input terminals R-SEG(n)0 to R-SEG(n)4, five tone data input terminals G-SEG(n)0 to G-SEG(n)4, and five tone data input terminals B-SEG(n)0 to B-SEG(n)0.

Here, two bits of the red (R) are output through the color display data output terminals P6 and P7 of the microcomputer 9 and input to the data input terminals D11 and D12 of the liquid crystal display driver 10, and the fixed values (0) are output through the operation code output terminals of the microcomputer 9 and input to the data input terminals D13 to D15. Next, three bits of the green (G) are output through the color display data output terminals P3 to P5 of the microcomputer 9 and input to the data input terminals D8 to D10 of the liquid crystal display driver 10, and the fixed values (0) are output through the operation code output terminals of the microcomputer 9 and input to the data input terminals D6 and D7. Further, three bits of the blue (B) are output through the color display data output terminals P0 to P2 of the microcomputer 9 and input to the data input terminals D2 to D4 of the liquid crystal display driver 10, and the fixed values (0) are output through the operation code output terminals of the microcomputer 9 and input to the data input terminals D0 and D1.

Thus, the controller 16 of the liquid crystal display driver 10 performs the bit extension of the red (R), green (G), and blue (B) color display data pieces among the data pieces input through the data input terminals D0 to D15 to generate the five-bit tone codes in accordance with the above assignments in a state where two bits of the red (R), three bits of the green (G), and three bits of the blue (B) are assigned exclusively. Then, the controller 16 of the liquid crystal display driver 10 stores the five-bit tone codes in the display memory 12 shown in Fig. 21B.

Fig. 23 is a diagram showing one setting example of the tone conversion table of the liquid crystal display driver 10 of the image display device shown in Fig, 20.

As shown in Fig. 23, the five-bit tone code can express 32 (2⁵) types of codes. The tone conversion table in which values selected by the operation codes of the microcomputer 9 from 52 levels of tone output values are set to 32 types of codes is set and stored in the tone conversion table storage portion 13.

In the present embodiment, the tone output values are set such that: the tone codes 00000b to 00011b are used in the tone conversion table for the red (R) assigned to two low order bits; and the tone codes 00100b to 11111b are used in the tone conversion table for the green (G) and blue (B) each assigned to three high order bits. Since the tone code 00000b is used as the tone code for the red (R), the other tone codes are used in the tone conversion table for the green (G) and blue (B), and seven tones are realized by the tone codes 00100b, 01000b, 01100b, 10000b, 10100b, 11000b, and 11100b each of whose two low order bits are fixed to 00b. To be specific, the red (R) realizes four tones, and each of the green (G) and the blue (B) realizes seven tones, so that 196 colors can be displayed. As described above, the tone output values for the red (R), the number of tones of which is small, can be set independently. As a matter of course, regarding the tone codes of color image data pieces of the microcomputer 9, the tone codes for the red (R) are created by 00b to 11b, and the tone codes for the green (G) and blue (B) are created by 001b to 1116. In addition, regarding the tone conversion table for the green (G) and blue (B), the tone output values corresponding to three high order bits of the tone codes are set regardless of two low order bits of the tone codes. Even if the unintended tone code is input by the influence of noises, the reasonable tone output value is output.

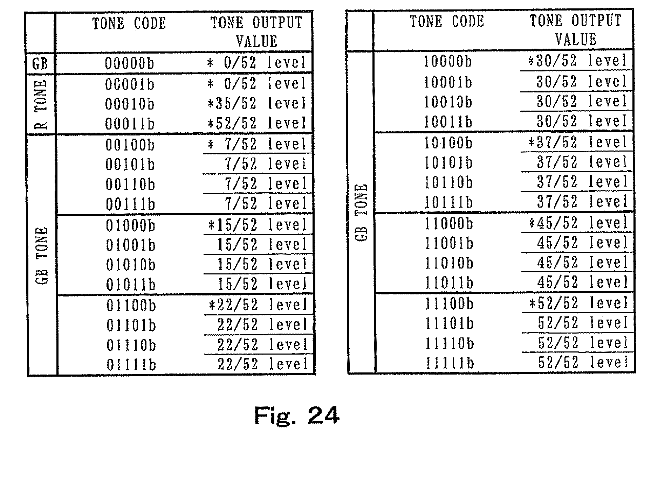

In the present embodiment, the tone code 00000b is used for the red (R), the number of tones of which is small. However, in the case of more finely expressing the tones of the green (G) and blue (B) than the tones of the red (R), 192 colors may be displayed in such a manner that as shown in Fig. 24, the tone code 00000b is used as the tone code for the green (G) and blue (B), the red (R) realizes three tones, and each of the green (G) and the blue (B) realizes eight tones. As a matter of course, in this case, regarding the tone codes of the color image data pieces of the microcomputer 9, the tone codes for the green (G) and blue (B) are created by 000b to 111b, and tone codes for the red (R) are created by 01b to 11b.

According to the above configuration, to the plurality of data input terminals D0 to D15 of the liquid crystal display driver 10, two bits of the red (R) color display data pieces, three bits of the green (G) color display data pieces, and three bits of the blue (B) color display data pieces are transmitted through the display data output terminals P0 to P7 of the microcomputer 9, and the predetermined fixed values are transmitted through the plurality of operation code output terminals C00, C01, C05 to C07, and C15 to C17 to which the display data output terminals P0 to P7 of the microcomputer 9 are not commonly connected. Then, the liquid crystal display driver 10 which has received the color display data pieces and the predetermined fixed values allocates the color display data pieces, output through the color display data output terminals P0 to P7, to two bits of the red (R), three bits of the green (G), and three bits of the blue (B) and allocates the fixed values to the other bits. With this, the five-bit tone code which can be processed by the liquid crystal display driver 10 can be easily created in a short period of time. Therefore, without providing any special circuit configured to perform the bit extension, the bit extension processing can be quickly performed to perform color display corresponding to eight bits (one byte) of the color display data pieces by using the general-purpose liquid crystal display driver 10 configured to operate based on the color display data pieces of (5 × 3) bits. Since the microcomputer 9 does not have to perform any special processing, such as the bit extension, the processing can be adequately quickly performed by a conventional microcomputer used in a remote controller or operating portion of an apparatus and configured to perform mode switching processing, buzzer generating processing, voice processing, communication processing, and the like.

Although 5 × 3 bits are required per dot, these bits can be configured by eight bits of the color display data pieces. The display data row stored in the display memory 12 of the liquid crystal display driver 10 is 128 × 256 × 5 × 3 bits. Since the image data area which needs to process a large amount of data pieces is generally configured in units of eight bits, the capacity of the color display data storage portion 17 of the microcomputer 9 is 128 × 256 × 8 × 3 bits (128 × 256 × 3 bytes), the capacity being required to correspond to the liquid crystal display driver 10. However, in the present embodiment, since the amount of data pieces is just 1/3, that is, 128 × 256 × 8 bits (128 × 256 bytes), a more inexpensive microcomputer can be utilized.

Among three colors that are the red (R), green (G), and blue (B) assigned to one byte, the tone conversion table for one color, the number of tones of which is small, can be independently prepared, and the tone output values can be set in this tone conversion table. Therefore, these tone output values can be optimized independently regardless of the other two colors. On this account, the entire color balance can be efficiently optimized in accordance with usages and color properties of display devices.

In the present embodiment, the tone codes (tone codes generated at the time of the occurrence of error) other than the tone codes to be generated are set as the tone codes for the green (G) and blue (B). However, by ignoring three high order bits of each of the tone codes other than the tone codes to be generated and regarding the tone codes other than the tone codes to be generated as the red (R) tone codes, the tone output values may be set to the tone codes other than the tone codes to be generated. Moreover, an intermediate value between the tone output value for the red (R) corresponding to two low order bits and the tone output value for each of the green (G) and blue (B) each corresponding to three high order bits may be set to each of the tone codes other than the tone codes to be generated.

Each of all the fixed values output through the operation code output terminals C01 to C05, C07 to C12, and C14 to C17 of the microcomputer 9 may be 0 or may be 1. Both 0 and 1 may be output as long as one color, the number of tones of which is small, and the other two colors can exclusively constitute the tone conversion table.

In the present embodiment, in the microcomputer 9, two high order bits in one byte are assigned to the red (R), the next three bits are assigned to the green (G), and three low order bits are assigned to the blue (B). However, the order of the assignments may be changed in accordance with, for example, original material image data pieces for creating a screen image. However, since one byte of the color display data pieces is directly output through the color display data output terminals P0 to P7 to efficiently perform output processing, the connections to the data input terminals of the liquid crystal display driver need to be changed in accordance with the changed bit assignments.

The following will explain a procedure in which the microcomputer 9 transmits the color display data pieces stored in the display image data area of the color display data storage portion 17 in the image display device of the present embodiment. Control regarding data transmission and reception between the microcomputer 9 and the liquid crystal display driver 10 and setting of the tone conversion table are known technologies and are not directly related to the present invention, so that detailed explanations thereof are omitted in the present embodiment.

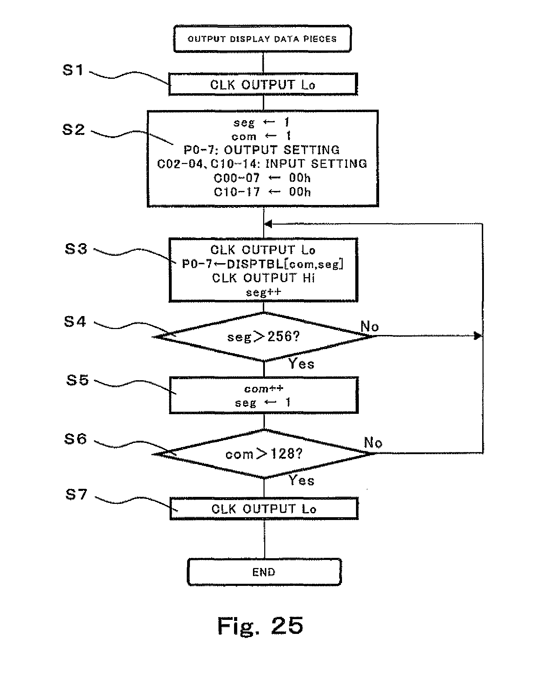

Fig. 25 is a flow chart showing the display data piece output processing in the image display device shown in Fig. 20. First, the microcomputer 9 sets the output level of the clock terminal CLK that is the control terminal to the low level (Step S1).

Next, the microcomputer 9 initializes each of arrangement pointers seg and com of the display image data area DISPTBL[com, seg] in the color display data storage portion 17 to 1 and sets each of the output terminals P0 to P7 to the output state. Next, the microcomputer 9 sets to the high impedance state (input state) each of the operation code output terminals C02 to C04 and C10 to C14 which are respectively connected to the output terminals P0 to P7 and also respectively connected to the data input terminals of the liquid crystal display driver, and sets each of the outputs of the operation code output terminals C00 to C07 and C10 to C17 to 0 (Step S2).

Before performing the display data output processing, the microcomputer 9 outputs the operation codes to control the liquid crystal display driver 10. Therefore, the operation code output terminals C00 to C07 and C10 to C 17 are set to the output state. On this account, only the input setting is performed in Step S2. In addition, 00h is output to each of the operation code output terminals C00 to C07 and C10 to C17. However, as a matter of course, the operation code output terminals C02 to C04 and C10 to C14 which have been set to the input state remain in the high impedance state, and 0 (low) is not output to each of the operation code output terminals C02 to C04 and C 10 to C 14.

Next, the microcomputer 9 sets the output level of the clock terminal CLK to the low level and outputs the color display data piece DISPTBL[1,1] that is the first byte to the output terminals P0 to P7. Then, when the microcomputer 9 sets the output level of the clock terminal CLK to the high level, the liquid crystal display driver 10 retrieves the color display data pieces of the output terminals P0 to P7 and the fixed values (0) of the operation code output terminals C00, C01, C05 to C07, and C15 to C 17 through the data input terminals D0 to D15 of the liquid crystal display driver. Further, the microcomputer 9 increments the arrangement pointer seg (Step S5). As described above, the liquid crystal display driver 10 generates respective five-bit tone codes from the color display data pieces of three colors that are the red (R), the green (G), and the blue (B) and stores the five-bit tone codes in corresponding addresses of the display memory 12.

Then, the microcomputer 9 checks the arrangement pointer seg. When the arrangement pointer seg is equal to or less than 256, the microcomputer 9 returns to Step S3 to sequentially output the next color output data piece DISPTBL[com, seg]. When the microcomputer 9 checks the arrangement pointer seg and the arrangement pointer seg exceeds 256, the microcomputer 9 proceeds to the next step (Step S4).
In the next step, the microcomputer 9 increments the arrangement pointer com and initializes the arrangement pointer seg to 1 (Step S5).
Then, the microcomputer 9 checks the arrangement pointer com. When the arrangement pointer com is equal to or less than 128, the microcomputer 9 returns to Step S3 to sequentially output the next color output data piece DISPTBL[com, seg]. When the microcomputer 9 checks the arrangement pointer com and the arrangement pointer com exceeds 128, the microcomputer 9 determines that the output of the color display data pieces of the entire one screen image is completed, and the microcomputer 9 proceeds to the next step (Step S6).
Next, the microcomputer 9 sets the output level of the clock terminal CLK to the low level (Step S7) and terminates the output processing of the color display data pieces.

As above, the color display data pieces of three colors that are the red (R), the green (G), and the blue (B) constitute one byte, and one screen image is configured by the arrangement of 128 × 256. Therefore, the color display data pieces can be transmitted to the liquid crystal display driver 10 in a short period of time by simple processing. The microcomputer 9 periodically, for example, for every 100 ms, performs a processing in which the created color display data pieces are transmitted to the liquid crystal display driver 10 in accordance with the procedure of the flow chart shown in Fig. 25 while performing the detection of SW, operation sound (buzzer) driving, mode transition processing, screen image creation, and the like. With this, the display on the color liquid crystal display panel 11 can be dynamically changed while performing processing, such as reception of the SW operation or emission of the operation sound.

### Embodiment 2

Next, the image display device according to Embodiment 2 of the present invention for performing color display will be explained.

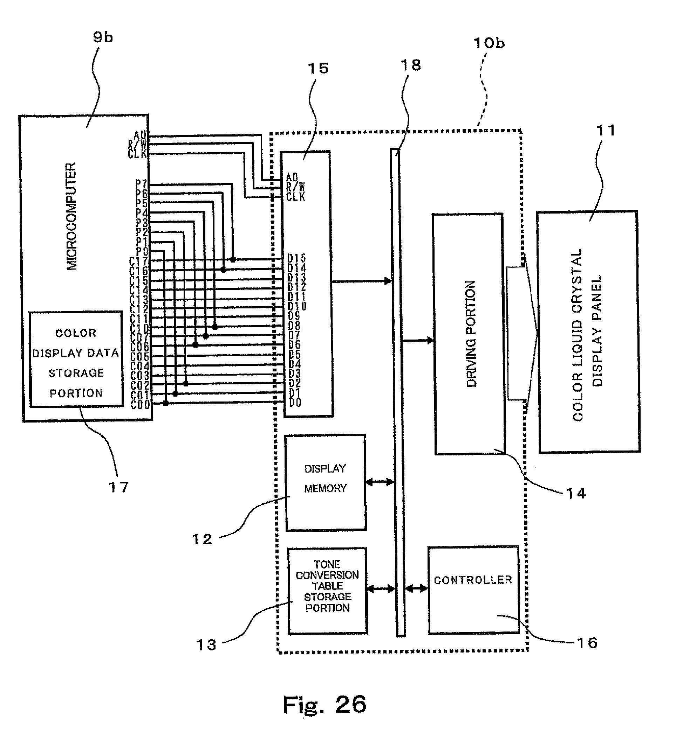

Fig. 26 is a schematic circuit diagram showing the image display device in Embodiment 2 of the present invention for performing color display In the present embodiment, the same reference signs are used for the same components as in Embodiment 1, and explanations thereof are omitted.

The present embodiment is different from Embodiment 1 in that: among the eight color display data output terminals P0 to P7 of the microcomputer 9b, the color display data output terminals P6 and P7 through which two bits for the red (R) tone code are output are respectively connected to the data input terminals D14 and D15 corresponding to two high order bits of the red (R) five-bit tone code corresponding to the data input terminals D11 to D15 among the data input terminals D0 to D15 of the liquid crystal display driver 10, and in addition, the operation code output terminals C16 and C 17 are respectively connected to the data input terminals D14 and D 15; the color display data output terminals P3 to P5 through which three bits for the green (G) tone code are output are respectively connected to the data input terminals D6 to D8 corresponding to three low order bits of the green (G) five-bit tone code corresponding to the data input terminals D6 to D10 among the data input terminals D0 to D15 of the liquid crystal display driver 10 such that three bits of the green (G) and two bits of the red (R) connected to the high order side are exclusively arranged in terms of bits, and in addition, the operation code output terminals C06, C07, and C10 are respectively connected to the data input terminals D6 to D8; and the color display data output terminals P0 to P2 through which three bits for the blue (B) tone code are output are respectively connected to the data input terminals D0 to D2 corresponding to three low order bits of the blue (B) five-bit tone code corresponding to the data input terminals. D0 to D4 among the data input terminals D0 to D15 of the liquid crystal display driver 10 such that three bits of the blue (B) and two bits of the red (R) are exclusively arranged in terms of bits, and in addition, the operation code output terminals C00 to C02 are respectively connected to the data input terminals D0 to D2.

Correspondingly, the tone code data pieces retrieved in the display memory 12 of the liquid crystal display driver 10b and the setting of the tone conversion table stored in the tone conversion table storage portion 13 for converting the tone code data pieces into the tone output values are different between the present embodiment and Embodiment 1.

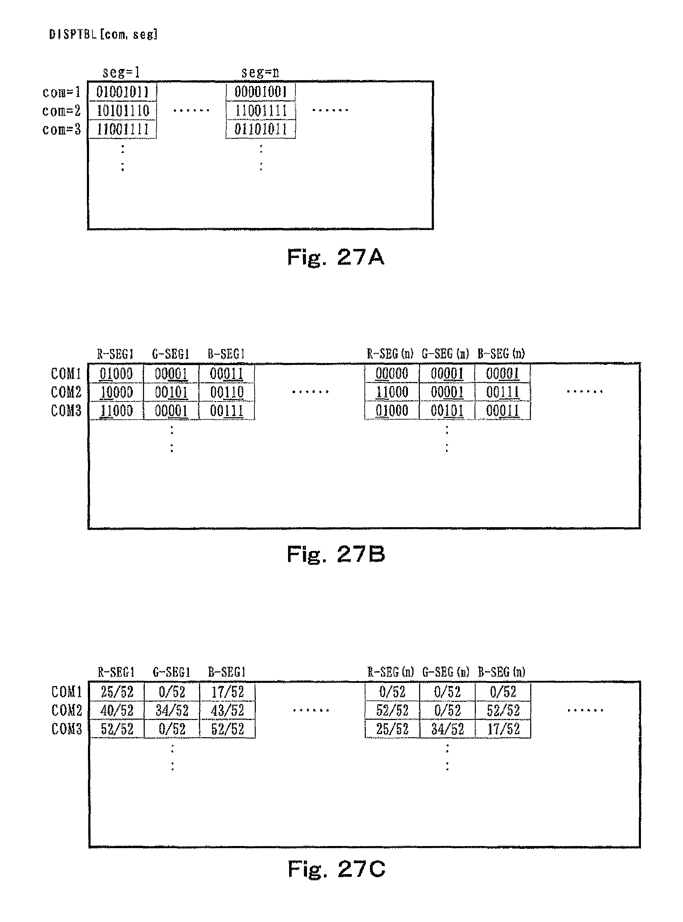

Fig. 27A is a diagram showing an example of the display data row stored in the color display data storage portion 17 of the microcomputer 9b of the image display device shown in Fig. 26. Fig. 27B is a diagram showing an example of the display data row stored in the display memory 12 of the liquid crystal display driver 10b of the image display device shown in Fig. 26. Fig. 27C is a diagram showing the tone output values for driving the color liquid crystal display panel 11 shown in Fig. 26.

The tone code data pieces retrieved in the display memory 12 of the liquid crystal display driver 10b will be explained in reference to Figs. 27A to 27C.

As shown in Fig. 26, the color display data output terminals P6 and P7 through which two bits for the red (R) tone code are output are respectively connected to the data input terminals D 14 and D 15 corresponding to two high order bits of the red (R) five-bit tone code corresponding to the data input terminals D11 to D15. Moreover, the color display data output terminals P3 to P5 through which three bits for the green (G) tone code are output are respectively connected to the data input terminals D6 to D8 corresponding to three low order bits of the green (G) five-bit tone code corresponding to the data input terminals D6 to D10 such that three bits of the green (G) and two bits of the red (R) connected to the high order side are exclusively arranged in terms of bits. Further, the color display data output terminals P0 to P2 through which three bits for the blue (B) tone code are output are respectively connected to the data input terminals D0 to D2 corresponding to three low order bits of the blue (B) five-bit tone code corresponding to the data input terminals DO to D5 such that three bits of the blue (B) and two bits of the red (R) are exclusively arranged in terms of bits. Therefore, as shown in Fig. 27B, in the display memory 12 of the liquid crystal display driver 10b, the red (R) tone code is stored as the five-bit tone code in which 0 is assigned to each of three low order bits, and each of the green (G) and blue (B) tone codes is stored as the five-bit tone code in which 0 is assigned to each of two high order bits.

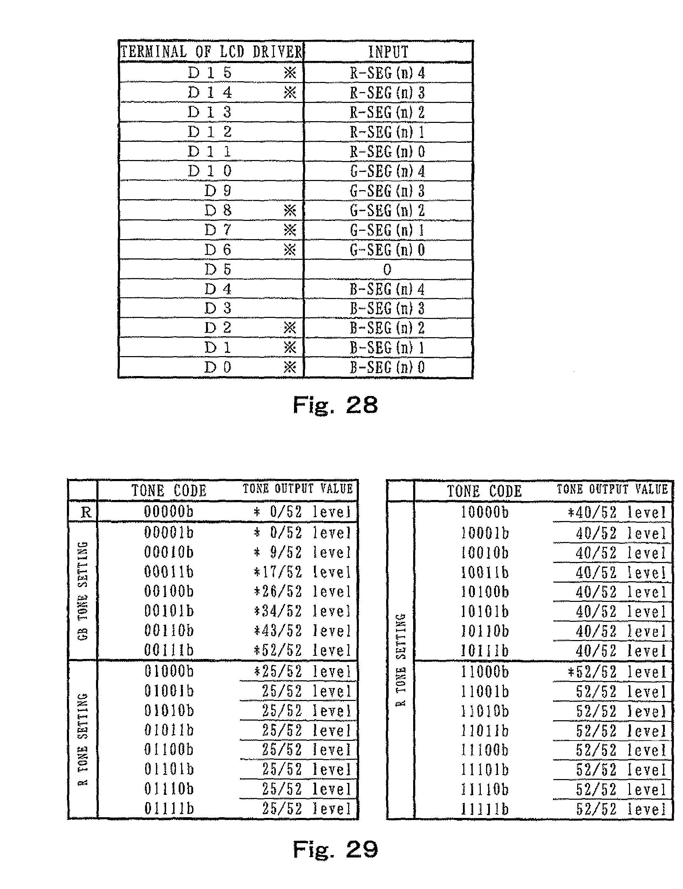

Fig. 28 is an example of the assignments of the data input terminals of the liquid crystal display driver 10b of the image display device shown in Fig. 26. The assignments of the data input terminals herein are the same as those of Fig. 22 of Embodiment 1. However, the positions of * indicating the terminals to which the red (R), green (G), and blue (B) tone codes are input are changed, that is, two bits for the red (R) tone code are input to the terminals corresponding to two high order bits of the five-bit tone code, and three bits for each of the green (G) and blue (B) tone codes are input to the terminals corresponding to three low order bits of the five-bit tone code.

Fig. 29 is a diagram showing one setting example of the tone conversion table stored in the tone conversion table storage portion 13 of the liquid crystal display driver 10b of the image display device shown in Fig. 26.

The red (R) two-bit tone code realizes four tones, and each of the green (G) and blue (B) three-bit tone codes realizes seven tones, so that 196 colors can be displayed. Since the tone code 00000b is used as the red (R) tone code, the green (G) and blue (B) tones are set by using the tone codes 00001b to 00111 b, and the red (R) tones are set by using the other tone codes.

By ignoring three low order bits of each of the red (R) tone codes other than the red (R) tone codes to each of which * is attached, that is, by ignoring three low order bits of each of the red (R) tone codes other than the red (R) tone codes each of whose three low order bits are 000b, the red (R) tone output values are set to the red (R) tone codes other than the red (R) tone codes to each of which * is attached. However, as with Embodiment 1, the green (G) and blue (B) tone output values may be set by ignoring two high order bits, or an intermediate value between the tone output value for the red (R) corresponding to two high order bits and the tone output value for each of the green (G) and blue (B) each corresponding to three low order bits may be set.

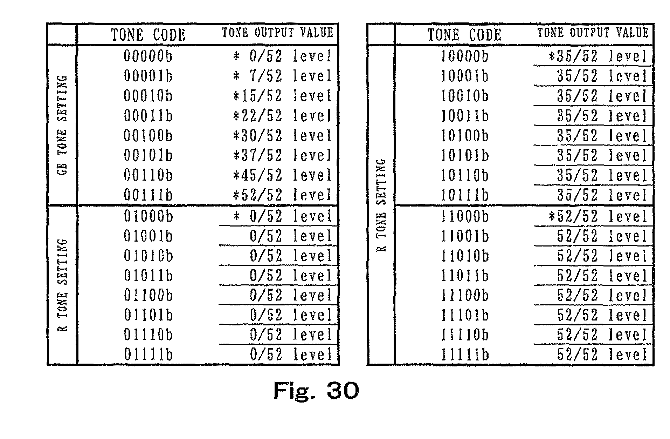

Moreover, 192 colors may be displayed such that: as shown in Fig. 30, the green (G) and blue (B) tones are set by using the tone codes 00000b to 001111b; the red (R) tones are set by using the other tone codes; the red (R) realizes three tones; and each of the green (G) and the blue (B) realizes eight tones.

Each of all the fixed values output through the operation code output terminals C03 to C05 and C11 to C15 of the microcomputer 9 may be 0 or may be 1. Both 0 and 1 may be output as long as one color, the number of tones of which is small, and the other two colors can exclusively constitute the tone conversion table.

In the present embodiment, in the microcomputer 9, two high order bits in one byte are assigned to the red (R), the next three bits are assigned to the green (G), and the three low order bits are assigned to the blue (B). However, the order of the assignments may be changed in accordance with, for example, original material image data pieces for creating a screen image. However, since one byte of the color display data pieces is directly output through the color display data output terminals P0 to P7 to efficiently perform output processing, the connections to the data input terminals of the liquid crystal display driver need to be changed in accordance with the changed bit assignments.

The following will explain a procedure in which the microcomputer 9b transmits the display data pieces stored in the display image data area of the color display data storage portion 17 in the image display device of the present embodiment.

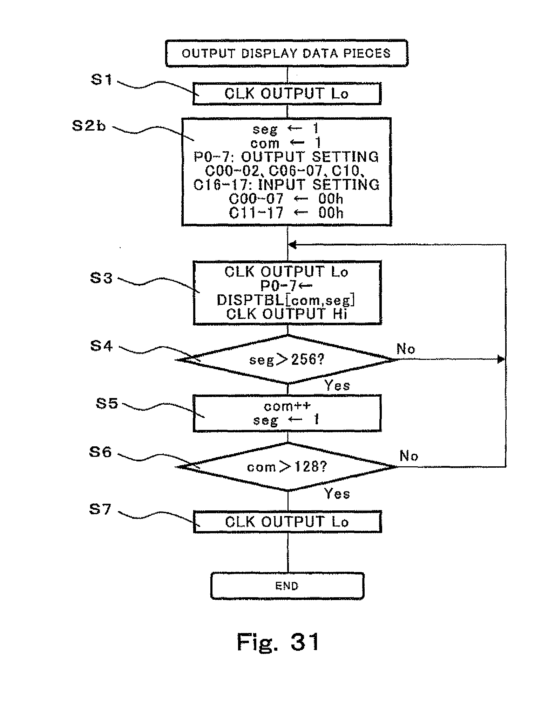

Fig. 31 is a flow chart showing the display data piece output processing in the image display device shown in Fig. 26. Fig. 31 is basically the same as the flow chart of Fig. 25, so that the same numbers are used for the same steps, and explanations thereof are omitted.

Unlike Embodiment 1, the operation code output terminals connected to both the data input terminals of the liquid crystal display driver 10b and the color display data output terminals P0 to P7 of the microcomputer 9b are the operation code output terminals C00 to 02, C06 to 07, C10, and C16 to 17. Therefore, the operation code output terminals which are set to the input state in Step S2b are the operation code output terminals C00 to 02, C06 to 07, C10, and C16 to 17.

As above, in the present embodiment, to the plurality of data input terminals D0 to D15 of the liquid crystal display driver 10b, two bits of the red (R) color display data pieces, three bits of the green (G) color display data pieces, and three bits of the blue (B) color display data pieces are transmitted through the display data output terminals P0 to P7 of the microcomputer 9b, and the predetermined fixed values are transmitted through the plurality of operation code output terminals C03 to C05 and C11 to C15 to which the display data output terminals P0 to P7 of the microcomputer 9b are not commonly connected. Then, the liquid crystal display driver 10b which has received the color display data pieces and the predetermined fixed values allocates the color display data pieces, output through the color display data output terminals P0 to P7, to two bits of the red (R), three bits of the green (G), and three bits of the blue (B) and allocates the fixed values to the other bits. With this, the five-bit tone code which can be processed by the liquid crystal display driver 10b can be easily created in a short period of time. Therefore, without providing any special circuit configured to perform the bit extension, the bit extension processing can be quickly performed to perform color display corresponding to eight bits (one byte) of the color display data pieces by using the general-purpose liquid crystal display driver 10b configured to operate based on the color display data pieces of (5 × 3) bits. Since the microcomputer 9b does not have to perform any special processing, such as the bit extension processing, the processing can be adequately quickly performed by a conventional microcomputer used in a remote controller or operating portion of an apparatus and configured to perform mode switching processing, buzzer generating processing, voice processing, communication processing, and the like.

Although 5×3 3 bits of the color display data pieces are normally required per dot, eight bits of the color display data pieces per dot are enough herein. The display data row stored in the display memory 12 of the liquid crystal display driver 10b is 128 × 256 × 5 × 3 bits. Since the image data area which needs to process a large amount of data pieces is generally configured in units of eight bits, the capacity of the color display data storage portion 17 of the microcomputer 9b is normally 128 × 256 × 8 × 3 bits (128 × 256 × 3 bytes), the capacity being required to correspond to the liquid crystal display driver 10b. However, in the present embodiment, since the amount of data pieces is just 1/3, that is, 128 × 256 × 8 bits (128 × 256 bytes), a more inexpensive microcomputer can be utilized.

Among three colors that are the red (R), green (G), and blue (B) assigned to one byte, the tone conversion table for one color, the number of tones of which is small, can be independently prepared, and the tone output values can be set in this tone conversion table. Therefore, these tone output values can be optimized independently regardless of the other two colors. On this account, the entire color balance can be efficiently optimized in accordance with usages and color properties of display devices.

### Embodiment 3

Next, the image display device according to Embodiment 3 of the present invention for performing color display will be explained.

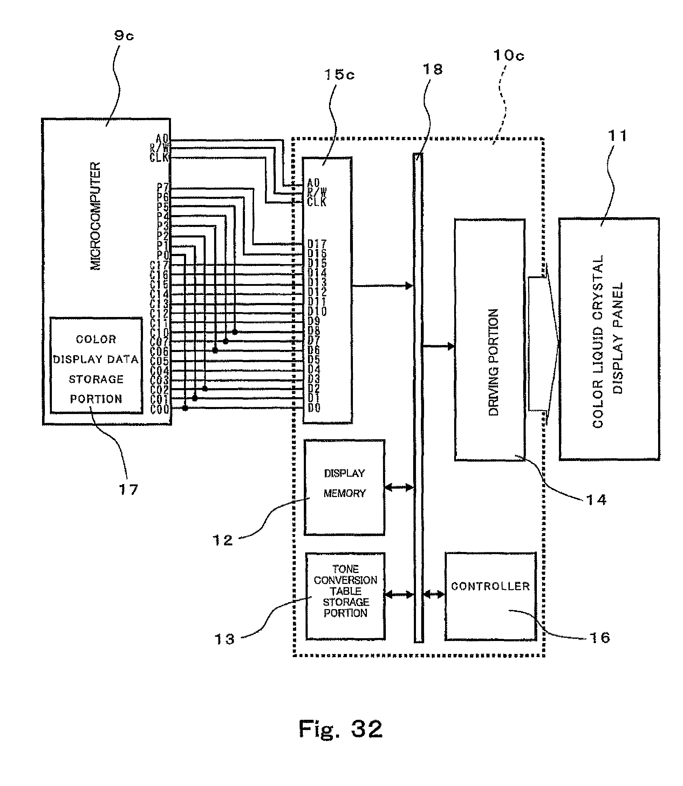

Fig. 32 is a schematic circuit diagram showing the image display device of Embodiment 3 of the present invention for performing color display. In the present embodiment, the same reference signs are used for the same components as in Embodiment 1, and explanations thereof are omitted.

The present embodiment is different from Embodiment 1 in that a liquid crystal display driver 10c can deal with 262,144 colors by assigning six bits (64 tones) to each color.

Therefore, an interface 15c includes 18 data input terminals D0 to D17 to receive the color display data pieces of 6 bits × 3 colors. The operation codes are input through the data input terminals D0 to D15 (two bytes) among the data input terminals D0 to D17. The display memory 12 is configured to have 128 × 256 × 6 × 3 bits. Further, the tone conversion table storage portion 13 is configured to be able to store the tone output values corresponding to six bits (64 tone codes). The liquid crystal display driver 10c of the present embodiment is the same as the liquid crystal display driver 10 of Embodiment 1 in that: respective components of the liquid crystal display driver 10c are connected to one another through the communication bus 18; and the controller 16 is configured to set the tone conversion table of the tone conversion table storage portion 13 in accordance with the operation codes input through the data input terminals D0 to D15 of the interface 15c and transmit to the driving portion 14 the tone output values corresponding to respective display dots of the color liquid crystal display panel 11 based on the tone data pieces stored in the display memory 12 and the setting of the tone conversion table stored in the tone conversion table storage portion 13 to cause the color liquid crystal display panel 11 to display a predetermined color image.

Among eight color display data output terminals P0 to P7 of a microcomputer 9c, the color display data output terminals P6 and P7 through which two bits for the red (R) tone code are output are respectively connected to the data input terminals D16 and D 17 corresponding to two high order bits of the red (R) six-bit tone code corresponding to the data input terminals D12 to D17 among the data input terminals D0 to D17 of the liquid crystal display driver 10c. Moreover, the color display data output terminals P3 to P5 through which three bits for the green (G) tone code are output are respectively connected to the data input terminals D6 to D8 corresponding to three low order bits of the green (G) six-bit tone code corresponding to the data input terminals D6 to D11 among the data input terminals D0 to D17 of the liquid crystal display driver 10c such that three bits of the green (G) and two bits of the red (R) are connected to the high order side are exclusively arranged in terms of bits, and in addition, the operation code output terminals C06, C07, and C10 are respectively connected to the data input terminals D6 to D8. Further, the color display data output terminals P0 to P2 through which three bits for the blue (B) tone code are output are respectively connected to the data input terminals D0 to D2 corresponding to three low order bits of the blue (B) six-bit tone code corresponding to the data input terminals D0 to D5 among the data input terminals D0 to D 17 of the liquid crystal display driver 10c such that three bits of the blue (B) and two bits of the red (R) are exclusively arranged in terms of bits, and in addition, the operation code output terminals C00 to C02 are respectively connected to the data input terminals D0 to D2.

The red (R) six-bit tone codes and the green (G) or blue (B) six-bit tone codes are set to be completely exclusive when those codes are retrieved in the display memory 12 of the liquid crystal display driver 10c. In at least the present embodiment in which the assignments of the bits between the red (R) and the green (G) or blue (B) bits are not performed, the fixed values are output through the operation code output terminals of the microcomputer 9c such that the data piece of the third bit in the red (R) tone code and the data piece of the third bit in the green (G) or blue (B) tone code become different from each other.

For example, in the present embodiment, when the microcomputer 9c outputs the color display data pieces to eight color display data output terminals P0 to P7, the microcomputer 9c outputs 000b to each of the operation code output terminals C03 to C05 connected to the data input terminals to which the color display data output terminals P0 to P7 are not connected and outputs 1111000b to the operation code output terminals C11 to C17 connected to the data input terminals to which the color display data output terminals P0 to P7 are not connected.

To be specific, 1 is output to the operation code output terminal C17 corresponding to the third bit of the red (R) tone code, 0 is output to the operation code output terminal C11 corresponding to the third bit of the green (G) tone code, and 0 is output to the operation code output terminal C03 corresponding to the third bit of the blue (B) tone code.

Correspondingly, the tone code data pieces retrieved in the display memory 12 of the liquid crystal display driver 10c and the setting of the tone conversion table stored in the tone conversion table storage portion 13 for converting the tone code data pieces into the tone output values are different between the present embodiment and Embodiment 1.

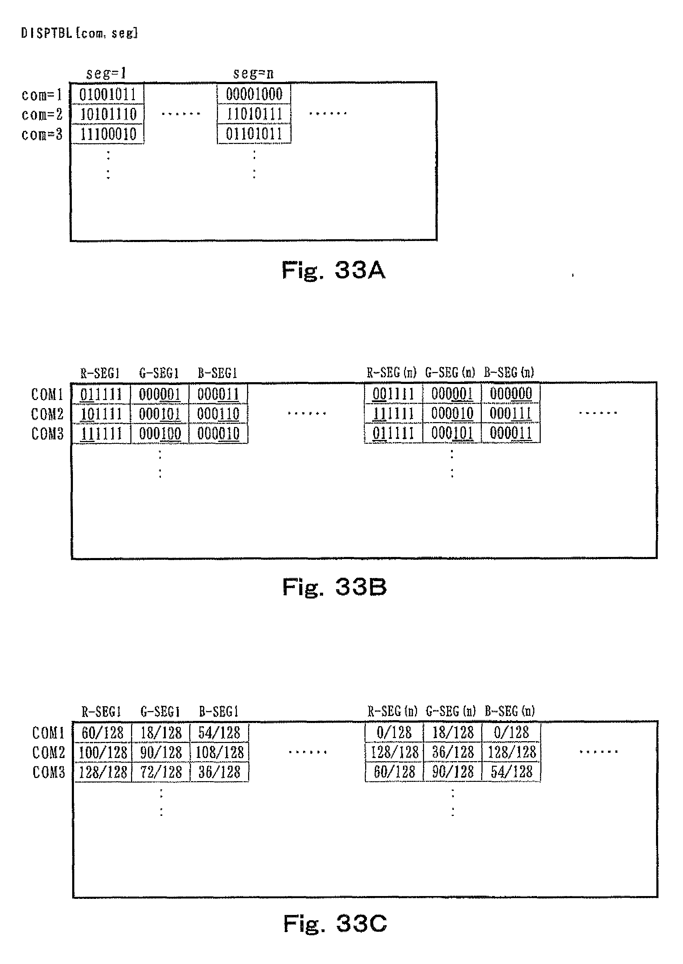

Fig. 33A is a diagram showing an example of the display data row stored in the color display data storage portion 17 of the microcomputer 9c of the image display device shown in Fig. 32. Fig. 33B is a diagram showing an example of the display data row stored in the display memory 12 of the liquid crystal display driver 10c of the image display device shown in Fig. 32. Fig. 33C is a diagram showing the tone output values for driving the color liquid crystal display panel 11 shown in Fig. 32.

The tone code data pieces retrieved in the display memory 12 of the liquid crystal display driver 10c will be explained in reference to Figs. 33A to 33C.

As shown in Fig. 32, the color display data output terminals P6 and P7 through which two bits for the red (R) tone code are output are respectively connected to the data input terminals D16 and D 17 corresponding to two high order bits of the red (R) six-bit tone code corresponding to the data input terminals D12 to D17. Moreover, the color display data output terminals P3 to P5 through which three bits for the green (G) tone code are output are respectively connected to the data input terminals D6 to D8 corresponding to three low order bits of the green (G) six-bit tone code corresponding to the data input terminals D6 to D11 such that three bits of the green (G) and two bits of the red (R) connected to the high order side are exclusively arranged in terms of bits. Further, the color display data output terminals P0 to P2 through which three bits for the blue (B) tone code are output are respectively connected to the data input terminals D0 to D2 corresponding to three low order bits of the blue (B) six-bit tone code corresponding to the data input terminals D0 to D5 such that three bits of the blue (B) and two bits of the red (R) are exclusively arranged in terms of bits. The microcomputer 9c outputs 000b to the operation code output terminals C03 to C05 and outputs 1111000b to the operation code output terminals C11 to C17. Therefore, as shown in Fig. 33B, in the display memory 12 of the liquid crystal display driver 10c, the red (R) tone code is stored as the six-bit tone code in which 1 is assigned to each of four low order bits, and each of the green (G) and blue (B) tone codes is stored as the six-bit tone code in which 0 is assigned to each of three high order bits.

As shown in Fig. 33C, the tone output values are obtained in accordance with the below-described tone conversion table stored in the tone conversion table storage portion 13 of the liquid crystal display driver 10c, and the color liquid crystal display panel 11 performs display. To correct the nonlinearity of the property of a display device, the number of tones of the tone output value obtained based on the tone code is generally set to be larger than the number of tones of the tone code. In the liquid crystal display driver 10c of the present embodiment, the tone output values of 128 tones are obtained based on the six-bit tone codes (64 tones).

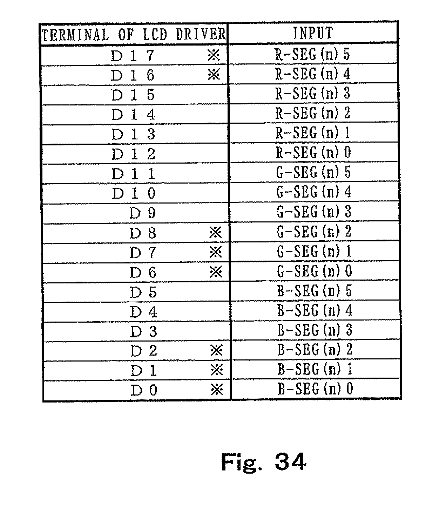

Fig. 34 is a diagram showing an example of the assignments of the data input terminals of the liquid crystal display driver 10c of the image display device shown in Fig. 32. The data input terminals D0 to D17 of the liquid crystal display driver 10c are assigned such that six data input terminals D0 to D5 are used for the input of the blue (B) tone data pieces, six data input terminals D6 to D11 are used for the input of the green (G) tone data pieces, and six data input terminals D12 to D17 are used for the input of the red (R) tone data pieces. Among the data input terminals D0 to D17, the terminals through which the tone data pieces of three colors that are the red (R), the green (G), and the blue (B) output through eight color display data output terminals P0 to P7 of the microcomputer 9c are retrieved are marked with *. Regarding the red (R), the tone data pieces are input through the two high order terminals of six bits. Regarding each of the green (G) and the blue (B), the tone data pieces are input through the three low order terminals.

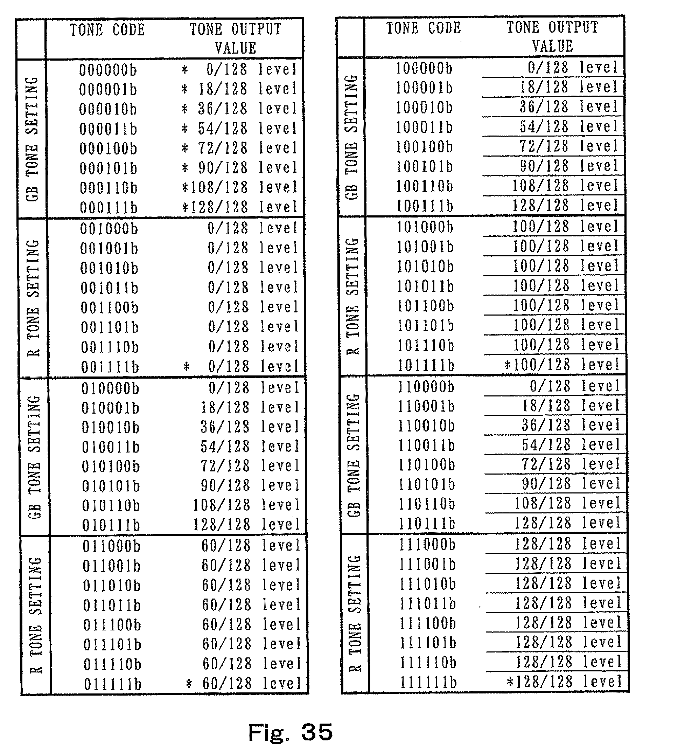

Fig. 35 is a diagram showing one setting example of the tone conversion table stored in the tone conversion table storage portion 13 of the liquid crystal display driver 10c of the image display device shown in Fig. 32.

Regarding 64 tone codes corresponding to six-bit tone codes, the red (R) tone codes in each of which 1111b is assigned to four low order bits and the green (G) and blue (B) tone codes in each of which 000b is assigned to three high order bits, that is, the tone codes shown by "*" in Fig. 35 are retrieved as the red (R), green (G), and blue (B) tone codes in the display memory 12 of the liquid crystal display driver 10c, and these tone codes become targets to be converted into the tone output values based on the tone conversion table.

In the present embodiment, the assignment is not performed with respect to the third bit of each of the red (R), green (G), and blue (B) six-bit tone code, that is, the fixed value output through the operation code output terminal of the microcomputer 9c is assigned to the third bit of each of the red (R), green (G), and blue (B) six-bit tone codes. Therefore, by at least assigning 1 to the third bit of the red (R) tone code and assigning 0 to the third bit of each of the green (G) and blue (B) tone codes, four levels of the red (R) tone conversion table and eight levels of each of the green (G) and blue (B) tone conversion tables can be set completely separately. On this account, the red (R) two-bit tone code realizes four tones, and each of the green (G) and blue (B) three-bit tone codes realizes eight tones, so that 256 colors can be displayed.

As with Embodiments 1 and 2, the tone output value corresponding to the tone code to which "*" is not attached in Fig. 34 may be set as an intermediate value between the red (R) tone output value corresponding to two high order bits and the green (G) or blue (B) tone output value corresponding to three low order bits.

The following will explain a procedure in which the microcomputer 9c transmits the display data pieces stored in the display image data area of the color display data storage portion 17 in the image display device of the present embodiment.

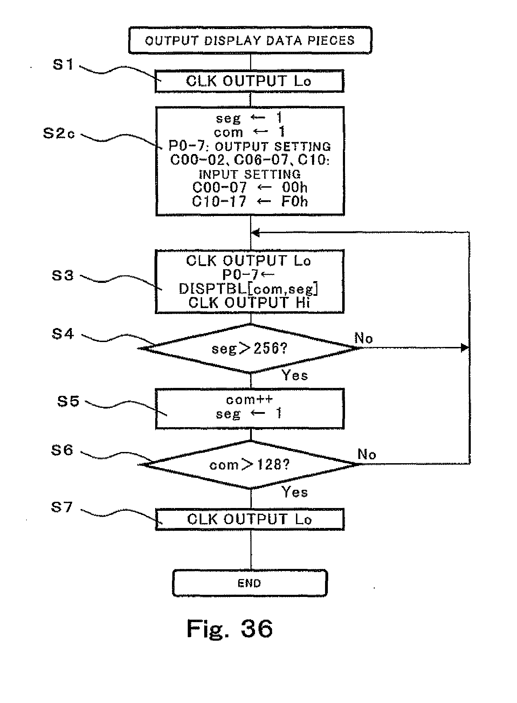

Fig. 36 is a flow chart showing the display data piece output processing in the image display device shown in Fig. 32. Fig. 36 is basically the same as the flow chart of Fig. 25, so that the same numbers are used for the same steps, and explanations thereof are omitted.

Unlike Embodiment 1, the operation code output terminals connected to both the data input terminals of the liquid crystal display driver 10c and the color display data output terminals P0 to P7 of the microcomputer 9c are the operation code output terminals C00 to 02, C06 to 07, and C10. Therefore, the operation code output terminals which are set to the input state in Step S2c are the operation code output terminals C00 to 02, C06 to 07, and C10.

In order to cause the fixed value assigned to the red (R) and the fixed value assigned to each of the green (G) and the blue (B) to be different from each other, the values output to the operation code output terminals C10 to C 17 of the microcomputer 9c are changed. Specifically, F0h(11110000b) is output to the operation code output terminals C10 to C17 in Step S2c such that 1111b is set to four low order bits of the red (R) tone code.

As above, in the present embodiment, to the plurality of data input terminals D0 to D17 of the liquid crystal display driver 10c, two bits of the red (R) color display data pieces, three bits of the green (G) color display data pieces, and three bits of the blue (B) color display data pieces are transmitted through the display data output terminals P0 to P7 of the microcomputer 9c, and the predetermined fixed values are transmitted through the plurality of operation code output terminals C03 to C05 and C11 to C17 to which the display data output terminals P0 to P7 of the microcomputer 9c are not commonly connected. Then, the liquid crystal display driver 10c which has received the color display data pieces and the predetermined fixed values allocates the color display data pieces, output through the color display data output terminals P0 to P7, to two bits of the red (R), three bits of the green (G), and three bits of the blue (B) and allocates the fixed values to the other bits. With this, the six-bit tone code which can be processed by the liquid crystal display driver 10c can be easily created in a short period of time. Therefore, without providing any special circuit configured to perform the bit extension, the bit extension processing can be quickly performed to perform color display corresponding to eight bits (one byte) of the color display data pieces by using the general-purpose liquid crystal display driver 10c configured to operate based on the color display data pieces of 18 bits. Since the microcomputer 9c does not have to perform any special processing, such as the bit extension processing, the processing can be adequately quickly performed by a conventional microcomputer used in a remote controller or operating portion of an apparatus and configured to perform mode switching processing, buzzer generating processing, voice processing, communication processing, and the like.

Although 6 × 3 bits of the color display data pieces are normally required per dot, eight bits of the color display data pieces per dot are enough herein. The display data row stored in the display memory 12 of the liquid crystal display driver 10c is 128 × 256 × 6 × 3 bits. Since the image data area which needs to process a large amount of data pieces is generally configured in units of eight bits, the capacity of the color display data storage portion 17 of the microcomputer 9c is normally 128 × 256 × 8 × 3 bits (128 × 256 × 3 bytes), the capacity being required to correspond to the liquid crystal display driver 10c. However, in the present embodiment, since the amount of data pieces is just 1/3, that is, 128 × 256 × 8 bits (128 × 256 bytes), a more inexpensive microcomputer can be utilized.

Among three colors that are the red (R), green (G), and blue (B) assigned to one byte, the tone conversion table for one color, the number of tones of which is small, can be independently prepared, and the tone output values can be set in this tone conversion table. Therefore, these tone output values can be optimized independently regardless of the other two colors. On this account, the entire color balance can be efficiently optimized in accordance with usages and color properties of display devices.

Further, in the present embodiment, four bits of the fixed values assigned to the red (R) and three bits of the fixed values assigned to each of the green (G) and the blue (B) are set such that the red (R), green (G), and blue (B) six-bit tone codes become completely exclusive codes. Thus, the color display of 256 colors can be performed.

In the present embodiment, two bits of the red (R) tone code are assigned to two high order bits of the data input terminals of the liquid crystal display driver 10c, and three bits of each of the green (G) and blue (B) tone codes are assigned to three low order bits of the data input terminals of the liquid crystal display driver 10c. However, the assignments may be freely changed as long as the bits of the red (R), the green (G), and the blue (B) are exclusively assigned. However, in this case, a circuit configured to input the fixed values to the data input terminals D16 and D17 to which the operation code output terminals of the microcomputer 9c are not connected needs to be provided.

In the present embodiment, the fixed value, that is, 1111b is assigned to four low order bits of the red (R) tone code, and 000b is assigned to two high order bits of each of the green (G) and blue (B) tone codes, so that the red (R), green (G), and blue (B) six-bit tone codes are completely exclusive. However, the fixed value assigned may be changed as long as the fixed values of the bits which are not assigned to any one of the red (R), the green (G), and the blue (B) in the six-bit tone code are different.

In the present embodiment, the color display data pieces input to the liquid crystal display driver 10c constitute the six-bit tone code. However, the liquid crystal display driver which can deal with the tone code of six or more bits, such as the liquid crystal display driver capable of displaying 16,777,216 colors by the eight-bit tone code, may be used.

### Embodiment 4

Next, the image display device according to Embodiment 4 of the present invention for performing color display will be explained.

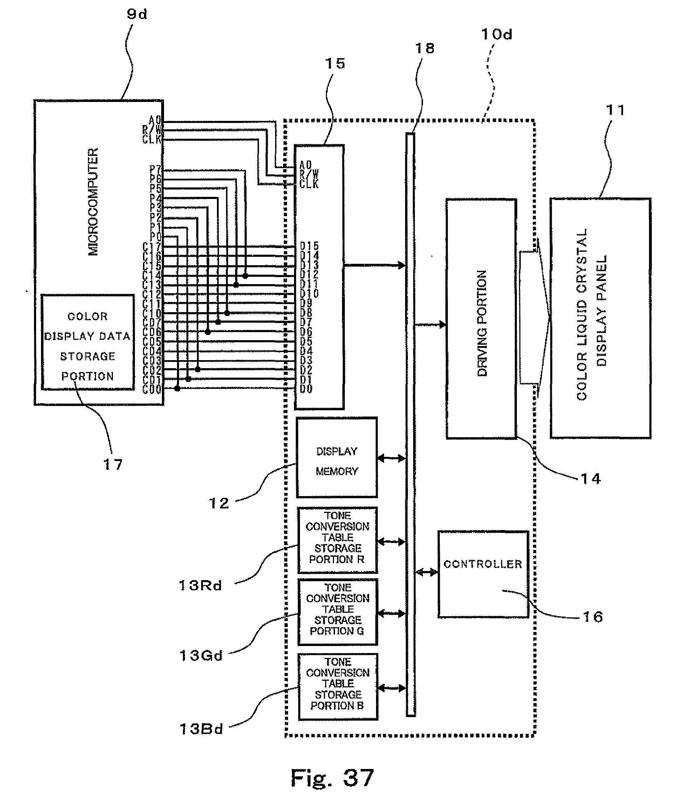

Fig. 37 is a schematic circuit diagram showing the image display device in Embodiment 4 of the present invention for performing color display. In the present embodiment, the same reference signs are used for the same components as in Embodiment 1, and explanations thereof are omitted.

The present embodiment is different from Embodiment 1 in that: a liquid crystal display driver 10d includes a plurality of tone conversion table storage portions 13Rd, 13Gd, and 13Bd and the controller 16, the tone conversion table storage portions 13Rd, 13Gd, and 13Bd being configured to store a plurality of tone conversion tables configured to convert the tone codes into the tone output values corresponding to the tone display of the color liquid crystal display panel 11 and correspond to three colors that are the red (R), the green (G), and the blue (B), the controller 16 being configured to set the plurality of tone conversion tables in accordance with the operation codes input through the plurality of data input terminals, read out the tone codes stored in the display memory, convert the tone codes into the tone output values by using the tone conversion table corresponding to the color of the read data pieces, and drive the color liquid crystal display panel such that the color liquid crystal display panel performs display by the tones corresponding to the tone output values; among eight color display data output terminals P0 to P7 of a microcomputer 9d, the color display data output terminals P6 and P7 through which two bits for the red (R) tone code are output are respectively connected to the data input terminals D11 and D12 corresponding to two low order bits of the red (R) five-bit tone code corresponding to the data input terminals D11 to D15 among the data input terminals D0 to D15 of the liquid crystal display driver 10, and in addition, the operation code output terminals C13 and C14 are respectively connected to the data input terminals D11 and D12; the color display data output terminals P3 to P5 through which three bits for the green (G) tone code are output are respectively connected to the data input terminals D6 to D8 corresponding to three low order bits of the green (G) five-bit tone code corresponding to the data input terminals D6 to D10 among the data input terminals D0 to D15 of the liquid crystal display driver 10d, and in addition, the operation code output terminals C06, C07, and C10 are respectively connected to the data input terminals D6 to D8; and the color display data output terminals P0 to P2 through which three bits for the blue (B) tone code are output are respectively connected to the data input terminals D0 to D2 corresponding to three low order bits of the blue (B) five-bit tone code corresponding to the data input terminals D0 to D4 among the data input terminals D0 to D15 of the liquid crystal display driver 10d, and in addition, the operation code output terminals C00 to C02 are respectively connected to the data input terminals D0 to D2.

Correspondingly, the tone code data pieces retrieved in the display memory 12 of the liquid crystal display driver 10d and the setting of the tone conversion tables stored in the tone conversion table storage portions 13Rd, 13Gd, and 13Bd for converting the tone code data pieces into the tone output values are different between the present embodiment and Embodiment 1.

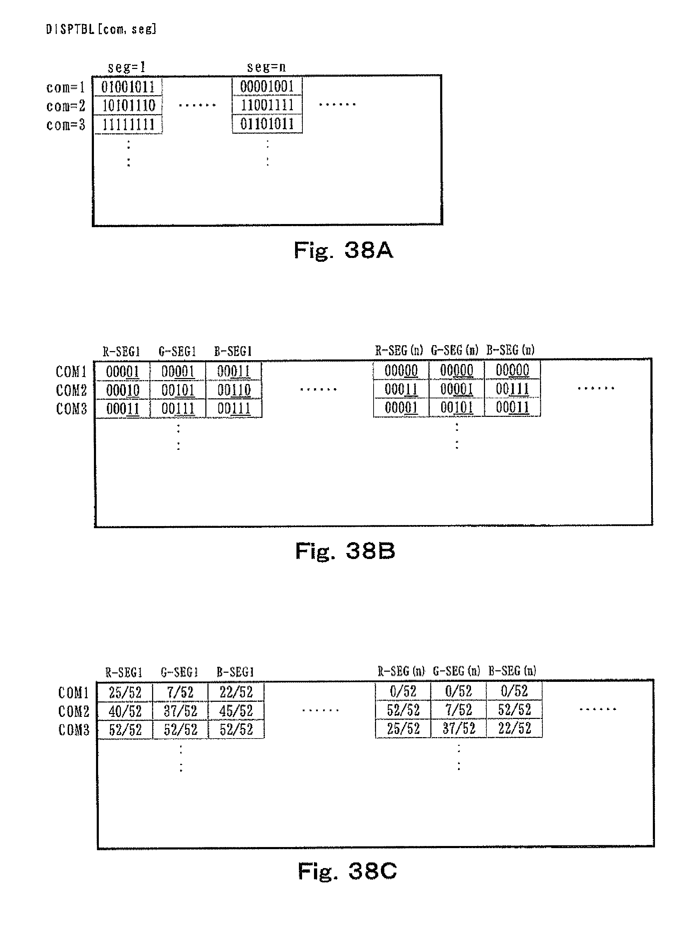

Fig. 38A is a diagram showing the display data row stored in the color display data storage portion 17 of the microcomputer 9d of the image display device shown in Fig. 37. Fig. 38B is a diagram showing the display data row stored in the display memory 12 of the liquid crystal display driver 10d of the image display device shown in Fig. 37. Fig. 38C is a diagram showing an example of the tone output values for driving the color liquid crystal display panel 11 shown in Fig. 37.

The tone code data pieces retrieved in the display memory 12 of the liquid crystal display driver 10d will be explained in reference to Figs. 38A to 38C.

As shown in Fig. 37, the color display data output terminals P6 and P7 through which two bits for the red (R) tone code are output are respectively connected to the data input terminals D11 and D12 corresponding to two low order bits of the red (R) five-bit tone code corresponding to the data input terminals D11 to D15. Moreover, the color display data output terminals P3 to P5 through which three bits for the green (G) tone code are output are respectively connected to the data input terminals D6 to D8 corresponding to three low order bits of the green (G) five-bit tone code corresponding to the data input terminals D6 to D10. Further, the color display data output terminals P0 to P2 through which three bits for the blue (B) tone code are output are respectively connected to the data input terminals D0 to D2 corresponding to three low order bits of the blue (B) tone code corresponding to the data input terminals D0 to D5. Therefore, as shown in Fig. 38B, in the display memory 12 of the liquid crystal display driver 10d, the red (R) tone code is stored as the five-bit tone code in which 0 is assigned to each of three high order bits, and each of the green (G) and blue (B) tone codes is stored as the five-bit tone code in which 0 is assigned to each of two high order bits.

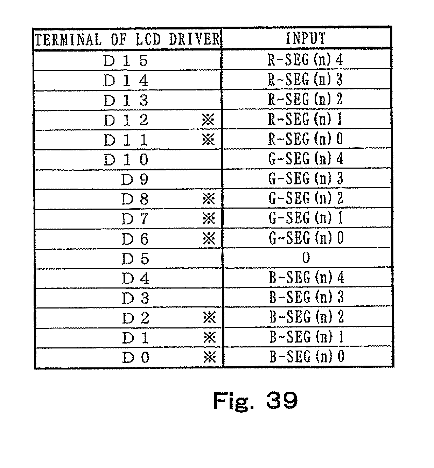

Fig. 39 is a diagram showing an example of the assignments of the data input terminals of the liquid crystal display driver 10d of the image display device shown in Fig. 37. The assignments of the data input terminals herein are the same as those of Fig. 22 of Embodiment 1. However, the positions of * indicating the terminals to which the red (R), green (G), and blue (B) tone codes are input are changed, that is, two bits for the red (R) tone code are input to the terminals corresponding to two low order bits of the five-bit tone code, and three bits for each of the green (G) and blue (B) tone codes are input to the terminals corresponding to three low order bits of the five-bit tone code.

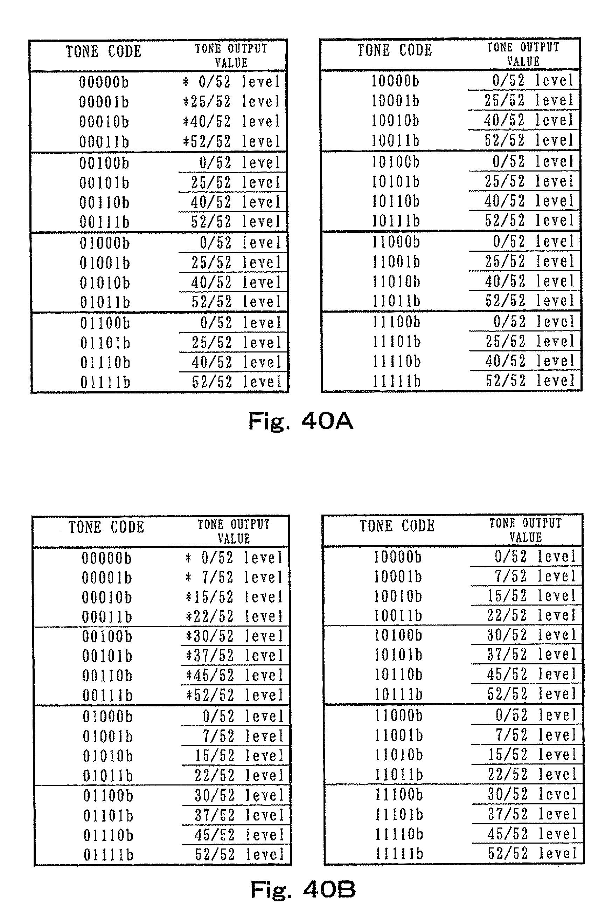

Figs. 40A and 40B are diagrams each showing one setting example of the tone conversion table stored in the tone conversion table storage portion 13Rd, 13Gd, or 13Bd of the liquid crystal display driver 10d of image display device shown in Fig. 37.

The red (R) two-bit tone code realizes four tones, and each of the green (G) and blue (B) three-bit tone codes realizes eight tones, so that 256 colors can be displayed.

Fig. 40A shows the red (R) tone codes stored in the tone conversion table storage portion 13Rd. The codes in each of which 000b is attached to three high order bits, that is, the codes to each of which "*" is attached are actually input. Regarding the other tone codes, the tone output value corresponding to two low order bits of each tone code is set by ignoring three high order bits. Since the tone codes to each of which "*" is not attached are not normally input, the other tone output value may be set to such tone codes.

Fig. 40B shows the green (G) tone codes stored in the tone conversion table storage portions 13Gd or the blue (B) tone codes stored in the tone conversion table storage portions 13Bd. The codes in each of which 00b is attached to two high order bits, that is, the codes to each of which "*" is attached are actually input. Regarding the other tone codes, the tone output value corresponding to three low order bits of each tone code is set by ignoring two high order bits. Since the tone codes to each of which "*" is not attached are not normally input, the other tone output value may be set to such tone codes.

According to need, the green (G) tone output values in the tone conversion table storage portion 13Gd and the blue (B) tone output values in the tone conversion table storage portion 13Bd may be set separately.

Each of all the fixed values output through the operation code output terminals C03 to C05, C11 to C15, and C15 to C17 of the microcomputer 9d may be 0 or may be 1, or both 0 and 1 may be output.

In the present embodiment, in the microcomputer 9d, two high order bits in one byte are assigned to the red (R), the next three bits are assigned to the green (G), and the three low order bits are assigned to the blue (B). However, the order of the assignments may be changed in accordance with, for example, original material image data pieces for creating a screen image. However, since one byte of the color display data pieces is directly output through the color display data output terminals P0 to P7 to efficiently perform output processing, the connections to the data input terminals of the liquid crystal display driver need to be changed in accordance with the changed bit assignments.

The following will explain a procedure in which the microcomputer 9d transmits the display data pieces stored in the display image data area of the color display data storage portion 17 in the image display device of the present embodiment.

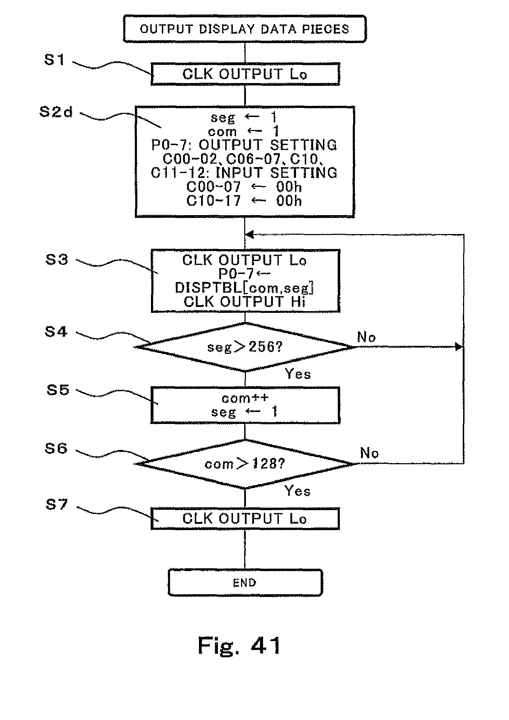

Fig. 41 is a flow chart showing the display data piece output processing in the image display device shown in Fig. 37. Fig. 41 is basically the same as the flow chart of Fig. 25, so that the same numbers are used for the same steps, and explanations thereof are omitted.

Unlike Embodiment 1, the operation code output terminals connected to both the data input terminals of the liquid crystal display driver 10d and the color display data output terminals P0 to P7 of the microcomputer 9d are the operation code output terminals C00 to 02, C06 to 07, C10, and C11 to 12. Therefore, the operation code output terminals which are set to the input state in Step S2d are the operation code output terminals C00 to 02, C06 to 07, C10, and C11 to 12.

As above, in the present embodiment, to the plurality of data input terminals D0 to D15 of the liquid crystal display driver 10d, two bits of the red (R) color display data pieces, three bits of the green (G) color display data pieces, and three bits of the blue (B) color display data pieces are transmitted through the display data output terminals P0 to P7 of the microcomputer 9d, and the predetermined fixed values are transmitted through the plurality of operation code output terminals C03 to C05, C11, C12, and C15 to C17 to which the display data output terminals P0 to P7 of the microcomputer 9d are not commonly connected. Then, the liquid crystal display driver 10d which has received the color display data pieces and the predetermined fixed values allocates the color display data pieces, output through the color display data output terminals P0 to P7, to two bits of the red (R), three bits of the green (G), and three bits of the blue (B) and allocates the fixed values to the other bits. With this, the five-bit tone code which can be processed by the liquid crystal display driver 10d can be easily created in a short period of time. Therefore, without providing any special circuit configured to perform the bit extension, the bit extension processing can be quickly performed to perform color display corresponding to eight bits (one byte) of the color display data pieces by using the general-purpose liquid crystal display driver 10d configured to operate based on the color display data pieces of (5 × 3) bits. Since the microcomputer 9d does not have to perform any special processing, such as the bit extension processing, the processing can be adequately quickly performed by a conventional microcomputer used in a remote controller or operating portion of an apparatus and configured to perform mode switching processing, buzzer generating processing, voice processing, communication processing, and the like.

Although 5 × 3 bits of the color display data pieces are normally required per dot, eight bits of the color display data pieces are enough herein. The display data row stored in the display memory 12 of the liquid crystal display driver 10d is 128 × 256 × 5 × 3 bits. Since the image data area which needs to process a large amount of data pieces is generally configured in units of eight bits, the capacity of the color display data storage portion 17 of the microcomputer 9d is normally 128 × 256 × 8 × 3 bits (128 × 256× 3 bytes), the capacity being required to correspond to the liquid crystal display driver 10d. However, in the present embodiment, since the amount of data pieces is just 1/3, that is, 128 × 256 × 8 bits (128 × 256 bytes), a more inexpensive microcomputer can be utilized.

The tone conversion table storage portions 13Rd, 13Gd, and 13Bd of the liquid crystal display driver 10d are provided for respective three colors that are the red (R), the green (G), and the blue (B). Therefore, the tone output values of the tone conversion table for at least one color, the number of tones of which is small, can be independently optimized, and the entire color balance can be efficiently optimized in accordance with usages and color properties of display devices.

The foregoing has explained the embodiments of the present invention configured to perform color display. However, the present invention is not limited to the above embodiments. Various improvements, changes, and modifications may be made within the spirit of the present invention. For example, respective components in the above plurality of embodiments may be arbitrarily combined with one another.

In Embodiments 1, 2, and 3, the red (R) is assigned to the tones of two bits. However, depending on usages, for example, in the case of finely displaying warm colors, the blue (B) may be assigned to the tones of two bits, and each of the red (R) and the green (G) may be assigned to the tones of three bits.

In Embodiments 1, 2, and 3, regarding the tone code, a small value is set as dark, and a large value is set as bright. However, in contrast, the small value may be set as bright, the large value may be set as dark, and these may be inverted by the tone conversion table. Moreover, these may be inverted by the property (negative) of the color liquid crystal display panel.

In Embodiments 1, 2, and 3, the transmission of the display data row is started from the low order byte. However, Embodiments 1, 2, and 3 are not limited to this, and the transmission of the display data row may be started from the high order byte by changing the setting of the liquid crystal display driver 10.

Each of the above embodiments has been explained by using the liquid crystal display device as the image display device. However, the above embodiments are not limited to this. The image display device may be a device configured to display images by transmitting the display data pieces to a plurality of display dots. The image display device may be, for example, a display device using organic EL, a fluorescent display tube, or the like.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention.

### Industrial Applicability

The image display device of the present invention configured to perform display based on the binary tone output values is useful to, without providing any special circuit configured to perform the bit extension, quickly perform the bit extension processing to perform two-tone display corresponding to the binary display data pieces by using the general-purpose liquid crystal display driver configured to operate based on the display data pieces each containing tones corresponding to plural bits.

The image display device of the present invention configured to perform display based on the multiple-tone output values that are the three-tone output values or more is useful to, without providing any special circuit configured to perform the bit extension, quickly perform the bit extension processing to perform low-tone gray scale display corresponding to the display data pieces of the tones smaller in number than the tones with which the liquid crystal display driver can deal and the tones corresponding to two bits or more, by using the general-purpose liquid crystal display driver configured to operate based on the display data pieces each containing tones corresponding to plural bits.

The image display device of the present invention configured to perform color display is useful to, without providing any special circuit configured to perform the bit extension, quickly perform the bit extension processing to perform display corresponding to the color display data pieces of the tones smaller than the tones with which the liquid crystal display driver can deal, by using the general-purpose liquid crystal display driver configured to operate based on the display data pieces each containing tones corresponding to plural bits.

### Reference Signs List

- 9, 9b, 9c, 9d: microcomputer
- 10, 10b, 10c, 10d: liquid crystal display driver (image display driver)
- 11 I: liquid crystal display panel (image display panel)
- 12: display memory
- 13, 13Rd, 13Gd, 13Bd: tone conversion table storage portion
- 14: driving portion
- 15, 15b, 15c: interface
- 16: controller
- 17: display data storage portion
- C00 to C07, C10 to C17, C0 to C7: operation code output terminal
- D0 to D17: data input terminal
- P0 to P7: output terminal

## Claims

1. An image display device comprising:
an image display panel in which display dots are arranged in a matrix;
an image display driver configured to cause the image display panel to perform display; and
a microcomputer configured to control the image display driver, wherein:
the image display driver includes
a plurality of data input terminals,
a display memory configured to store, as tone display data pieces, tone codes respectively corresponding to the display dots of the image display panel and each containing predetermined two or more bits,
a tone conversion table storage portion configured to store a tone conversion table configured to convert the tone codes into tone output values corresponding to tone display of the image display panel, and
a controller configured to set the tone conversion table in accordance with operation codes input through the plurality of data input terminals, read out the tone codes stored in the display memory, convert the tone codes into the tone output values by using the tone conversion table, and causes the image display panel to perform the display by tones corresponding to the tone output values;
the microcomputer includes
a plurality of operation code output terminals respectively connected to the plurality of data input terminals of the image display driver and capable of being switched to an output state or a high impedance state,
at least one display data output terminal provided separately from the operation code output terminals, respectively connected to at least one of the plurality of data input terminals, and capable of being switched to the output state or the high impedance state, and
a display data storage portion including a display image data area configured to create and store display data pieces corresponding to the display dots of the image display panel;
when outputting the operation codes to the image display driver, the display data output terminal is set to the high impedance state, and then the operation codes are output through the plurality of operation code output terminals, and when outputting the display data pieces to the image display driver, the operation code output terminal whose corresponding data input terminal is commonly connected to the at least one display data output terminal among the plurality of operation code output terminals is set to the high impedance state, the display data pieces are then sequentially output in units of predetermined bits through the at least one display data output terminal, and predetermined fixed values are output through the operation code output terminals which are not commonly connected to the at least one display data output terminal among the plurality of operation code output terminals;
the controller is configured to combine the display data pieces output through the at least one display data output terminal with the fixed values output through the operation code output terminals which are not commonly connected to the at least one display data output terminal, to store in the display memory the combined data piece as the tone code containing the predetermined two or more bits; and
the controller is configured to set the tone conversion table such that the stored tone codes correspond to the tone output values.

2. The image display device according to claim 1, wherein:
the display data storage portion is configured as a binary display data storage portion including the display image data area configured to create and store binary display data pieces corresponding to the display dots of the image display panel and each indicating one of a first tone output value and a second tone output value different from the first tone output value; and
the tone conversion table is set such that: among the stored tone codes, the tone code containing the display data piece indicating the first tone output value corresponds to the first tone output value; and among the stored tone codes, the tone code containing the display data piece indicating the second tone output value corresponds to the second tone output value.

3. The image display device according to claim 2, wherein:
the plurality of data input terminals of the image display driver are 16 data input terminals;
each of the tone codes is configured as a five-bit code;
the plurality of operation code output terminals of the microcomputer are 16 operation code output terminals, the at least one display data output terminal of the microcomputer is three display data output terminals, and the microcomputer is configured to output the display data pieces in units of three bits through the three display data output terminals; and
the controller is configured to create the tone codes from three bits of the display data pieces transmitted through the three display data output terminals, the tone codes corresponding to three display dots and each being configured by one bit of the display data piece and four bits of the fixed values.

4. The image display device according to claim 1, wherein:
the plurality of data input terminals of the image display driver are eight data input terminals;
each of the tone codes is configured as a five-bit code;
the plurality of operation code output terminals of the microcomputer are eight operation code output terminals, the at least one display data output terminal of the microcomputer is two display data output terminals, and the microcomputer outputs the display data pieces in units of two bits through the two display data output terminals; and
the controller is configured to
create the tone codes from four bits of the display data pieces obtained by two consecutive transmissions of two bits of the display data pieces through the two display data output terminals, the tone codes corresponding to two display dots and each being configured by one bit of the display data piece and four bits of the fixed values, and
create the tone code corresponding to one display dot and configured by two bits of the display data pieces and three bits of the fixed values, the two bits of the display data pieces being transmitted different time through the display data output terminals.

5. The image display device according to claim 3, wherein:
the microcomputer includes eight output terminals including the display data output terminals;
among the eight output terminals, each of the output terminals other than the display data output terminals is in a non-connection state where no data piece is input; and
the microcomputer is configured to
allocate eight low order bits of the display data pieces of a display data row to the eight output terminals such that three low order bits of the display data pieces in the eight low order bits of the display data pieces are output through the display data output terminals, the display data row being configured by the plurality of display data pieces stored in the display image data area of the binary display data storage portion,
output the display data pieces, and
at the time of a next output, again allocate the display data pieces of the display data row except for the display data pieces, having been output through the display data output terminals, such that three low order bits of the display data pieces of the display data row are output through the display data output terminals.

6. The image display device according to claim 3, wherein:
the microcomputer includes eight output terminals including the display data output terminals;
among the eight output terminals, each of the output terminals other than the display data output terminals is in a non-connection state where no data piece is input; and
the microcomputer is configured to
allocate eight high order bits of the display data pieces of a display data row to the eight output terminals such that three high order bits of the display data pieces in the eight high order bits of the display data pieces are output through the display data output terminals, the display data row being configured by the plurality of display data pieces stored in the display image data area of the binary display data storage portion,
output the display data pieces, and
at the time of a next output, again allocate the display data pieces of the display data row except for the display data pieces, having been output through the display data output terminals, such that three high order bits of the display data pieces of the display data row are output through the display data output terminals.

7. The image display device according to claim 4, wherein:
the microcomputer includes eight output terminals including the display data output terminals;
among the eight output terminals, each of the output terminals other than the display data output terminals is in a non-connection state where no data piece is input; and
the microcomputer is configured to
at the time of a first output of two consecutive outputs, allocate eight low order bits of the display data pieces of a display data row to the eight output terminals such that two low order bits of the display data pieces in the eight low order bits of the display data pieces are output through the display data output terminals, the display data row being configured by the plurality of display data pieces stored in the display image data area of the binary display data storage portion,
output the display data pieces,
at the time of a second output, again allocate the display data pieces of the display data row except for a least significant display data piece of the display data pieces, having been output through the display data output terminals at the time of the first output, such that two low order bits of the display data pieces of the display data row are output through the display data output terminals,
output the display data pieces, and
at the time of a first output of next two consecutive outputs, again allocate the display data pieces of the display data row except for the display data pieces, having been output through the display data output terminals at the time of the previous output, such that two low order bits of the display data pieces of the display data row are output through the display data output terminals.

8. The image display device according to claim 4, wherein:
the microcomputer includes eight output terminals including the display data output terminals;
among the eight output terminals, each of the output terminals other than the display data output terminals is in a non-connection state where no data piece is input; and
the microcomputer is configured to
at the time of a first output of two consecutive outputs, allocate eight high order bits of the display data pieces of a display data row to the eight output terminals such that two high order bits of the display data pieces in the eight high order bits of the display data pieces are output through the display data output terminals, the display data row being configured by the plurality of display data pieces stored in the display image data area of the binary display data storage portion,
output the display data pieces,
at the time of a second output, again allocate the display data pieces of the display data row except for a most significant display data piece of the display data pieces, having been output through the display data output terminals at the time of the first output, such that two high order bits of the display data pieces of the display data row are output through the display data output terminals,
output the display data pieces, and
at the time of a first output of next two consecutive outputs, again allocate the display data pieces of the display data row except for the display data pieces, having been output through the display data output terminals at the time of the previous output, such that two high order bits of the display data pieces of the display data row are output through the display data output terminals.

9. The image display device according to claim 2, wherein in the tone conversion table, the first tone output value is set to a minimum value, and the second tone output value is set to a maximum value.

10. The image display device according to claim 3, wherein:
the microcomputer includes eight output terminals including the display data output terminals;
among the eight output terminals, each of the output terminals other than the display data output terminals is in a non-connection state where no data piece is input; and
the microcomputer is configured to
read out (3 × n) bytes of the display data pieces from a display data row configured by the plurality of display data pieces stored in the display image data area of the binary display data storage portion, and
sequentially output the read display data pieces through the display data output terminals while shifting the read display data pieces in units of three bits.

11. The image display device according to claim 2, wherein:
the microcomputer includes eight output terminals including the at least one display data output terminal and is configured to output the display data pieces in units of m bits through the at least one display data output terminal;
among the eight output terminals, each of the output terminals other than the at least one display data output terminal is in a non-connection state where no data piece is input; and
the microcomputer is configured to
read out the display data pieces from a display data row, the number of bits of the read display data pieces being an integral multiple of a least common multiple of m that is the number of bits output through the at least one display data output terminal and eight that is the number of bits output through the output terminals, the display data row being configured by the plurality of display data pieces stored in the display image data area of the binary display data storage portion, and
sequentially output the read display data pieces through the at least one display data output terminal while shifting the read display data pieces in units of m bits.

12. The image display device according to claim 1, wherein:
the display memory is configured to store, as the tone display data pieces, the tone codes respectively corresponding to the display dots of the image display panel and each containing predetermined three or more bits;
the at least one display data output terminal is at least two display data output terminals respectively connected to at least two of the plurality of data input terminals;
the display data storage portion is configured as a tone display data storage portion including the display image data area configured to create and store the tone display data pieces corresponding to the display dots of the image display panel, the number of bits of the tone display data piece being smaller than the number of bits of the tone code of the display memory and being at least two or more;
the controller combines the display data pieces output through the display data output terminals with the fixed values output through the operation code output terminals which are not commonly connected to the display data output terminals, to store in the display memory the combined data piece as the tone code containing the predetermined three or more bits; and
the tone conversion table is set such that the tone output values correspond to all the tone codes which are able to be stored in the display memory.

13. The image display device according to claim 12, wherein:
the plurality of data input terminals of the image display driver are 16 data input terminals;
each of the tone codes is configured as a five-bit code;
the plurality of operation code output terminals of the microcomputer are 16 operation code output terminals, the at least one display data output terminal of the microcomputer is (k × 3) display data output terminals, and the microcomputer is configured to output the display data pieces in units of three dots through the (k × 3) display data output terminals, the display data piece containing k bits corresponding to one dot, k being an arbitral integer smaller than five; and
the controller is configured to create the tone codes, corresponding to three display dots, from the (k × 3) bits of the display data pieces transmitted through the (k × 3) display data output terminals, the tone codes each being configured by k bits of the display data pieces corresponding to one dot and (5 - k) bits of the fixed values.

14. The image display device according to claim 12, wherein:
the plurality of data input terminals of the image display driver are eight data input terminals, and each of the tone codes is configured as a five-bit code;
the plurality of operation code output terminals of the microcomputer are eight operation code output terminals, the at least one display data output terminal of the microcomputer is (2 × 2) display data output terminals, and the microcomputer outputs the display data pieces in units of two dots through the (2 × 2) display data output terminals, the display data piece containing two bits corresponding to one dot; and
the controller is configured to, by using the display data pieces corresponding to three dots and obtained through the (2 × 2) display data output terminals by two consecutive transmissions in which the display data pieces corresponding to two dots are transmitted in a first transmission and the display data pieces corresponding to next two dots except for one lower order dot of the two dots transmitted in the first transmission are transmitted in a second transmission,
create the tone codes corresponding to two display dots from the display data pieces corresponding to two dots and transmitted at once in the first or second transmission, each of the tone codes being configured by two bits of the tone codes and three bits of the fixed values, and
create the tone code corresponding to one display dot from the display data piece corresponding to one dot and transmitted separately in the first and second transmissions, the tone code being configured by four bits of the display data pieces transmitted twice through the display data output terminals and one bit of the fixed value.

15. The image display device according to claim 13, wherein:
the microcomputer includes (m × 8) output terminals including the (k × 3) display data output terminals, (m × 8) being equal to or more than (k × 3) and a minimum number of an integral multiple of eight;
among the (m × 8) output terminals, each of the output terminals other than the (k × 3) display data output terminals is in a non-connection state where no data piece is input; and
the microcomputer is configured to
allocate (m × 8) low order bits of the display data pieces of a display data row to the (m × 8) output terminals such that (k × 3) low order bits of the display data pieces in the (m × 8) low order bits of the display data pieces are output through the display data output terminals, the display data row being configured by the plurality of display data pieces stored in the display image data area of the tone display data storage portion,
output the display data pieces, and
at the time of a next output, again allocate the display data pieces of the display data row except for the display data pieces, having been output through the display data output terminals, such that (k × 3) low order bits of the display data pieces of the display data row are output through the display data output terminals.

16. The image display device according to claim 13, wherein:
the microcomputer includes (m × 8) output terminals including the (k × 3) display data output terminals, (m × 8) being equal to or more than (k × 3) and a minimum number of an integral multiple of eight;
among the (m × 8) output terminals, each of the output terminals other than the (k × 3) display data output terminals is in a non-connection state where no data piece is input; and
the microcomputer is configured to
allocate (m × 8) high order bits of the display data pieces of a display data row to the (m × 8) output terminals such that (k × 3) high order bits of the display data pieces in the (m × 8) high order bits of the display data pieces are output through the display data output terminals, the display data row being configured by the plurality of display data pieces stored in the display image data area of the tone display data storage portion,
output the display data pieces, and
at the time of a next output, again allocate the display data pieces of the display data row except for the display data pieces, having been output through the display data output terminals, such that (k × 3) high order bits of the display data pieces of the display data row are output through the display data output terminals.

17. The image display device according to claim 14, wherein:
the microcomputer includes eight output terminals including the display data output terminals;
among the eight output terminals, each of the output terminals other than the display data output terminals is in a non-connection state where no data piece is input; and
the microcomputer is configured to
at the time of a first output of two consecutive outputs, allocate eight low order bits of the display data pieces of a display data row to the eight output terminals such that four low order bits of the display data pieces corresponding to two dots are output through the display data output terminals, the display data row being configured by the plurality of display data pieces stored in the display image data area of the tone display data storage portion,
output the display data pieces,
at the time of a second output, again allocate the display data pieces of the display data row except for two low order bits of the display data pieces corresponding to one dot in the display data pieces, having been output through the display data output terminals at the time of the first output, such that four low order bits of the display data pieces corresponding to two dots are output through the display data output terminals,
output the display data pieces, and
at the time of a first output of next two consecutive outputs, again allocate the display data pieces of the display data row except for the display data pieces, having been output through the display data output terminals at the time of the previous output, such that four low order bits of the display data pieces corresponding to two dots are output through the display data output terminals.

18. The image display device according to claim 14, wherein:
the microcomputer includes eight output terminals including the display data output terminals;
among the eight output terminals, each of the output terminals other than the display data output terminals is in a non-connection state where no data piece is input; and
the microcomputer is configured to
at the time of a first output of two consecutive outputs, allocate eight high order bits of the display data pieces of a display data row to the eight output terminals such that four high order bits of the display data pieces corresponding to two dots are output through the display data output terminals, the display data row being configured by the plurality of display data pieces stored in the display image data area of the tone display data storage portion,
output the display data pieces,
at the time of a second output, again allocate the display data pieces of the display data row except for two high order bits of the display data pieces corresponding to one dot in the display data pieces, having been output through the display data output terminals at the time of the first output, such that four high order bits of the display data pieces corresponding to two dots are output through the display data output terminals,
output the display data pieces, and
at the time of a first output of next two consecutive outputs, again allocate the display data pieces of the display data row except for the display data pieces, having been output through the display data output terminals at the time of the previous output, such that four high order bits of the display data pieces corresponding to two dots are output through the display data output terminals.

19. The image display device according to any one of claims 13, 15, and 16, wherein:
the microcomputer includes (m × 8) output terminals including the (k × 3) display data output terminals, (m × 8) being equal to or more than (k × 3) and a minimum number of an integral multiple of eight;
among the (m × 8) output terminals, each of the output terminals other than the (k × 3) display data output terminals is in a non-connection state where no data piece is input; and
the microcomputer is configured to
read out the display data pieces from a display data row, the number of bits of the read display data pieces being an integral multiple of a least common multiple of (m × 8) and (k × 3), the display data row being configured by the plurality of display data pieces stored in the display image data area of the tone display data storage portion, and
sequentially output the read display data pieces through the display data output terminals while shifting the read display data pieces in units of (k × 3) bits.

20. The image display device according to any one of claims 14, 17, and 18, wherein:
the microcomputer includes eight output terminals including the display data output terminals and is configured to output (2 × 3) bits of the display data pieces by two outputs through the display data output terminals and repeatedly perform such output;
among the eight output terminals, each of the output terminals other than the display data output terminals is in a non-connection state where no data piece is input; and
the microcomputer is configured to
read out the display data pieces from a display data row, the number of bits of the read display data pieces being an integral multiple of three, the display data row being configured by the plurality of display data pieces stored in the display image data area of the tone display data storage portion, and
sequentially output the read display data pieces through the display data output terminals in units of (2 × 3) bits.

21. The image display device according to any one of claims 12 to 20, wherein the tone conversion table is set such that: the tone output value of the tone code corresponding to a minimum code of the display data piece is set to a minimum value; the tone output value of the tone code corresponding to a maximum code of the display data piece is set to a maximum value; and the tone output value of the tone code corresponding to an intermediate code other than the minimum code and the maximum code is set such that the tones on the image display panel are visually uniformized.

22. The image display device according to claim 1, wherein:
the image display panel is configured as a color image display panel in which display dots of three colors that are red (R), green (G), and blue (B) are sequentially arranged in a matrix;
the plurality of data input terminals are configured as 15 or more data input terminals to which the operation codes each containing plural bits, five or more bits of red (R) color display data pieces, five or more bits of green (G) color display data pieces, and five or more bits of blue (B) color display data pieces are input;
the display memory is configured to store the color display data pieces respectively corresponding to the display dots of the color image display panel and configured by red (R), green (G), and blue (B) tone codes each containing five or more bits;
the at least one display data output terminal is configured as eight color display data output terminals arranged such that among the plurality of data input terminals that are five or more data input terminals for the red (R), five or more data input terminals for the green (G), and five or more data input terminals for the blue (B), two of the eight color display data output terminals are respectively connected to two of the data input terminals for one of the red (R), the green (G), and the blue (B), and three of the eight color display data output terminals are respectively connected to three of the data input terminals for each of the remaining two colors such that the data input terminals for the remaining two colors are bit-allocated exclusively with respect to the data input terminals for the above one of the red (R), the green (G), and the blue (B);
the display data storage portion is configured as a color display data storage portion including the display image data area configured to create and store color image data pieces to be displayed on the color image display panel, the color image data pieces corresponding to the display dots of three colors that are the red (R), the green (G), and the blue (B) of the color image display panel, the tone codes of the display dots of three colors that are the red (R), the green (G), and the blue (B) each being configured by one byte in which two bits are assigned to one of three colors that are the red (R), the green (G), and the blue (B) and three bits are assigned to the remaining two colors such that these bits correspond to the color display data output terminals;
the controller combines the color display data pieces output through the display data output terminals with the fixed values output through the operation code output terminals which are not commonly connected to the display data output terminals, to store in the display memory the display data pieces of three colors that are the red (R), the green (G), and the blue (B) as the tone codes each containing the predetermined five or more bits; and
in the tone conversion table, a tone definition area for one color configured by two bits and tone definition areas for two colors each configured by three bits are separately set with respect to the tone codes having been exclusively bit-allocated.

23. The image display device according to claim 22, wherein:
the data input terminals of the image display driver are 16 data input terminals;
the tone codes are configured as red (R), green (G), and blue (B) tone codes each containing five bits;
the plurality of operation code output terminals of the microcomputer are 16 operation code output terminals, the microcomputer includes the eight color display data output terminals, and the microcomputer is configured to output the display data pieces in units of one byte through the eight color display data output terminals in such a manner that two color display data output terminals corresponding to one color among the eight color display data output terminals are connected to data input terminals corresponding to two low order bits among the five data input terminals of the corresponding color of the image display driver, and three color display data output terminals corresponding to each of the remaining two colors among the eight color display data output terminals are connected to data input terminals corresponding to three high order bits among the five data input terminals of the corresponding color of the image display driver; and
the controller is configured to combine two or three-bit red (R) color display data pieces, two or three-bit green (G) color display data pieces, and two or three-bit blue (B) color display data pieces transmitted through the eight color display data output terminals with the fixed values output through the operation code output terminals to create red (R), green (G), and blue (B) tone codes each containing five bits.

24. The image display device according to claim 22, wherein:
the data input terminals of the image display driver are 16 data input terminals;
the tone codes are configured as red (R), green (G), and blue (B) tone codes each containing five bits;
the plurality of operation code output terminals of the microcomputer are 16 operation code output terminals, the microcomputer includes the eight color display data output terminals, and the microcomputer is configured to output the display data pieces in units of one byte through the eight color display data output terminals in such a manner that two color display data output terminals corresponding to one color among the eight color display data output terminals are connected to data input terminals corresponding to two high order bits among the five data input terminals of the corresponding color of the image display driver, and three color display data output terminals corresponding to each of the remaining two colors among the eight color display data output terminals are connected to data input terminals corresponding to three low order bits among the five data input terminals of the corresponding color of the image display driver; and
the controller is configured to combine two or three-bit red (R) color display data pieces, two or three-bit green (G) color display data pieces, and two or three-bit blue (B) color display data pieces transmitted through the eight color display data output terminals with the fixed values output through the operation code output terminals to create red (R), green (G), and blue (B) tone codes each containing five bits.

25. The image display device according to claim 22, wherein
the data input terminals of the image display driver are 18 or more data input terminals;
the tone codes are configured as red (R), green (G), and blue (B) tone codes each containing six or more bits;
the microcomputer includes the plurality of operation code output terminals and the eight color display data output terminals and is configured such that two color display data output terminals corresponding to one color among the eight color display data output terminals are connected to data input terminals corresponding to two bits among the data input terminals of the corresponding color of the image display driver, three color display data output terminals corresponding to each of the remaining two colors among the eight color display data output terminals are connected to data input terminals corresponding to three bits among the data input terminals of the corresponding color of the image display driver, the one color to which two bits are assigned and the two colors to each of which three bits are assigned are assigned to the data input terminals corresponding to six or more bits such that these bits do not overlap, and the fixed values which are set exclusively between the one color to which two bits are assigned and the two colors to each of which three bits are assigned are input to the data input terminals to which the color display data input terminals are not connected; and
the controller is configured to combine two or three-bit red (R) color display data pieces, two or three-bit green (G) color display data pieces, and two or three-bit blue (B) color display data pieces transmitted through the eight color display data output terminals with the fixed values output through the operation code output terminals to create red (R), green (G), and blue (B) tone codes each containing six or more bits.

26. The image display device according to claim 1, wherein:
the image display panel is configured as a color image display panel in which display dots of three colors that are red (R), green (G), and blue (B) are sequentially arranged in a matrix;
the plurality of data input terminals are configured as nine or more data input terminals to which the operation codes each containing plural bits, three or more bits of red (R) color display data pieces, three or more bits of green (G) color display data pieces, and three or more bits of blue (B) color display data pieces are input;
the display memory is configured to store the color display data pieces respectively corresponding to the display dots of the color image display panel and configured by red (R), green (G), and blue (B) tone codes each containing three or more bits;
the tone conversion table storage portion is configured to store a plurality of tone conversion tables corresponding to three colors that are the red (R), the green (G), and the blue (B) and configured to convert the tone codes into the tone output values corresponding to the tone display of the color image display panel;
the controller is configured to set the plurality of tone conversion tables in accordance with the operation codes input through the plurality of data input terminals, read out the tone codes stored in the display memory, convert the tone codes into the tone output values by using the tone conversion table corresponding to the color of the read data pieces, and drive the color image display panel such that the color image display panel performs display by the tones corresponding to the tone output values;
the at least one display data output terminal is configured as eight color display data output terminals arranged such that among the plurality of data input terminals that are three or more data input terminals for the red (R), three or more data input terminals for the green (G), and three or more data input terminals for the blue (B), two of the eight color display data output terminals are respectively connected to two of the data input terminals for one of the red (R), the green (G), and the blue (B), and three of the eight color display data output terminals are respectively connected to three of the data input terminals for each of the remaining two colors;
the display data storage portion is configured as a color display data storage portion including the display image data area configured to create and store color image data pieces to be displayed on the color image display panel, the color image data pieces corresponding to the display dots of three colors that are the red (R), the green (G), and the blue (B) of the color image display panel, the tone codes of the display dots of three colors that are the red (R), the green (G), and the blue (B) each being configured by one byte in which two bits are assigned to one of three colors that are the red (R), the green (G), and the blue (B) and three bits are assigned to the remaining two colors such that these bits correspond to the color display data output terminals;
the controller is configured to combine the color display data pieces output through the display data output terminals with the fixed values output through the operation code output terminals which are not commonly connected to the display data output terminals, to store in the display memory the display data pieces of three colors that are the red (R), the green (G), and the blue (B) as the tone codes each containing the predetermined three or more bits.

27. The image display device according to any one of claims 22 to 26, wherein:
three colors that are the red (R), the green (G), and the blue (B) are weighted based on a display screen image; and
one color weighted least is assigned to two-bit data pieces, and each of the other two colors is assigned to three-bit data pieces.
